# EUROPEAN PATENT APPLICATION

(11) **EP 3 886 328 A1**
(43) Date of publication of application: **29.09.2021**
(21) Application number: 18944479.7
(22) Date of filing: 24.12.2018
(51) Int. Cl.: H04B 5/00

(54) **WIRELESS SHORT-DISTANCE AUDIO SHARING METHOD AND ELECTRONIC DEVICE**

(71) Applicant: Huawei Technologies Co., Ltd., Shenzhen Guangdong 518129 (CN)
(72) Inventor: WANG, Liang, Shenzhen, Guangdong 518129 (CN); ZHU, Yuhong, Shenzhen, Guangdong 518129 (CN); CHEN, Zhichao, Shenzhen, Guangdong 518129 (CN); ZANG, Zhicong, Shenzhen, Guangdong 518129 (CN); LIN, Jianxin, Shenzhen, Guangdong 518129 (CN)
(74) Representative: Gill Jennings & Every LLP
(86) International application number: PCT/CN2018/123136
(87) International publication number: WO 2020/132818

(57) **Abstract**

Embodiments of this application disclose a wireless short-range audio sharing method. A wireless short-range communications connection does not need to be first established between an audio source and an audio sink before audio data is transmitted. Instead, audio is advertised from the audio source to the audio sink, to implement audio sharing. For example, the audio source first enables BLE audio advertising based on an operation of a user, then determines a first audio file based on an operation of the user or automatically determines a first audio file, converts the first audio file into at least one audio data packet, and performs BLE audio advertising and corresponding periodic advertising. After being triggered by the user, the audio sink scans a periodic advertisement, accesses a BLE audio advertisement corresponding to the received periodic advertisement, and then converts at least one audio data packet of the BLE audio advertisement into audio for playing.

## Description

### TECHNICAL FIELD

This application relates to the field of communications technologies, and in particular, to a wireless short-range audio sharing method and an electronic device.

### BACKGROUND

In recent years, with the development of wireless audio technologies, more and more speakers and headset-type audio devices use wireless technologies such as Bluetooth and wireless fidelity (wireless fidelity, Wi-Fi) to perform audio transmission. Restricted by the advanced audio distribution profile (advanced audio distribution profile, A2DP), a Bluetooth audio device can support only audio transmission from one audio source device to one audio sink device.

To support audio transmission from one audio source device to a plurality of audio sink devices, a Wi-Fi technology or a Bluetooth low energy (bluetooth low energy, BLE) technology may be used for implementation. Usually, not all audio devices are compatible in audio sharing implemented based on a Wi-Fi proprietary protocol. In addition, in an audio sharing solution based on the Wi-Fi technology and an audio sharing solution based on the BLE technology, wireless connections between the audio source device and the plurality of audio sink devices usually need to be established first based on operations of a user, and then one or more audio files are selected for sharing based on operations of the user. Operations in the foregoing audio sharing process are complex and are not convenient.

Therefore, how to conveniently implement audio sharing is an urgent problem to be resolved.

### SUMMARY

According to embodiments of this application, a wireless short-range audio sharing method and an electronic device are provided, to simplify an operation procedure of audio signal sharing and improve convenience of audio sharing.

According to a first aspect, an embodiment of this application provides a wireless short-range audio sharing method. The method is performed by a first audio device, and the method may include: detecting a first operation of a user; enabling a BLE advertising function in response to the first operation; detecting a second operation of the user; selecting a first audio file in response to the second operation; and converting the first audio file into at least one audio data packet, performing BLE advertising on the at least one audio data packet, and performing periodic advertising corresponding to the BLE advertising.

In the wireless short-range audio sharing method, the BLE advertising function is first enabled, and then media is selected, so that audio sharing can be performed. Therefore, the first audio device does not need to establish a communications connection to another device, and the another device may receive a BLE advertisement and extract audio data from the BLE advertisement to play audio. The audio data is unidirectionally transmitted by the first audio device to the another device, so that a user operation in a process of establishing a Bluetooth connection is omitted. This can simplify an operation procedure of sharing an audio signal from the first audio device, and improve convenience of the audio sharing. In a possible implementation, in a process of advertising the audio data packet corresponding to the first audio file, for example, when a music file is being advertised, if the first audio device needs to play a second audio file (for example, an SMS message prompt tone file needs to be played when a new SMS message is received, or a ringtone prompt tone file needs to be played when an incoming call is received in a mode in which a ringing prompt is allowed), the first audio device mixes the first audio file and the second audio file, decodes the first audio file and the second audio file and converts decoded files into the at least one audio data packet, performs BLE advertising on the at least one audio data packet, and performs periodic advertising corresponding to the BLE advertising.

In a possible implementation, if the first audio device completes the BLE advertising on the first audio file, the first audio device may obtain a next audio file of the first audio file in an audio file list, and continue to perform BLE audio advertising on the next audio file. For example, in a music APP, after the BLE audio advertising is completed on the first audio file, BLE advertising continues to be performed on the next audio file of the first audio file in a music list. In this implementation, after audio file sharing is completed, a next audio file is automatically selected for audio sharing. This reduces manual operations of the user and improves the convenience of the audio sharing.

In addition, if the first audio device completes the BLE advertising on the first audio file, the first audio device may stop sending a BLE advertisement.

In a possible implementation, the first audio device is a mobile phone. Before the detecting a first operation of a user, the method further includes displaying an interface of a settings application. The interface of the settings application includes a BLE advertising switch (namely, a BLE audio advertising switch), and the first operation is an operation of turning on the BLE advertising switch. After the enabling a BLE advertising function, the method further includes: receiving a third operation of the user, and displaying an interface of a media file playback application. The interface of the media file playback application includes a player control and an identifier of the first audio file, and the second operation is an operation of selecting the player control.

Before the displaying an interface of a settings application, the method further includes: displaying a home screen, where the home screen includes an application icon, and the application icon includes a settings icon; and when a tap operation of the user on the settings icon is detected, displaying the interface of the settings application.

In addition, the interface of the settings application may also be displayed in response to a touch and hold operation or another operation of the user on a BLE advertising icon (namely, a BLE audio advertising icon) in a drop-down menu.

In response to the operation of turning on the BLE advertising switch, a Bluetooth chip is enabled (for example, powered on), a software module related to the BLE advertising function on the Bluetooth chip starts to run, and the first audio device can perform BLE advertising. In this implementation, the BLE advertising switch is added to the settings interface, so that the user can enable the BLE advertising function in the settings application.

In a possible implementation, enabling or disabling of the Bluetooth chip is controlled by another switch, for example, in response to a tap on or a sliding power-on or power-off of a Bluetooth switch by the user. In response to the operation of turning on the BLE advertising switch, the software module related to the BLE advertising function on the Bluetooth chip starts to run, and the first audio device can perform BLE advertising.

In a possible implementation, the first audio device is a mobile phone. Before the detecting a first operation of a user, the method further includes: receiving a pull-down operation or a pull-up operation, and displaying an interface of a status bar. The interface of the status bar includes a BLE advertising switch, and the first operation is an operation of turning on the BLE advertising switch. After the enabling a BLE advertising function, the wireless short-range audio sharing method further includes: receiving a third operation of the user, and displaying an interface of a media file playback application. The interface of the media file playback application includes a player control and an identifier of the first audio file, and the second operation is an operation of selecting the player control.

The interface of the media file playback application is an audio playback interface c in the description of embodiments. The identifier of the first audio file may be a name that is of the audio file and that is displayed in the interface of the media file playback application, for example, a song name "yesterday once more". The third operation includes a tap operation of the user on a player in an application icon on the home screen. The third operation further includes a tap operation of the user on a notification message of the player in the drop-down menu.

In this embodiment of this application, after the first audio file is selected, the wireless short-range audio sharing method further includes: The first audio device converts the first audio file into a PCM file. The converting the first audio file into at least one audio data packet includes: segmenting the PCM file and carrying the PCM file in at least one BIS data packet. In this implementation, the BLE advertising switch is added to the interface of the status bar, so that the user can enable the BLE advertising function in the status bar.

In a possible implementation, the wireless short-range audio sharing method further includes: selecting a second audio file; and processing the first audio file and the second audio file, including performing audio mixing and converting the first audio file and the second audio file into the PCM file. The converting the first audio file into at least one audio data packet includes converting the PCM file obtained through audio mixing and conversion into the at least one audio data packet.

In a possible implementation, after that the first audio device converts the first audio file into a PCM file, the wireless short-range audio sharing method further includes: detecting whether the BLE advertising function is enabled; when it is detected that the BLE advertising function is enabled, converting the first audio file into the at least one audio data packet to perform BLE advertising; when it is detected that the BLE advertising function is not enabled, performing playing based on the PCM file by using a speaker of the first audio device or a headset that has established a connection to the first audio device; if it is detected that the BLE advertising function is not enabled, detecting, based on the current technology, whether a headset such as a wired headset or a Bluetooth headset is connected; if the wired headset is connected through a data line or the Bluetooth headset is connected through Bluetooth, playing audio based on the current technology by using the connected headset; and if no headset is connected, performing the playing based on the PCM file by using the speaker of the first audio device. In this implementation, the first audio device determines, by detecting whether the BLE advertising function is enabled, that the user wants to share the audio or play the audio.

In a possible implementation, after performing periodic advertising corresponding to the BLE advertising, the wireless short-range audio sharing method further includes: A first audio device 100 may display, on a notification bar or a leftmost screen, a prompt indicating that the audio is being advertised. The prompt may also be displayed on a pull-up menu, a side menu, a floating menu, a home screen, or a lock screen of the first audio device. In this implementation, the prompt indicating that the audio is being advertised is displayed, so that the user can view an audio file that is being advertised in a BLE manner and an audio file that is being advertised.

In a possible implementation, when the audio file is played based on the PCM file by using the speaker of the first audio device or by using the headset that has established a connection to the first audio device, if the BLE advertising function is not enabled, the first audio device enables the BLE advertising function in response to a tap operation of a BLE advertising switch 101, to obtain a position of currently played audio data of a currently played audio file. Starting from the position of the currently played audio data of the currently played audio file, data is packaged into a BLE advertisement for sending. In this implementation, BLE advertising is performed from the position of the currently played audio data. This is more suitable for a listening habit of the user, and improves convenience of audio sharing.

After the BLE advertising function is enabled, the first audio device may continue playing by using the speaker of the first audio device or the headset that has established a connection to the first audio device, or may pause playing, and resume playing from the foregoing paused position after the BLE advertising function is stopped. However, the first audio device still displays a music playback progress, and may use a BLE advertising progress as the playback progress. In this implementation, when BLE advertising is performed, the BLE advertising progress is still displayed through the first audio device, so that the user can view the BLE advertising progress.

In a possible implementation, after the detecting a second operation of the user, the wireless short-range audio sharing method further includes: playing, in response to the second operation, the first audio file by using the microphone of the first audio device or the headset connected to the first audio device. In this implementation, when the audio file is shared with another device, playing of the audio file is not affected, and it is convenient for a plurality of devices to share audio.

In a possible implementation, the BLE advertising switch (namely, the BLE audio advertising switch) 101 is in an on state, and the first audio device 100 disables the BLE advertising function in response to the tap operation of the user on the BLE advertising switch 101, that is, stops carrying the PCM file in a BLE advertisement. If another device such as the second audio device is receiving the BLE advertisement, the another device cannot receive the BLE advertisement in response to the stopping of BLE advertising on the first audio device, and therefore stops playing the audio. In this implementation, when performing BLE advertising, the user may find the BLE advertising switch from any one of the pull-up menu, a pull-down menu, the side menu, the floating menu, or the settings interface of the first audio device, and stop BLE advertising, thereby improving convenience of an audio sharing operation.

In a possible implementation, the player control is in a playing state, and the first audio device stops performing BLE advertising in response to a tap operation of the user on the player control. If another device such as the second audio device is receiving a BLE advertisement, the another device cannot receive a first BLE advertisement in response to the stopping of BLE advertising on the first audio device, and therefore stops playing the audio. In this implementation, when performing BLE advertising, the user may further find the player control from the interface of the media file playback application of the first audio device, and stop BLE advertising, thereby improving the convenience of the audio sharing operation.

In this embodiment of this application, when the first audio device performs BLE advertising, a plurality of devices such as the second audio device and a third audio device may receive the BLE advertisement and convert the BLE advertisement into audio for playing. The second audio device and the third audio device synchronously receive the BLE advertisement based on the periodic advertisement sent by the first audio device, and play the audio, so as to implement synchronous audio playback. In this implementation, a plurality of devices synchronously play audio, thereby improving a real-time sharing effect of the audio sharing.

In a possible implementation, the first audio device is a mobile phone. Before the detecting a first operation of a user, the wireless short-range audio sharing method further includes: displaying an interface of an audio sharing application. The interface of the audio sharing application includes a BLE advertising switch and an audio file list control, and the first operation is an operation of turning on the BLE advertising switch. After the enabling a BLE advertising function, the method further includes: receiving an operation of selecting the audio file list control, and displaying an identifier of at least one audio file. The at least one audio file includes the first audio file, and the second operation is selecting an identifier of the first audio file. In this implementation, the audio sharing application includes the BLE advertising switch and a control used to select the first audio file, so that the user can enable the BLE advertising function in the audio sharing application, and select an audio file, thereby improving convenience of audio sharing.

In a possible implementation, before the displaying an interface of an audio sharing application, the wireless short-range audio sharing method further includes displaying a home screen. The first audio device detects a tap operation of the user on a music sharing icon on the home screen. The first audio device 100 displays the interface of the audio sharing application in response to the tap operation of the user on the music sharing icon.

In a possible implementation, the receiving an operation of selecting the audio file list control, and displaying an identifier of at least one audio file includes: receiving the operation of selecting the music list control, the first audio device 100 displays an application interface h, and the application interface h displays the identifier of the at least one audio file and a player control corresponding to the identifier of each audio file. The second operation is selecting a player control corresponding to the first audio file. In this implementation, a function of selecting an audio file that needs to be advertised is implemented by using an existing player control, thereby facilitating an operation of the user.

In a possible implementation, after the BLE advertising is performed on the at least one audio data packet, the interface of the audio sharing application displays a prompt indicating that audio sharing is being performed. The prompt is, for example, sharing music: yesterday once more. The interface of the audio sharing application further displays a prompt of a device identifier, for example, My device MATE 20 PRO. In this implementation, a prompt indicating that audio is being advertised is displayed, so as to prompt the user of an audio file that is being advertised in a BLE manner. The prompt of the device identifier is displayed so that the user can view the device identifier and enable another device to correctly access the BLE advertisement, thereby improving the convenience of the audio sharing.

In a possible implementation, the converting the first audio file into at least one audio data packet includes: converting the first audio file from the beginning into the at least one audio data packet.

In a possible implementation, the converting the first audio file into at least one audio data packet includes: converting a part that is of the first audio file and that starts from a position at which playing of the first audio file is stopped last time into the at least one audio data packet.

The player control includes a first player control and a second player control, the first player control corresponds to a player control 102 in the description of embodiments, and when the second operation is an operation of selecting the first player control, the first audio file is converted, from the beginning, into the at least one audio data packet. The second player control corresponds to the player control 2011 in the description of embodiments, and when the second operation is an operation of selecting the second player control, the first audio file is converted, from a progress displayed by a current playback progress control, into the at least one audio data packet. In this implementation, controls for performing BLE advertising from different progress positions are provided for the user, thereby improving the convenience of the audio sharing.

According to a second aspect, an embodiment of this application provides a wireless short-range audio sharing method. The method is performed by a first audio device. In this embodiment, a BLE advertising function is enabled in a process of playing audio, to share audio that is being played. The method includes: displaying an interface of a media file playback application, where the interface of the media file playback application includes a player control and an identifier of a first audio file; playing the first audio file in response to an operation of playing the first audio file; and when the first audio file is played to a first position, detecting a first operation of a user, enabling the BLE advertising function in response to the first operation, converting a part that is of the first audio file and that starts from a second position into at least one audio data packet, performing BLE advertising on the at least one audio data packet, and performing periodic advertising corresponding to the BLE advertising.

In the foregoing wireless short-range audio sharing method, the first audio device may perform BLE advertising to send audio data. Therefore, the first audio device does not need to establish a communications connection to another device, and the another device may receive the BLE advertisement and extract audio data from the BLE advertisement to play audio. The audio data is unidirectionally transmitted by the first audio device to at least one another device, so that a user operation in a process of establishing a Bluetooth connection is omitted. This can simplify an operation procedure of sharing an audio signal from the first audio device, and improve convenience of the audio sharing.

In a possible implementation, the first audio device is a mobile phone. The playing the first audio file includes: playing the first audio file by using a microphone of the first audio device or a headset connected to the first audio device. The method further includes: continuing playing, in response to the first operation, the first audio file by using the microphone of the first audio device or the headset connected to the first audio device. In this implementation, when the audio file is shared with another device, playing of the audio file is not affected, and it is convenient for a plurality of devices to share audio. Alternatively, the method further includes: stopping playing, in response to the first operation, the first audio file by using the microphone of the first audio device or the headset connected to the first audio device.

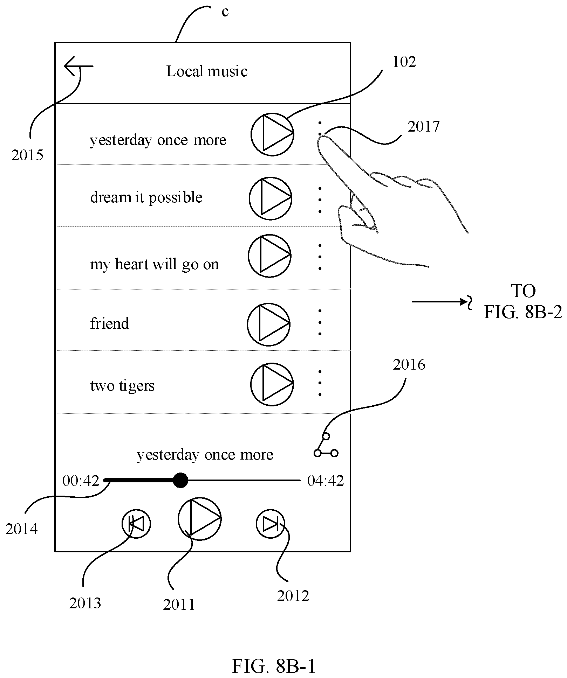

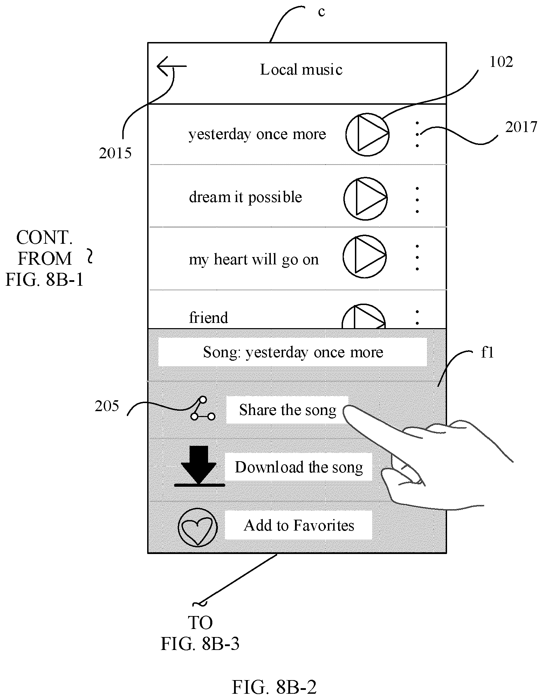

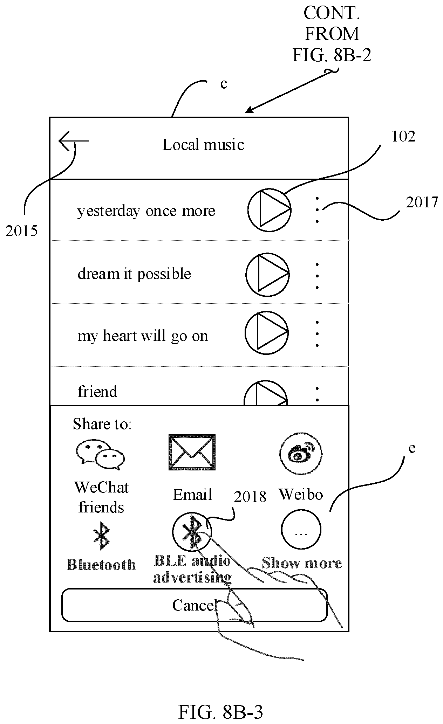

In a possible implementation, the interface of the media file playback application includes a first button, and the first button may be a sharing control 2016 in the accompanying drawing shown in FIG. 8B-1. The wireless short-range audio sharing method further includes: displaying at least one option in response to an operation of selecting the first button, where the at least one option includes a BLE advertising switch, the first operation is an operation of turning on the BLE advertising switch, and the second position is the same as the first position.

Specifically, before detecting the user operation of turning on the BLE advertising switch, the first audio device detects a tap operation on the sharing control 2016 (namely, the first button) of the first audio file in the interface of the media file playback application. The first audio device displays a sharing interface in response to the tap operation of the user on the sharing control. The sharing interface includes a BLE advertising identifier. The first audio device detects a tap operation on the BLE advertising identifier on the sharing interface. The first audio device displays a prompt interface f2 in response to the tap operation of the user on the BLE advertising identifier. The prompt interface f2 includes a determining control. The first audio device displays an interface of a settings application in response to a tap operation of the user on the determining control. At least one option is displayed in the interface of the settings application, and the at least one option includes the BLE advertising switch. In this implementation, the BLE advertising identifier is added to the sharing interface, so that the user can enable the BLE advertising function or perform BLE audio advertising in the sharing interface.

In a possible implementation, the interface of the media file playback application includes a second button, the second operation is an operation of selecting the second button, and the second position is a start position of the first audio file. The first button may include a sharing control 205 in the accompanying drawing shown in FIG. 8B-2.

Specifically, before detecting the operation of turning on the BLE advertising switch, the first audio device detects a tap operation on a player control 2017 of the first audio file in the interface of the media file playback application, and displays an interface f1 in response to the tap operation of the user on the player control 2017. The interface f1 includes the sharing control 205. Then, the first audio device detects a tap operation on the sharing control 205 (namely, the second button) in the interface f1. The first audio device displays a sharing interface in response to the tap operation of the user on the sharing control. The sharing interface includes a BLE advertising identifier. The first audio device detects a tap operation on the BLE advertising identifier in the sharing interface. The first audio device displays a prompt interface f2 in response to the tap operation of the user on the BLE advertising identifier. The prompt interface f2 includes a determining control. The first audio device displays an interface of a settings application in response to a tap operation of the user on the determining control. At least one option is displayed in the interface of the settings application, and the at least one option includes the BLE advertising switch. In this implementation, the first button and the second button provide the user with controls for performing BLE advertising from different progress positions, thereby improving convenience of audio sharing.

In a possible implementation, after sending the at least one audio data packet in a BLE advertising manner, the wireless short-range audio sharing method further includes: when a data packet sent in the BLE advertising manner is corresponding to a third position of the first audio file, detecting an operation of disabling the BLE advertising function or an operation of stopping playing the first audio file, and stopping sending the at least one audio packet in the BLE advertising manner. In this implementation, when performing BLE advertising, the user may find the BLE advertising switch from any one of the pull-up menu, a pull-down menu, the side menu, the floating menu, or the settings interface of the first audio device, and stop BLE advertising, thereby improving convenience of an audio sharing operation.

In a possible implementation, the wireless short-range audio sharing method further includes: stopping playing, in response to the first operation, the first audio file by using the microphone of the first audio device or the headset connected to the first audio device; and when stopping sending the at least one audio data packet in the BLE advertising manner, playing, starting from the first position or starting from the third position, the first audio file by using the microphone of the first audio device or the headset connected to the first audio device. In this implementation, after stopping BLE advertising, the first audio device may play the audio file from a position from which the BLE advertising starts last time, to ensure that the user completely listens to the played audio on the first audio device. In addition, after stopping BLE advertising, the first audio device may further play the audio file from a position at which the BLE advertising is stopped.

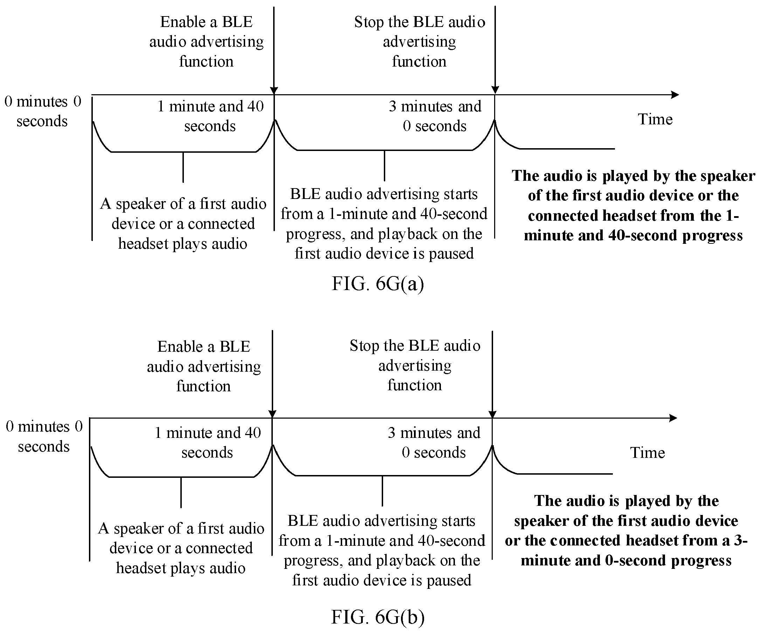

In this embodiment of this application, the first position is, for example, a 1-minute and 40-second position in the embodiment shown in FIG. 6G(a) and FIG. 6G(b), and the third position is, for example, a 3-minute and 0-second position in the embodiment shown in FIG. 6G(a) and FIG. 6G(b).

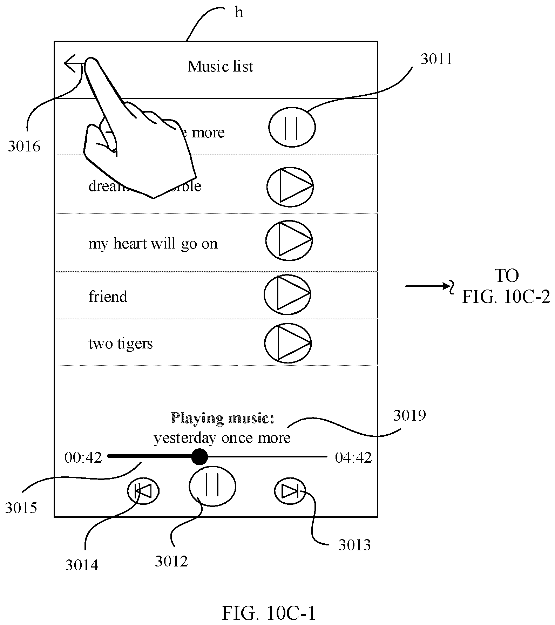

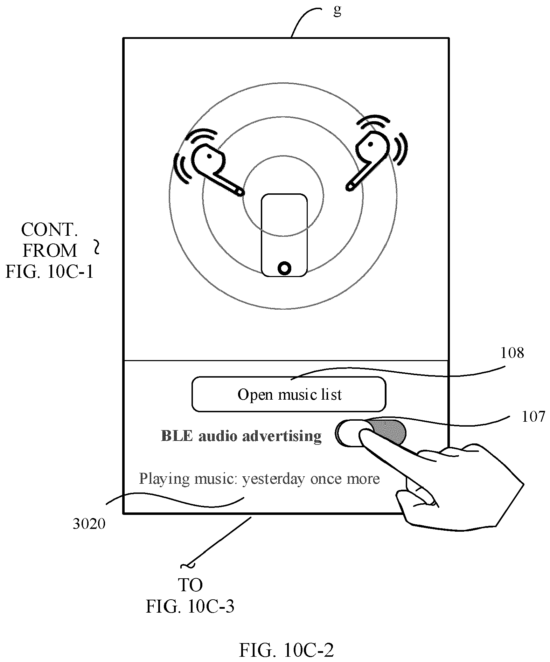

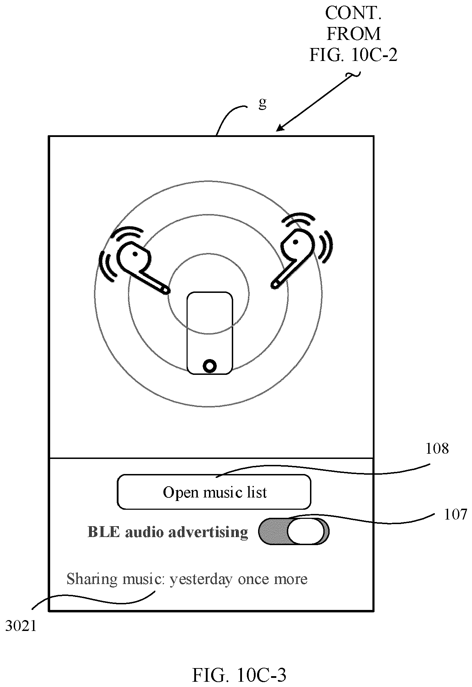

In a possible implementation, the interface of the media file playback application is an interface of a music sharing application. The first operation is the operation of turning on the BLE advertising switch in the interface of the music sharing application. Specifically, the player control and the identifier of the first audio file are displayed on a user interface h in FIG. 10C-1. Before the detecting a first operation of a user, the wireless short-range audio sharing method further includes: detecting a tap operation on a return control 3016 and displaying a user interface g, where the user interface g includes the BLE advertising switch; and detecting a tap operation on the BLE advertising switch on the user interface g, enabling the BLE advertising function in response to the tap operation on the BLE advertising switch, and performing advertising.

According to a third aspect, an embodiment of this application provides a wireless short-range audio sharing method. The method is performed by a second audio device. After receiving a setting operation of a user, the second audio device may start to receive a periodic advertisement to access a BLE advertisement. The method includes: detecting a first setting operation of the user; starting to receive the periodic advertisement in response to the first setting operation; if only one periodic advertisement is received, receiving at least one audio data packet of a BLE advertisement corresponding to the periodic advertisement; or if at least two periodic advertisements are received, receiving at least one audio data packet of a BLE advertisement corresponding to a first periodic advertisement of the at least two periodic advertisements, where the first periodic advertisement is one with optimal quality of the at least two periodic advertisements; and converting the at least one audio data packet into audio for playing.

In the foregoing wireless short-range audio sharing method, the second audio device does not need to establish a communications connection to an audio source device, and may receive the BLE advertisement and extract audio data from the BLE advertisement to play audio. The audio data is unidirectionally transmitted by the audio source device to the second audio device, so that a user operation in a process of establishing a Bluetooth connection is omitted. This can simplify an operation procedure of sharing an audio signal from the audio source device, and improve convenience of audio sharing.

Before the second audio device detects the first setting operation of the user, the second audio device is powered on in response to a power-on operation of the user on the second audio device.

In a possible implementation, the optimal quality includes a maximum quality parameter, the quality parameter is carried in the periodic advertisement, and the quality parameter includes one or any combination of the following: an RSSI parameter, a QoS parameter, or an SNR.

After finding the periodic advertisement with the optimal quality, or after starting to receive the BLE advertisement, the second audio device stops receiving the periodic advertisement, and discards periodic advertisements other than the periodic advertisement with the optimal quality.

In a process in which the second audio device converts the audio data packet into audio for playing, the second audio device may power off the second audio device in response to a power-off operation of the user on the second audio device. After the second audio device is powered off, the second audio device stops receiving the BLE advertisement. In this implementation, when receiving the BLE advertisement and playing the audio, the user may power off the second audio device to stop receiving the BLE advertisement, so as to stop playing the audio, thereby improving convenience of an audio sharing operation.

In addition, in the process in which the second audio device converts the audio data packet into audio for playing, the second audio device may further stop receiving the BLE advertisement in response to a three-consecutive-tap operation of the user on an earbud housing of the second audio device, to stop playing the audio. The stopping receiving the BLE advertisement may further be triggered by another user operation, for example, a voice operation or a touch operation. In this implementation, when receiving the BLE advertisement and playing the audio, the user may further perform the setting operation on the second audio device to stop receiving the BLE advertisement, so as to stop playing the audio, thereby improving the convenience of the audio sharing operation.

In a possible implementation, after the converting the at least one audio data packet into audio for playing, the method further includes: detecting a third setting operation of the user; stopping receiving and playing the at least one audio data packet of the BLE advertisement corresponding to the first periodic advertisement in response to the third setting operation, and re-receiving a periodic advertisement; and if there is only one re-received periodic advertisement, and the re-received periodic advertisement is a second periodic advertisement different from the first periodic advertisement, receiving at least one audio data packet of a BLE advertisement corresponding to the second periodic advertisement, and converting the at least one audio data packet of the BLE advertisement corresponding to the second periodic advertisement into audio for playing. In this implementation, when receiving the BLE advertisement and playing the audio, the user may further perform the setting operation on the second audio device to re-determine a received BLE advertisement and play an audio, so that the user can find a BLE advertisement that the user wants to receive.

In a possible implementation, after the second audio device starts to receive the BLE advertisement, the wireless short-range audio sharing method further includes: The second audio device notifies a second electronic device through the Bluetooth connection, so that a prompt of a device identifier corresponding to the BLE advertisement that the second audio device has accessed is displayed in a BLE advertising settings interface i of the second electronic device. In this implementation, the prompt of the device identifier is displayed, to facilitate viewing by the user.

In a possible implementation, the wireless short-range audio sharing method further includes: if there are at least two re-received periodic advertisements, a third periodic advertisement is one with optimal quality in the at least two re-received periodic advertisements; if the third periodic advertisement is different from the first periodic advertisement, receiving at least one audio data packet of a BLE advertisement corresponding to the third periodic advertisement, and converting the at least one audio data packet of the BLE advertisement corresponding to the third periodic advertisement into audio for playing; or if the third periodic advertisement and the first periodic advertisement are not from a same device, receiving at least one audio data packet of a BLE advertisement corresponding to the third periodic advertisement, and converting the at least one audio data packet of the BLE advertisement corresponding to the third periodic advertisement into audio for playing. In this implementation, whether the two received periodic advertisements are the same or whether devices from which the advertisements are received are the same is compared, to find a BLE advertisement that the user wants to access, thereby improving the convenience of the audio sharing.

In a possible implementation, the wireless short-range audio sharing method further includes: if the third periodic advertisement is the same as the first periodic advertisement or is from the same device as the first periodic advertisement, detecting whether a time interval between the first setting operation and the third setting operation is less than or equal to a first threshold; and if the time interval between the first setting operation and the third setting operation is less than or equal to the first threshold, converting at least one audio data packet of a BLE advertisement corresponding to a fourth periodic advertisement into audio for playing, where the fourth periodic advertisement is an advertisement whose quality is second only to that of the third periodic advertisement in the at least two re-received periodic advertisements; or if the time interval between the first setting operation and the third setting operation is greater than the first threshold, receiving the at least one audio data packet of the BLE advertisement corresponding to the third periodic advertisement, and converting the at least one audio data packet of the BLE advertisement corresponding to the third periodic advertisement into audio for playing. In this implementation, the BLE advertisement that the user wants to access is found by detecting a time interval between two access operations, thereby improving the convenience of the audio sharing.

In a possible implementation, the second audio device is a wireless Bluetooth headset, and the first setting operation is an operation of tapping an earbud of the wireless Bluetooth headset, or an operation of pressing a button on the wireless Bluetooth headset, or an operation of pressing the earbud of the wireless Bluetooth headset, or an operation of voice input, or an operation of touching the earbud of the wireless Bluetooth headset. The third setting operation may be a double-tap operation on the earbud housing again, or may be another operation.

Optionally, in addition to transmitting the audio data through BLE advertising, the audio data in this embodiment of this application may alternatively be transmitted through Wi-Fi advertising.

Optionally, the second audio device may further be a sound box.

According to a fourth aspect, an embodiment of this application provides a wireless short-range audio sharing method. The method is performed by a second electronic device, and the method includes: detecting an operation of enabling BLE advertising, and starting to receive a periodic advertisement sent by at least one electronic device; displaying an identifier of the at least one electronic device; receiving a second setting operation of a user; selecting one of the identifier of the at least one electronic device in response to the second setting operation; receiving and playing at least one audio data packet of a BLE advertisement corresponding to a periodic advertisement sent by the selected electronic device; or sending a parameter used to receive a first BLE advertisement to a second audio device, where the first BLE advertisement is the BLE advertisement corresponding to the periodic advertisement sent by the selected electronic device, so that the second audio device receives the at least one audio data packet of the first BLE advertisement.

In the foregoing wireless short-range audio sharing method, the second audio device does not need to establish a communications connection to an audio source device, and may receive the BLE advertisement and extract audio data from the BLE advertisement to play audio. The audio data is unidirectionally transmitted by the audio source device to the second audio device. This can simplify an operation procedure of sharing an audio signal from the audio source device, and improve convenience of audio sharing.

In a possible implementation, the sending a parameter used to receive a first BLE advertisement to a second audio device includes: sending the identifier of the selected electronic device to the second audio device through a Bluetooth connection, so that the second audio device receives the periodic advertisement sent by the selected electronic device, and receives the at least one audio data packet of the first BLE advertisement. In this implementation, only the identifier of the electronic device is transmitted, so that an amount of transmitted data can be reduced, delay of receiving the BLE advertisement caused by data transmission can be reduced, and a speed of accessing the BLE advertisement can be increased. Alternatively, sending a parameter included in the periodic advertisement sent by the selected electronic device to the second audio device through the Bluetooth connection, so that the second audio device receives the at least one audio data packet of the first BLE advertisement. In this implementation, the second audio device does not need to re-receive a periodic advertisement, thereby simplifying a step of receiving the BLE advertisement by the second audio device.

In a possible implementation, the second electronic device is a mobile phone. Before detecting a first setting operation of the user, the wireless short-range audio sharing method further includes: displaying an interface of a settings application, where the interface of the settings application includes a BLE advertising switch, the operation of enabling BLE advertising is an operation of turning on the BLE advertising switch, and the detecting a first setting operation of the user includes detecting the operation of enabling BLE advertising. In this implementation, the BLE advertising switch is added to the settings interface, so that the user can enable the BLE advertising function in the settings application.

The second setting operation is, for example, a tap operation on the one of the identifier of the electronic device.

Optionally, the interface of the settings application includes a BLE advertising settings entrance (namely, a BLE audio advertising settings entrance). In response to a tap operation of the user on a BLE advertising settings entrance 109, a second electronic device 400 displays a BLE advertising settings interface i (namely, a BLE audio advertising settings interface), where the BLE advertising settings interface i includes a tap operation on a search advertisement control 401. The operation of enabling BLE advertising is an operation of enabling a switch of the search advertisement control. The detecting a first setting operation of a user includes detecting an operation of turning on a switch of the search advertisement control.

In a possible implementation, after the selecting one of the identifier of the at least one electronic device, the wireless short-range audio sharing method further includes: displaying a prompt of the selected identifier of the electronic device. In this implementation, the prompt of the device identifier is displayed, so that the user can view the device identifier and enable another device to correctly access the BLE advertisement, thereby improving the convenience of the audio sharing.

In a possible implementation, after the receiving and playing at least one audio data packet of a BLE advertisement corresponding to a periodic advertisement sent by the selected electronic device, the wireless short-range audio sharing method further includes: receiving a fourth setting operation of the user, where the fourth setting operation is, for example, a tap operation on an identifier of another electronic device; selecting another one of the identifier of the at least one electronic device in response to the fourth setting operation; and receiving and playing the at least one audio data packet of the BLE advertisement corresponding to the periodic advertisement sent by the selected electronic device.

In a possible implementation, the second electronic device is a mobile phone. Before detecting a first setting operation of the user, the wireless short-range audio sharing method further includes: receiving a pull-down operation or a pull-up operation, and displaying an interface of a status bar. The interface of the status bar includes the BLE advertising switch, and the operation of enabling BLE advertising is the operation of turning on the BLE advertising switch. In this implementation, the BLE advertising switch is added to the interface of the status bar, so that the user can enable the BLE advertising function in the status bar.

In a possible implementation, the second electronic device is a mobile phone. Before detecting a first setting operation of the user, the wireless short-range audio sharing method further includes: displaying an audio sharing application interface. The audio sharing application interface includes the BLE advertising switch, and the operation of enabling BLE advertising is the operation of turning on the BLE advertising switch. In this implementation, the audio sharing application includes the BLE advertising switch and a control used to select the first audio file, so that the user can enable the BLE advertising function in the audio sharing application, and select an audio file, thereby improving convenience of audio sharing.

According to a fifth aspect, an embodiment of this application provides a wireless short-range audio sharing method. The method is performed by a second audio device, and the method includes: establishing a Bluetooth connection to a second electronic device; receiving a parameter of a first BLE advertisement through the Bluetooth connection; receiving at least one audio data packet of the first BLE advertisement based on the parameter of the first BLE advertisement; and converting the at least one audio data packet into audio for playing.

In the foregoing wireless short-range audio sharing method, the second audio device does not need to establish a communications connection to an audio source device, and may receive the BLE advertisement and extract audio data from the BLE advertisement to play audio. The audio data is unidirectionally transmitted by the audio source device to the second audio device, so that a user operation in a process of establishing a Bluetooth connection is omitted. This can simplify an operation procedure of sharing an audio signal from the audio source device, and improve convenience of audio sharing. In addition, an interaction interface is provided for the second audio device to access the BLE advertisement by using the second electronic device, thereby providing convenience for the audio sharing.

The parameter of the first BLE advertisement includes an identifier of a selected electronic device, and that the second audio device receives at least one audio data packet of the first BLE advertisement based on the parameter of the first BLE advertisement includes: The second audio device receives a periodic advertisement based on the identifier of the selected electronic device, and receives the at least one audio data packet of the first BLE advertisement based on the periodic advertisement.

The parameter of the first BLE advertisement includes a parameter included in the periodic advertisement sent by the selected electronic device, and that the second audio device receives at least one audio data packet of the first BLE advertisement based on the parameter of the first BLE advertisement includes: The second audio device receives the at least one audio data packet of the first BLE advertisement based on the parameter included in the periodic advertisement.

The parameter included in the periodic advertisement includes a parameter such as a frame interval, a frame size, transport latency, a retransmission effort, and a scheduling pattern. The second audio device receives the BLE advertisement based on the parameter of the BLE advertisement.

According to a sixth aspect, an embodiment of this application provides a wireless short-range audio sharing method. The method is performed by a second audio device, and the method includes: establishing a Bluetooth connection to a second electronic device; receiving a first instruction from the second electronic device through the Bluetooth connection, where the first instruction is used to instruct the second audio device to receive a periodic advertisement; sending, to the second electronic device through the Bluetooth connection, a device identifier of a device from which the periodic advertisement is received, so that the second electronic device displays the device identifier; receiving a parameter of a first BLE advertisement; receiving at least one audio data packet of the first BLE advertisement based on the parameter of the first BLE advertisement; and converting the at least one audio data packet into audio for playing.

In the foregoing wireless short-range audio sharing method, the second audio device does not need to establish a communications connection to an audio source device, and may receive the BLE advertisement and extract audio data from the BLE advertisement to play audio. The audio data is unidirectionally transmitted by the audio source device to the second audio device, so that a user operation in a process of establishing a Bluetooth connection is omitted. This can simplify an operation procedure of sharing an audio signal from the audio source device, and improve convenience of audio sharing. In addition, an interaction interface is provided for the second audio device to access the BLE advertisement by using the second electronic device, thereby providing convenience for the audio sharing.

In a possible implementation, after the converting the at least one audio data packet into audio for playing, the method further includes: receiving a parameter of a fourth BLE advertisement, receiving at least one audio data packet of the fourth BLE advertisement based on the parameter of the fourth BLE advertisement, and converting the at least one audio data packet into audio for playing. The fourth BLE advertisement is an advertisement different from the first BLE advertisement, and is sent by the second electronic device in response to a tap operation on a device identifier corresponding to the fourth BLE advertisement.

According to a seventh aspect, an embodiment of this application provides a wireless short-range audio sharing method. The method is performed by a second electronic device, and the method includes: detecting an operation of enabling BLE advertising, and sending a first instruction to a second audio device, so that the second electronic device receives at least one periodic advertisement; receiving a device identifier from which a periodic advertisement sent by the second electronic device is received; displaying at least one device identifier; detecting a selected operation of one of the at least one device identifier; and sending a parameter of a first BLE advertisement to the second audio device.

According to an eighth aspect, an embodiment of this application provides a wireless short-range audio sharing method. The method is performed by a first audio device, and the method includes: when a first audio file needs to be played, determining whether a BLE advertising function is enabled; and if the BLE advertising function is enabled, converting the first audio data into at least one audio data packet, and sending the at least one audio data packet in a BLE advertising manner; or if the BLE advertising function is not enabled, playing the first audio file by using a microphone of the first audio device or a headset connected to the first audio device.

In addition, in some other embodiments, the wireless short-range audio sharing method includes: when the BLE advertising function is enabled, determining whether an audio file needs to be played; if the first audio file needs to be played, converting the first audio data into the at least one audio data packet, and sending the at least one audio data packet in the BLE advertising manner; and if the BLE advertising function is not enabled, determining whether a headset is connected to the first audio device; if the headset is connected to the first audio device, playing the first audio file by using the connected headset; and if no headset is connected, playing the first audio file by using a microphone of the first audio device.

According to a ninth aspect, an embodiment of this application provides an electronic device, including one or more processors, a memory, a display, and a Bluetooth module. The memory is configured to store computer program code. The computer program code includes computer instructions. When the one or more processors execute the computer instructions, the electronic device is enabled to perform the wireless short-range audio sharing method according to any one of the first aspect or the implementations of the first aspect, or any one of the second aspect or the implementations of the second aspect, or any one of the fourth aspect or the implementations of the fourth aspect, or any one of the seventh aspect or the implementations of the seventh aspect, or any one of the eighth aspect or the implementations of the eighth aspect.

According to a tenth aspect, an embodiment of this application provides an electronic device, including one or more processors, a memory, a Bluetooth module, and an electro-acoustic transducer. The memory is configured to store computer program code. The computer program code includes computer instructions. When the one or more processors execute the computer instructions, the electronic device is enabled to perform the wireless short-range audio sharing method according to any one of the third aspect or the implementations of the third aspect, or any one of the fifth aspect or the implementations of the fifth aspect, or any one of the sixth aspect or the implementations of the sixth aspect.

According to an eleventh aspect, an embodiment of this application provides a computer storage medium, including computer instructions. When the computer instructions are run on an electronic device, the electronic device is enabled to perform the wireless short-range audio sharing method according to any one of the first aspect or the implementations of the first aspect, or any one of the second aspect or the implementations of the second aspect, or any one of the fourth aspect or the implementations of the fourth aspect, or any one of the seventh aspect or the implementations of the seventh aspect, or any one of the eighth aspect or the implementations of the eighth aspect.

According to a twelfth aspect, an embodiment of this application provides a computer storage medium, including computer instructions. When the computer instructions are run on an electronic device, the electronic device is enabled to perform the wireless short-range audio sharing method according to any one of the third aspect or the implementations of the third aspect, or any one of the fifth aspect or the implementations of the fifth aspect, or any one of the sixth aspect or the implementations of the sixth aspect.

According to a thirteenth aspect, an embodiment of this application provides a computer program product. When the computer program product is run on a computer, the computer is enabled to perform the wireless short-range audio sharing method according to any one of the first aspect or the implementations of the first aspect, or any one of the second aspect or the implementations of the second aspect, or any one of the fourth aspect or the implementations of the fourth aspect, or any one of the seventh aspect or the implementations of the seventh aspect, or any one of the eighth aspect or the implementations of the eighth aspect.

According to a fourteenth aspect, an embodiment of this application provides a computer program product. When the computer program product is run on a computer, the computer is enabled to perform the wireless short-range audio sharing method according to any one of the third aspect or the implementations of the third aspect, or any one of the fifth aspect or the implementations of the fifth aspect, or any one of the sixth aspect or the implementations of the sixth aspect.

It may be understood that the electronic device according to the ninth aspect, the computer storage medium according to the eleventh aspect, and the computer program product according to the thirteenth aspect provided above are all configured to perform the wireless short-range audio sharing method according to any one of the first aspect, the second aspect, the fourth aspect, the seventh aspect, or the eighth aspect. Therefore, for beneficial effects that can be achieved, refer to beneficial effects in a corresponding method, and details are not described herein again. Similarly, the electronic device according to the tenth aspect, the computer storage medium according to the twelfth aspect, and the computer program product according to the fourteenth aspect are all configured to perform the wireless short-range audio sharing method according to any one of the third aspect, the fifth aspect, or the sixth aspect. Therefore, for beneficial effects that can be achieved, refer to beneficial effects in a corresponding method, and details are not described herein again.

### BRIEF DESCRIPTION OF DRAWINGS

FIG. 1 is a schematic diagram of an audio sharing system according to an embodiment of this application;
FIG. 2 is a schematic structural diagram of an electronic device 20 according to an embodiment of this application;
FIG. 3 is a block diagram of a software structure of an electronic device 20 according to an embodiment of this application;
FIG. 4 is a schematic structural diagram of an audio output device 30 according to an embodiment of this application;
FIG. 5A to FIG. 5C are a schematic flowchart of an audio sharing method according to an embodiment of this application;
FIG. 6A-1 to FIG. 6E(b) are separately schematic diagrams of human-machine interaction interfaces according to an embodiment of this application;
FIG. 6F, FIG. 6G(a), and FIG. 6G(b) are separately schematic diagrams of an audio playback progress and an audio advertising progress according to an embodiment of this application;
FIG. 7 is a schematic flowchart of an audio sharing method according to an embodiment of this application;
FIG. 8A-1 to FIG. 8C-2 are separately schematic diagrams of human-machine interaction interfaces according to an embodiment of this application;
FIG. 9A and FIG. 9B are a schematic flowchart of an audio sharing method according to an embodiment of this application;
FIG. 10A-1 to FIG. 10C-3 are separately schematic diagrams of human-machine interaction interfaces according to an embodiment of this application;
FIG. 11 is a schematic structural diagram of another audio sharing system 40 according to an embodiment of this application;
FIG. 12A to FIG. 12C are a schematic flowchart of an audio sharing method according to an embodiment of this application;
FIG. 13A to FIG. 13D are schematic diagrams of human-machine interaction interfaces according to an embodiment of this application;
FIG. 14A to FIG. 14D are a schematic flowchart of an audio sharing method according to an embodiment of this application;
FIG. 15A-1 to FIG. 15B are separately schematic diagrams of human-machine interaction interfaces according to an embodiment of this application;
FIG. 16 is a schematic structural diagram of still another audio sharing system 50 according to an embodiment of this application;
FIG. 17A and FIG. 17B are a schematic flowchart of an audio sharing method according to an embodiment of this application;
FIG. 18 is a schematic diagram of a human-machine interaction interface according to an embodiment of this application; and
FIG. 19A to FIG. 19C are a schematic flowchart of an audio sharing method according to an embodiment of this application.

### DESCRIPTION OF EMBODIMENTS

The following describes the embodiments of this application with reference to accompanying drawings in the embodiments of this application.

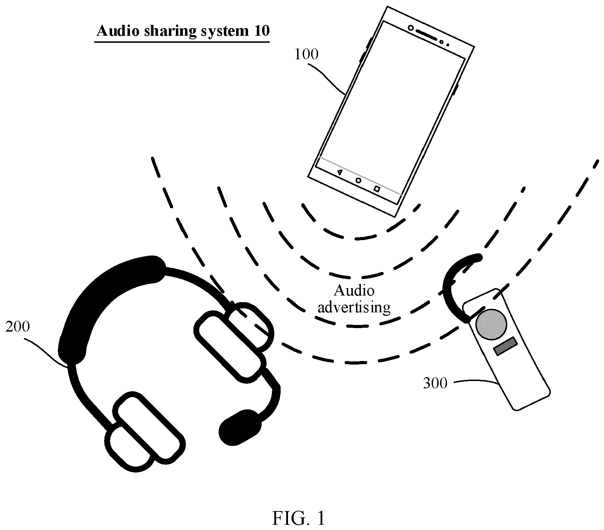

The following describes an audio sharing system in the embodiments of this application. FIG. 1 is a schematic diagram of an audio sharing system according to an embodiment of this application. The audio sharing system 10 may include a first audio device 100, a second audio device 200, and a third audio device 300.

The first audio device 100 may be implemented as any one of the following electronic devices: a mobile phone, a portable game console, a portable media playback device, a personal computer, an in-vehicle media playback device, or the like. The second audio device 200 and the third audio device 300 may be any type of audio output device configured to convert an audio file into audio, for example, a speaker, an in-ear headset, an over-ear headset, or a sound box.

A role of the first audio device 100 is an audio source (audio source), and roles of the second audio device 200 and the third audio device 300 are audio sinks (audio sink). The first audio device 100 may convert an audio file into an audio advertising signal, and advertise the audio advertising signal by using a wireless communications module (for example, a Bluetooth module or a Wi-Fi module in the wireless communications module) in the first audio device 100. The audio advertising signal advertised by the first audio device 100 may be received by the second audio device 200 and converted into audio for playing, so that a user wearing the second audio device 200 can hear the audio. The audio advertising signal advertised by the first audio device 100 may be further received by the third audio device 300 and converted into audio for playing, so that a user wearing the third audio device 300 can hear the audio. In this way, audio from the first audio device 100 may be shared by the user wearing the second audio device 200 and the user wearing the third audio device 300.

There may be one or more audio output devices in the wireless audio system 10. In this embodiment of this application, that there are two audio output devices (the second audio device 200 and the third audio device 300) is used as an example for description. It may be understood that there may be more or fewer audio output devices. Not limited to FIG. 1, physical forms and sizes of the first audio device 100, the second audio device 200, and the third audio device 300 may be different. This is not limited in this embodiment of this application.

The audio sharing system 10 shown in FIG. 1 may be an audio sharing system based on a Bluetooth protocol. To be specific, the first audio device 100, the second audio device 200, and the third audio device 300 may all support a BLE advertising (advertising) function. The first audio device 100 advertises an audio advertising signal on a BLE advertising channel. The second audio device 200 may scan the BLE advertising channel and receive the audio advertising signal. The third audio device 200 may also scan the BLE advertising channel and receive the audio advertising signal.

It may be understood that this embodiment of this application is described by using an example in which the audio sharing system 10 is an audio sharing system implemented based on the Bluetooth protocol. However, this embodiment of this application is not limited to BLE advertising, and Wi-Fi advertising or other short-range wireless advertising is also feasible. An advertising manner is not limited in this embodiment of this application.

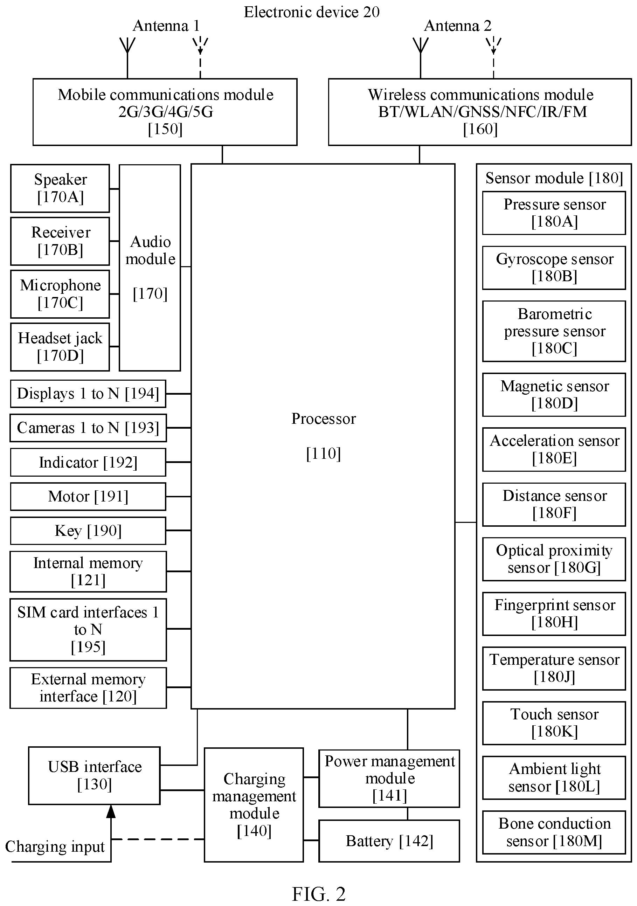

In this embodiment of this application, the first audio device 100 may be implemented as an electronic device. The following describes an electronic device 20 in this embodiment of this application. FIG. 2 is a schematic structural diagram of the electronic device 20 according to an embodiment of this application.

The electronic device 20 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a key 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 20. In some other embodiments of this application, the electronic device 20 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 20. The controller may generate an operation control signal based on instruction operation code and a time sequence signal, to complete control of instruction reading and instruction execution.

A memory may further be disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory, to avoid repeated access and reduce a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serail clock line, SCL). In some embodiments, the processor 110 may include a plurality of groups of I2C buses. The processor 110 may be separately coupled to the touch sensor 180K, a charger, a flashlight, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 20.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communications module 160 through the I2S interface, to implement a function of answering a call through a Bluetooth headset.

The PCM interface may also be configured to: perform audio communication, and sample, quantize, and code an analog signal. In some embodiments, the audio module 170 may communicate with the wireless communications module 160 through the PCM interface. In some embodiments, the audio module 170 may alternatively transmit an audio signal to the wireless communications module 160 through the PCM interface, to implement a function of answering a call through a Bluetooth headset. Both the I2S interface and the PCM interface may be configured to perform the audio communication.

The UART interface is a universal serial data bus, and is configured to perform asynchronous communication. The bus may be a two-way communications bus, and converts to-be-transmitted data between serial communication and parallel communication. In some embodiments, the UART interface is usually configured to connect the processor 110 to the wireless communications module 160. For example, the processor 110 communicates with a Bluetooth module in the wireless communications module 160 through the UART interface, to implement a Bluetooth function. In some embodiments, the audio module 170 may transmit an audio signal to the wireless communications module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), or the like. In some embodiments, the processor 110 communicates with the camera 193 through the CSI interface, to implement a photographing function of the electronic device 20. The processor 110 communicates with the display 194 through the DSI interface, to implement a display function of the electronic device 20.

The GPIO interface may be configured by using software. The GPIO interface may be configured as a control signal, or may be configured as a data signal. In some embodiments, the GPIO interface may be configured to connect the processor 110 to the camera 193, the display 194, the wireless communications module 160, the audio module 170, the sensor module 180, or the like. The GPIO interface may further be configured as the I2C interface, the I2S interface, the UART interface, the MIPI interface, or the like.

The USB interface 130 is an interface that conforms to a USB standard specification, and may be specifically a mini USB interface, a micro USB interface, a USB Type-C interface, or the like. The USB interface 130 may be configured to connect to the charger to charge the electronic device 20, or may be configured to transmit data between the electronic device 20 and a peripheral device, or may be configured to connect to a headset, to play audio through the headset. The interface may be further configured to connect to another electronic device such as an AR device.

It may be understood that an interface connection relationship between modules shown in the embodiment of the present invention is merely an example for description, and does not constitute a limitation on a structure of the electronic device 20. In some other embodiments of this application, the electronic device 20 may alternatively use an interface connection manner different from that in the foregoing embodiment, or a combination of a plurality of interface connection manners.

The charging management module 140 is configured to receive a charging input from the charger. The charger may be a wireless charger, or may be a wired charger.

The power management module 141 is configured to connect the battery 142, the charging management module 140, and the processor 110. The power management module 141 receives input of the battery 142 and/or the charging management module 140, and supplies power to the processor 110, the internal memory 121, an external memory, the display 194, the camera 193, the wireless communications module 160, and the like. In some other embodiments, the power management module 141 may also be disposed in the processor 110. In some other embodiments, the power management module 141 and the charging management module 140 may alternatively be disposed in a same device.

A wireless communications function of the electronic device 20 may be implemented through the antenna 1, the antenna 2, the mobile communications module 150, the wireless communications module 160, the modem processor, the baseband processor, and the like.

The antenna 1 and the antenna 2 are configured to transmit and receive electromagnetic wave signals. Each antenna in the electronic device 20 may be configured to cover one or more communications bands. Different antennas may be further multiplexed to improve antenna utilization. For example, the antenna 1 may be multiplexed as a diversity antenna in a wireless local area network. In some other embodiments, the antenna may be used in combination with a tuning switch.

The mobile communications module 150 may provide a wireless communications solution that is used for the electronic device 20 and that includes 2G, 3G, 4G, 5G and the like. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering or amplification on the received electromagnetic wave, and transmit a processed electromagnetic wave to the modem processor for demodulation. The mobile communications module 150 may further amplify a signal modulated by the modem processor, and convert the signal into an electromagnetic wave for radiation through the antenna 1. In some embodiments, at least some function modules of the mobile communications module 150 may be disposed in the processor 110. In some embodiments, at least some function modules of the mobile communications module 150 may be disposed in the same device as at least some modules of the processor 110.

The modem processor may include a modulator and a demodulator. The modulator is configured to modulate a to-be-sent low-frequency baseband signal into a medium-frequency or high-frequency signal. The demodulator is configured to demodulate a received electromagnetic wave signal into a low-frequency baseband signal. Then, the demodulator transmits the low-frequency baseband signal obtained through demodulation to the baseband processor for processing. The baseband processor processes the low-frequency baseband signal, and then transfers an obtained signal to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in the same device as the mobile communications module 150 or another function module.

The wireless communications module 160 may provide a wireless communications solution that is applied to the electronic device 20 and that includes a wireless local area network (wireless local area networks, WLAN) (such as a Wi-Fi network), Bluetooth (bluetooth, BT), BLE advertising, a global navigation satellite system (global navigation satellite system, GNSS), frequency modulation (frequency modulation, FM), near field communication (near field communication, NFC), an infrared technology (infrared, IR), or the like. The wireless communications module 160 may be one or more components that integrate at least one communications processing module. The wireless communications module 160 receives an electromagnetic wave through the antenna 2, performs frequency modulation and filtering processing on the electromagnetic wave signal, and sends a processed signal to the processor 110. The wireless communications module 160 may further receive a to-be-sent signal from the processor 110, perform frequency modulation and amplification on the signal, and convert the signal into an electromagnetic wave for radiation through the antenna 2.

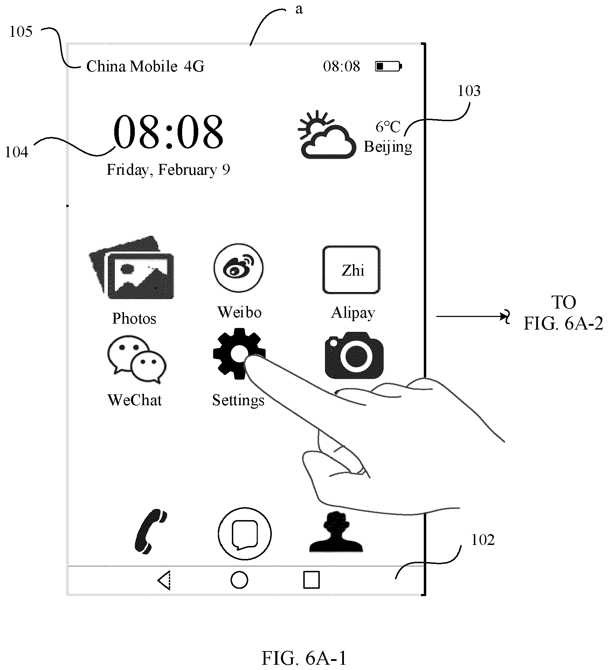

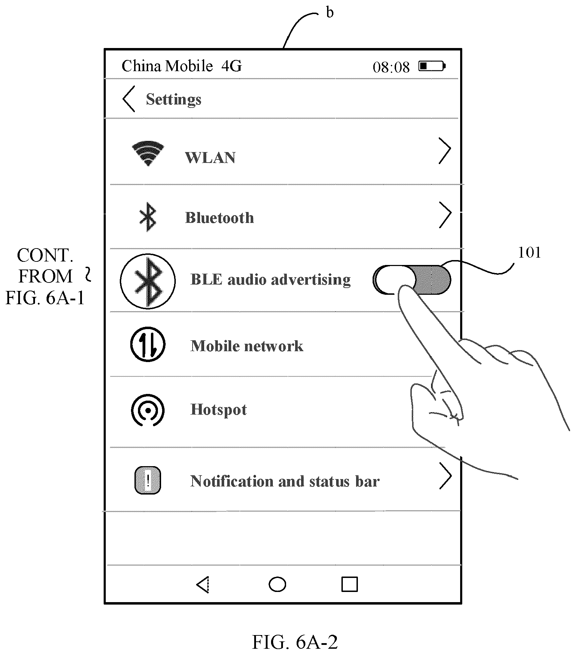

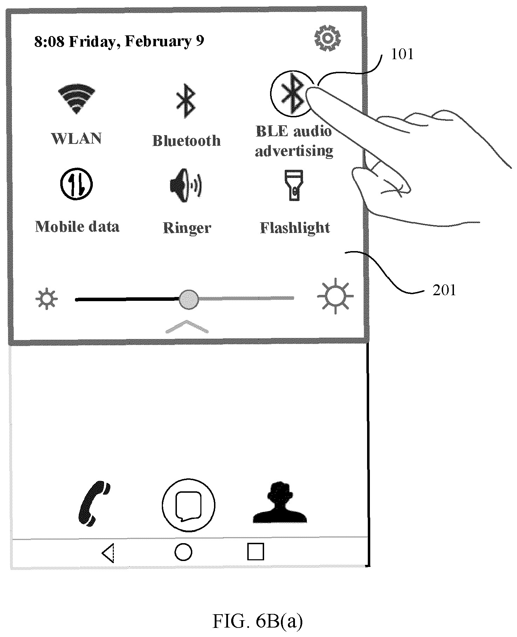

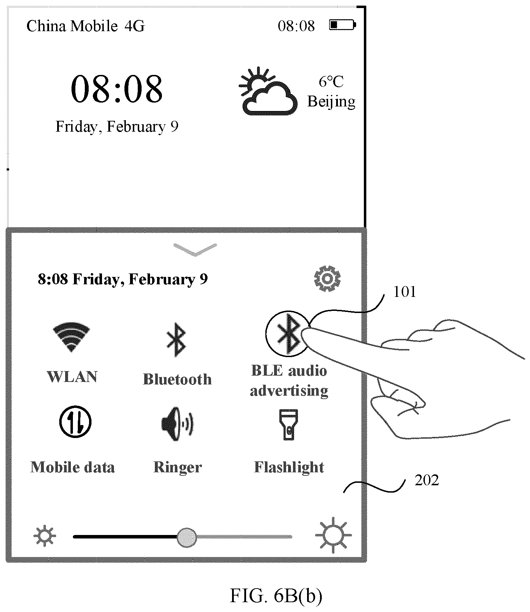

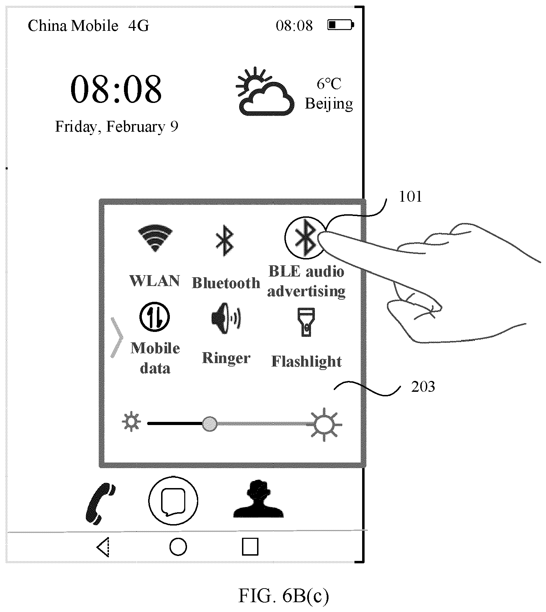

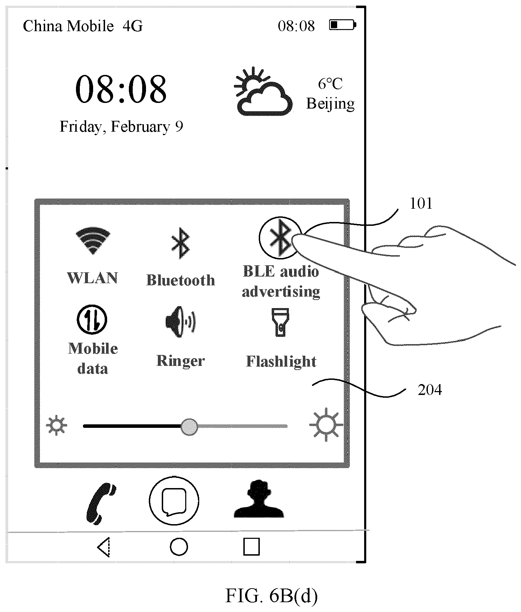

The BT and BLE advertising functions in the wireless communications module 160 may be implemented by a Bluetooth chip. The electronic device 20 advertises audio data by using BLE (referred to as BLE audio advertising below). This needs to power on the Bluetooth chip, and enables a software module related to a BLE audio advertising function on the Bluetooth chip. In this embodiment of this application, the Bluetooth chip is powered on by enabling the BT function or the BLE audio advertising function. If a "BLE audio advertising" switch is turned on in a user interface shown in FIG. 6A-2, FIG. 6B(a), FIG. 6B(b), FIG. 6B(c), or FIG. 6B(d), the electronic device 20 enables the module related to the BLE audio advertising function on the Bluetooth chip, to implement BLE audio advertising.

BLE audio advertising function: After a PCM file is segmented and carried in an audio advertising signal, the audio advertising signal is advertised through the wireless communications module 160, so that a plurality of audio sinks receive the audio advertising signal. Therefore, the electronic device can perform audio sharing with another audio device without establishing a communications connection between an audio source and the audio sink. In addition, the wireless communications module 160 may also receive a periodic advertisement signal and an audio advertising signal, then converts the received audio advertising signal into an audio file in an analog signal state, and plays the audio file through an electro-acoustic transducer.

In some embodiments, the antenna 1 of the electronic device 20 is coupled to the mobile communications module 150, and the antenna 2 is coupled to the wireless communications module 160, so that the electronic device 20 may communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device 20 implements the display function by using the GPU, the display 194, the application processor, and the like. The GPU is a microprocessor for image processing, and is connected to the display 194 and the application processor. The GPU is configured to perform mathematical and geometric calculation, and is used for graphics rendering. The processor 110 may include one or more GPUs that execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like. In some embodiments, the electronic device 20 may include one or N displays 194, where N is a positive integer greater than 1.

The electronic device 20 may implement the photographing function by using the ISP, the camera 193, the video codec, the GPU, the display 194, the application processor, and the like.

The ISP is configured to process data fed back by the camera 193. For example, during photographing, a shutter is pressed, and a ray of light is transmitted to a photosensitive element of a camera through a lens. An optical signal is converted into an electrical signal. The photosensitive element of the camera transmits the electrical signal to the ISP for processing, and converts the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP, to convert the electrical signal into a digital image signal. The ISP outputs the digital image signal to the DSP for processing. The DSP converts the digital image signal into an image signal in a standard format such as RGB or YUV. In some embodiments, the electronic device 20 may include one or N cameras 193, where N is a positive integer greater than 1.

The digital signal processor is configured to process a digital signal, and may process another digital signal in addition to the digital image signal. For example, when the electronic device 20 selects a frequency, the digital signal processor is configured to perform Fourier transformation and the like on frequency energy.

The video codec is configured to: compress or decompress a digital video. The electronic device 20 may support one or more video codecs. In this way, the electronic device 20 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a transfer mode between human brain neurons, and may further continuously perform self-learning. Applications such as intelligent cognition of the electronic device 20 may be implemented by using the NPU, for example, image recognition, facial recognition, speech recognition, and text understanding.

The external memory interface 120 may be configured to connect to an external memory card, for example, a Micro SD card, to extend a storage capability of the electronic device 20. The external memory card communicates with the processor 110 through the external memory interface 120, to implement a data storage function. For example, files such as music and videos are stored in the external memory card.

The internal memory 121 may be configured to store computer-executable program code. The executable program code includes instructions. The processor 110 runs the instructions stored in the internal memory 121 to perform various function applications of the electronic device 20 and data processing. The internal memory 121 may include a program storage area and a data storage area. The program storage area may store an operating system, an application required by at least one function (such as a sound playing function or an image playing function), and the like. The data storage area may store data (such as audio data and a phone book) created during use of the electronic device 20, and the like. In addition, the internal memory 121 may include a high-speed random access memory, and may further include a non-volatile memory such as at least one magnetic disk storage device, a flash memory, or a universal flash storage (universal flash storage, UFS).

The electronic device 20 may implement an audio function such as music playing or recording by using the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to code and decode an audio signal. In some embodiments, the audio module 170 may be disposed in the processor 110, or some function modules in the audio module 170 are disposed in the processor 110.

The speaker 170A, also referred to as a "horn", is configured to convert an audio electrical signal into a sound signal. The electronic device 20 may be used to listen to music or answer a call in a hands-free mode over the speaker 170A.

The receiver 170B, also referred to as an "earpiece", is configured to convert an audio electrical signal into a sound signal. When a call is answered or a voice message is received by using the electronic device 20, the receiver 170B may be placed close to a human ear to listen to a voice.

The microphone 170C, also referred to as a "mike" or a "microphone", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 20. In some other embodiments, two microphones 170C may be disposed in the electronic device 20, to collect a sound signal and further implement a noise reduction function. In some other embodiments, three, four, or more microphones 170C may alternatively be disposed in the electronic device 20, to collect a sound signal, implement noise reduction, and identify a sound source, so as to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194.

The gyroscope sensor 180B may be configured to determine a motion posture of the electronic device 20. In some embodiments, an angular velocity of the electronic device 20 around three axes (namely, axes x, y, and z) may be determined by using the gyroscope sensor 180B. The gyroscope sensor 180B may be configured to perform image stabilization during photographing. The gyroscope sensor 180B may also be used in a navigation scenario and a somatic game scenario.

The barometric pressure sensor 180C is configured to measure barometric pressure. In some embodiments, the electronic device 20 calculates an altitude based on a barometric pressure value measured by the barometric pressure sensor 180C, to assist in positioning and navigation.

The magnetic sensor 180D includes a Hall sensor. The electronic device 20 may detect opening and closing of a flip leather case by using the magnetic sensor 180D.

The acceleration sensor 180E may detect magnitude of accelerations in various directions (usually on three axes) of the electronic device 20, may detect magnitude and a direction of the gravity when the electronic device 20 is static, and may be further configured to identify a posture of the electronic device, and applied to an application such as switching between landscape mode and portrait mode or a pedometer.

The distance sensor 180F is configured to measure a distance. The electronic device 20 may measure the distance through infrared or laser. In some embodiments, in a photographing scenario, the electronic device 20 may measure a distance by using the distance sensor 180F, to implement quick focusing.

The optical proximity sensor 180G may include a light-emitting diode (LED) and an optical detector, for example, a photodiode. The light-emitting diode may be an infrared light-emitting diode. The electronic device 20 emits infrared light by using the light-emitting diode. The electronic device 20 detects infrared reflected light from a nearby object by using the photodiode, to automatically turn off a screen to save power. The optical proximity sensor 180G may also be used in a smart cover mode or a pocket mode to automatically perform screen unlocking or locking.

The ambient light sensor 180L is configured to sense ambient light brightness. The electronic device 20 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 20 is in a pocket, to avoid an accidental touch.

The fingerprint sensor 180H is configured to collect a fingerprint. The electronic device 20 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 20 executes a temperature processing policy based on the temperature detected by the temperature sensor 180J.

The touch sensor 180K is also referred to as a "touch panel". The touch sensor 180K may be disposed on the display 194, and the touch sensor 180K and the display 194 form a touchscreen, which is also referred to as a "touchscreen". The touch sensor 180K is configured to detect a touch operation on or near the touch sensor 180K. The touch sensor may transfer the detected touch operation to the application processor, to determine a type of a touch event. A visual output related to the touch operation may be provided by using the display 194. In some other embodiments, the touch sensor 180K may alternatively be disposed on a surface of the electronic device 20 at a location different from that of the display 194.

The bone conduction sensor 180M may obtain a vibration signal. In some embodiments, the bone conduction sensor 180M may obtain a vibration signal of a vibration bone of a human vocal-cord part.

The key 190 includes a power key, a volume key, and the like. The key 190 may be a mechanical button, or may be a touch-sensitive key. The electronic device 20 may receive a key input, and generate a key signal input related to a user setting and function control of the electronic device 20.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or detached from the SIM card interface 195, to implement contact with or separation from the electronic device 20. The electronic device 20 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or of different types. The SIM card interface 195 may be compatible with different types of SIM cards. The SIM card interface 195 may also be compatible with an external memory card. The electronic device 20 interacts with a network by using the SIM card, to implement functions such as conversation and data communication. In some embodiments, the electronic device 20 uses an eSIM, namely, an embedded SIM card. The eSIM card may be embedded into the electronic device 20 and cannot be separated from the electronic device 20.

A software system of the electronic device 20 may use a layered architecture, an event-driven architecture, a microkernel architecture, a microservice architecture, or a cloud architecture. In this embodiment of the present invention, an Android system with the layered architecture is used as an example to illustrate a software structure of the electronic device 20.

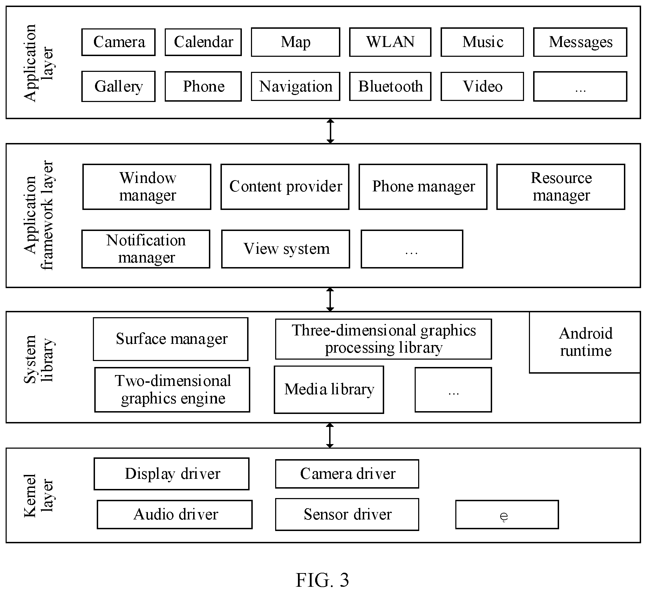

FIG. 3 is a block diagram of the software structure of the electronic device 20 according to this embodiment of this application.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 3, the application packages may include applications such as Camera, Gallery, Calendar, Phone, Maps, Navigation, WLAN, Bluetooth, Music, Video, and Messages.

In some embodiments, the application further includes a BLE audio advertising application, to implement a BLE audio advertising function. In some other embodiments, the BLE audio advertising function may be further implemented in an application such as a Bluetooth application or a settings application.

The application framework layer provides an application programming interface (application programming interface, API) and a programming framework for an application at the application layer. The application framework layer includes some predefined functions.

As shown in FIG. 3, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to store and obtain data and enable the data to be accessible to an application. The data may include a video, an image, audio, calls that are made and received, a browsing history and bookmarks, a phone book, and the like.

The view system includes visual controls, such as a control for displaying a text and a control for displaying an image. The view system may be configured to construct an application. A display interface may include one or more views. For example, a display interface including an SMS notification icon may include a text display view and an image display view.

The phone manager is configured to provide a communications function of the electronic device 20, for example, management of a call status (including answering or declining).

The resource manager provides, for an application, various resources such as a localized character string, an icon, an image, a layout file, and a video file.

The notification manager enables an application to display notification information in the status bar, and may be configured to convey a notification message. The notification manager may automatically disappear after a short pause without requiring a user interaction. For example, the notification manager is configured to notify download completion, give a message notification, and the like. The notification manager may be a notification that appears in a top status bar of the system in a form of a graph or a scroll bar text, for example, a notification of an application running on the background, or may be a notification that appears on the screen in a form of a dialog window. For example, text information is prompted in the status bar, a prompt tone is produced, the electronic device vibrates, or the indicator light blinks.

The Android runtime includes a core library and a virtual machine. The Android runtime is responsible for scheduling and management of the Android system.

The core library includes two parts: a function that needs to be invoked in java language, and a core library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The application framework layer further includes an interface that is provided for an application including the BLE audio advertising function and that is configured to receive advertisement data. The advertisement data is, for example, audio data.

The system library may include a plurality of function modules, for example, a surface manager (surface manager), a media library (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, a static image file, and the like. The media library may support a plurality of audio and video coding formats such as MPEG-4, H.264, MP3, AAC, AMR, JPG, and PNG.

The three-dimensional graphics processing library is configured to implement three-dimensional graphics drawing, image rendering, compositing, layer processing, and the like.

The 2D graphics engine is a drawing engine for 2D drawing.

The system library also includes a manager that supports the BLE audio advertising function.

The kernel layer is a layer between hardware and software. The kernel layer includes at least a display driver, a camera driver, an audio driver, and a sensor driver.

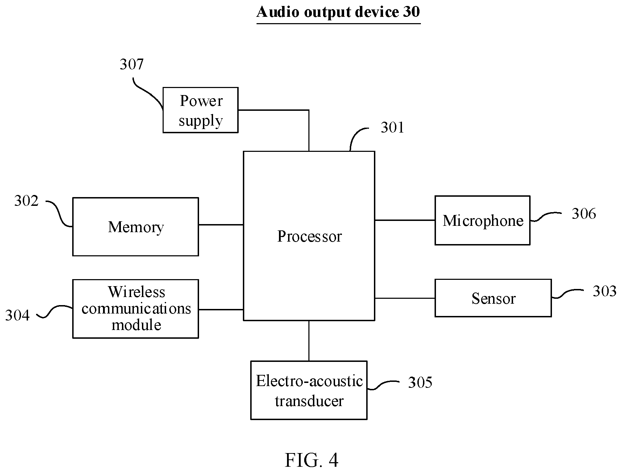

In this embodiment of this application, the second audio device 200 and the third audio device 300 may be an audio output device 30. FIG. 4 is a schematic structural diagram of the audio output device 30 according to this embodiment of this application.

As shown in FIG. 4, the audio output device 30 may include a processor 301, a memory 302, a sensor 303, a wireless communications module 304, at least one electro-acoustic transducer (electro-acoustic transducer) 305, a microphone 306, and a power supply 307.

The memory 302 may be configured to store application code, and the processor 301 executes the application code, so that the audio output device performs the method in the embodiments of the present invention. The wireless communications module 304 may receive an audio advertising signal, in specific, a BLE advertising signal, sent by the first audio device 100. The application code stored in the memory 302 may be further used to implement a function of invoking the electro-acoustic transducer 305 to convert the audio advertising signal into audio for playing.

The memory 302 may further store a Bluetooth address used to uniquely identify the audio output device 30.

The sensor 303 may include an acceleration sensor. The acceleration sensor may detect a tap operation. Specifically, different quantities of taps enable the acceleration sensor to output different voltage signals, and the voltage signals may be transferred to the processor to perform corresponding control functions. For example, when the acceleration sensor detects a voltage signal corresponding to a double-tap operation, the processor 301 may enable the wireless communications module 304 to receive a periodic advertisement signal and the audio advertising signal.

In some embodiments, the sensor 303 may further include a bone conduction sensor, to form a bone conduction headset. The bone conduction sensor may obtain a vibration signal of a vibration bone of a vocal-cord part, and the processor 301 parses out a speech signal, to implement a control function corresponding to the speech signal, for example, enable or disable, based on the speech signal, the wireless communications module 304 to receive the periodic advertisement signal and the audio advertising signal.

In some other embodiments, the sensor 303 may further include a fingerprint sensor, configured to detect a user fingerprint, identify a user identity, and the like.

In some other embodiments, the sensor 303 may further include a touch sensor. In some embodiments, when the touch sensor detects two consecutive touch operations, the processor 301 enables the wireless communications module 304 to receive the periodic advertisement signal and the audio advertising signal.

In some other embodiments, the sensor 303 may further include a pressure sensor, configured to detect a press operation of the user. In some other embodiments, when the pressure sensor detects the press operation, the processor 301 may enable the wireless communications module 304 to receive the audio advertising signal.

In some embodiments, the sensor 303 may further include a distance sensor and an optical proximity sensor. The distance sensor and the optical proximity sensor may detect whether there is an object near the audio output device 30, to determine whether the audio output device 30 is worn by the user. In some other embodiments, the sensor 303 may further include an ambient light sensor, and the processor 301 may adaptively adjust some parameters such as volume based on ambient light brightness sensed by the ambient light sensor.

The wireless communications module 304 is configured to support short-range data exchange between the audio output device 30 and various electronic devices. In some embodiments, the wireless communications module 304 may include a Bluetooth transceiver, and the Bluetooth transceiver supports a BLE advertising function. The Bluetooth transceiver is configured to receive a Bluetooth audio advertising signal advertised by the first audio device 100. The wireless communications module 304 may further include a Wi-Fi module, and the Wi-Fi may receive a Wi-Fi audio advertising signal advertised by the first audio device 100.

The electro-acoustic transducer 305 may include a receiver (namely, an "earpiece"), or may include a speaker, and may be configured to convert an audio electrical signal into a sound signal for playing. The audio electrical signal may be obtained by decoding the audio advertising signal, and the audio advertising signal may be advertised by the first audio device 100. The first audio device 100 may play an audio file through the audio output device 30 without establishing a communications connection to the audio output device 30. In other words, there is no need to establish an existing Bluetooth connection or Wi-Fi connection between the first audio device 100 and the audio output device 30, and the audio signal may be unidirectionally transmitted by the first audio device 100 to the audio output device 30.

The microphone 306, also referred to as a "mike" or a "microphone", is configured to convert the sound signal into the audio electrical signal. For example, when the user speaks, the microphone 306 may collect a sound signal of the user and convert the sound signal into an audio electrical signal

The power supply 307 may be configured to supply power to components included in the audio output device 30. In some embodiments, the power supply 307 may be a battery, for example, a rechargeable battery.

It may be understood that the structure shown in this embodiment of this application does not constitute a specific limitation on the audio output device 30. In addition, the wireless communications module 304 may further include a Bluetooth transceiver. The audio output device 30 may establish a Bluetooth connection to another Bluetooth audio source through the Bluetooth transceiver, to implement short-range data exchange between the audio output device 30 and the another Bluetooth audio source. For example, the audio output device 30 receives an audio signal through the Bluetooth transceiver, and then plays the audio signal. The audio output device 30 may further include one earbud or two earbuds. The earbud includes the foregoing function modules (the processor 301, the memory 302, the sensor 303, the wireless communications module 304, the electro-acoustic transducer 305, the microphone 306, and the power supply 307) and an earbud housing that encapsulates these function modules together. When the audio output device 30 includes two earbuds, the two earbuds may be used as a double-earpiece headset, or a Bluetooth connection may be established through the Bluetooth transceiver, to implement data exchange between the two earbuds. The audio output device 30 may have more or fewer components than those shown in FIG. 4, may combine two or more components, or may have different component configurations. For example, the audio output device 30 may further include components such as an indicator (which may indicate a status such as a battery level of the earbud) and a dust filter (which may be used with the earpiece). Various components shown in FIG. 4 may be implemented in hardware, software, or a combination of hardware and software that includes one or more signal processing or application-specific integrated circuits.

The following first briefly describes concepts in some embodiments.

### (1) Player

The player may include a music APP, a video APP, and the like. On a user interface of the player, the first audio device may respond to a user operation to perform an operation such as playing, buffering, or deleting an audio file. For example, on a music APP interface, if a touch operation on a song name "Dream it possible" is detected, the first audio device 100 converts an audio file corresponding to the song name "Dream it possible" into a PCM file. Then, the first audio device 100 plays audio based on the PCM file, or converts the PCM file into a BLE audio advertisement for advertising.

The player may further include SMS messages, WeChat, Taobao, Facebook, and the like. When an audio reminder (for example, a message reminder) is required, the player may automatically invoke a system announcement file. For example, when the WeChat receives a new message, the WeChat requests to invoke a system message announcement file. The first audio device 100 converts the system message announcement file into a PCM file, and plays audio based on the PCM file, or converts the PCM file into a BLE audio advertisement for advertising.

The player may further include a dial-up APP. When the dial-up APP receives an incoming call and the first audio device is in a mode in which a ringing prompt is allowed, the dial-up APP requests to invoke a system ringtone announcement file. The first audio device 100 converts the system ringtone announcement file into a PCM file, and plays audio based on the PCM file, or converts the PCM file into a BLE audio advertisement for advertising.

### (2) PCM file

The PCM file is obtained by processing an audio file. A format of the audio file may be mp3 or wav. The PCM file is a digital file including symbols such as 1 and 0, and is not coded or compressed. In some embodiments, the PCM file includes only coded audio data, and does not include other description information. The audio file processing may include decoding the audio file. In a process of decoding the audio file, audio data of the audio file may be extracted, and description information of the audio file may be read. The audio data of the audio file is audio data stored in a form of a digital signal. The audio data may be stored in sequence based on a playing sequence, or may be stored in another manner with remarks of the playing sequence. The description information of the audio file may include: a sampling rate, duration, a quantity of sound channels, and a type of the audio file. In a process of decoding the audio file to obtain the PCM file, the sampling rate, the duration, and the quantity of sound channels of the audio file may be further adjusted based on a requirement of the audio output device.

The audio file processing may further include audio mixing. For example, when a plurality of audio files need to be converted into PCM files at the same time, the audio mixing may be performed on the plurality of audio files. For example, when the music APP is used to play music, the WeChat receives a new message. During audio processing, a music file and a system message announcement file may be mixed and converted into a PCM file. Then, the electro-acoustic transducer may play audio based on the PCM file.

### (3) BIS data

The BLE advertising function may be implemented by using an isochronous channels (isochronous channels) transmission protocol based on a Bluetooth advertisement. In a transmission mode of isochronous channels, a broadcast isochronous stream (broadcast isochronous stream, BIS) may implement that data advertised by one broadcaster is received by a plurality of data receivers. A PCM file may be advertised through BIS data.

The BIS is an isochronous data stream sent by the broadcaster (broadcaster) within an advertising range. The data receiver receives the isochronous stream within the advertising range. During BIS data transmission, there is no need to establish the existing Bluetooth connection or Wi-Fi connection between the broadcaster and the data receiver, and the isochronous stream is unidirectionally transmitted by the broadcaster to the data receiver.

The broadcaster is a device for advertising the isochronous stream. The data receiver may be any device that receives the isochronous stream within the advertising range. In this embodiment of this application, the broadcaster is the audio source, and the data receiver is the audio sink.

A time domain resource of the BIS includes a BIS event (BIS event) that occurs at each isochronous interval. The broadcaster sends data in the BIS event. Each BIS event is divided into one or more subevents (subevent). To be specific, one BIS event has one or more subevents used to transmit a broadcast isochronous data packet (broadcast isochronous data packets). Because there is no need to establish the existing Bluetooth connection or Wi-Fi connection between the broadcaster and the data receiver, to improve reliability of isochronous stream transmission, the subevent in each BIS event may repeatedly transmit the BIS data packet. The PCM file may be segmented and packaged into a data packet, and transmitted in the subevent of the BIS event.

One broadcaster may establish a plurality of broadcast isochronous groups (broadcast isochronous group, BIG) including a plurality of BISs, and transmit data on the plurality of BISs. The data receiver may receive data advertised in all BISs in the BIG, or may receive data advertised in only some BISs in the BIG. The BIG may include one or more BISs.

### (4) Periodic advertisement

When transmitting the broadcast isochronous data packet, the broadcaster may periodically advertise the periodic advertisement. An ACAD field of the periodic advertisement may carry BIG information (broadcast isochronous group synchronization information, BIGInfo). The data receiver may receive the periodic advertisement and obtain the BIGInfo. The data receiver may synchronize data to the BIG based on the BIGInfo, to obtain audio advertising data, namely, a BIS data packet, from the BIG.

The BIGInfo may include, for example, a frame interval (frame interval), a frame size (frame size), transport latency (transport latency), a retransmission effort (retransmission effort, RTE), and a scheduling pattern (packing).

Specifically:
The frame interval is used to describe an interval of periodic data frames. In a BIG, values of intervals between data frames of all BISs are the same. At a data link layer, audio data is transmitted by using a data frame (data frame) as a data unit.

The frame size is used to describe a maximum length of the data frame.

The transport latency is used to describe a maximum time interval for transmitting BIS data at a same data layer between the broadcaster and the data receiver.

The retransmission effort is used to describe a quantity of times that each data protocol data unit (protocol data unit, PDU) is repeatedly transmitted.

The scheduling mode is used to describe a scheduling method of a plurality of subevents of the BIS. The scheduling method may be sequential (sequential), interleaved (interleaved), or unrestricted. This parameter is valid only when the BIG includes two or more BISs.

To improve convenience of audio sharing, the embodiments of this application provide an audio sharing method. The following uses the Bluetooth advertisement as an example to describe an implementation process in the embodiments of this application. As shown in FIG. 1, the first audio device 100 is an audio source, and is a mobile phone. The mobile phone includes a BLE audio advertising function. The second audio device 200 and the third audio device 300 are audio sinks. The second audio device 200 is a Bluetooth headset 1, and the third audio device 300 is a Bluetooth headset 2. Both the Bluetooth headset 1 and the Bluetooth headset 2 include a module for receiving a periodic advertisement and a BLE audio advertisement.

In the audio sharing method, the Bluetooth headset 1 does not need to establish an existing Bluetooth connection or an existing Wi-Fi connection to the mobile phone 100, and the Bluetooth headset 2 does not need to establish the existing Bluetooth connection or the existing Wi-Fi connection to the mobile phone 100. The first audio device 100 converts, based on a user operation, an audio file that is being played into a BLE audio advertisement for advertising. In a power-on state, the second audio device 200 receives the BLE audio advertisement of the first audio device 100 based on a user operation, and extracts audio data of the BLE audio advertisement for playing. In a power-on state, the third audio device 300 also receives the BLE audio advertisement of the first audio device 100 based on a user operation, and extracts audio data of the BLE audio advertisement for playing.

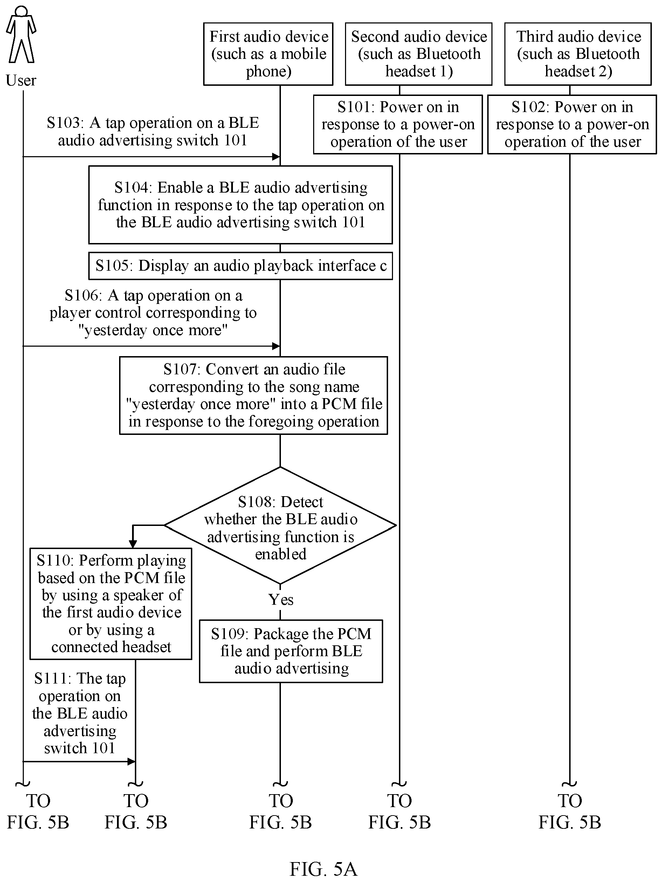

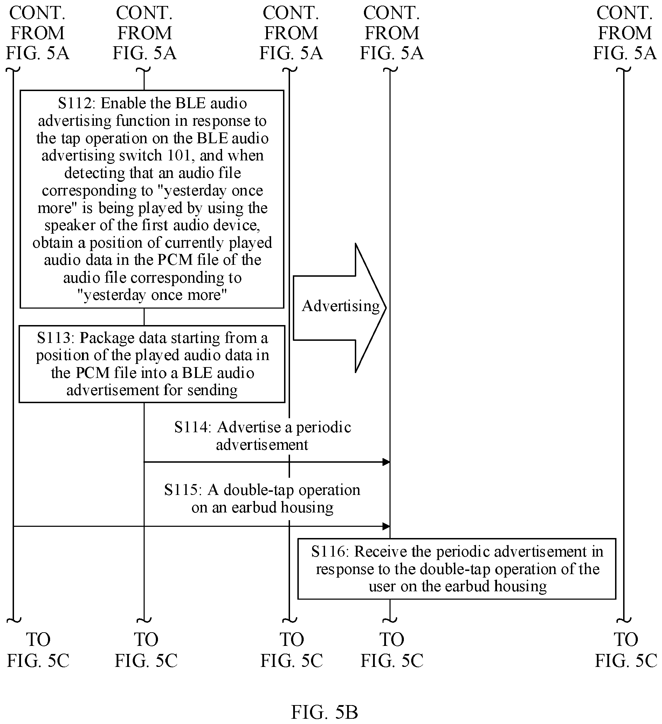

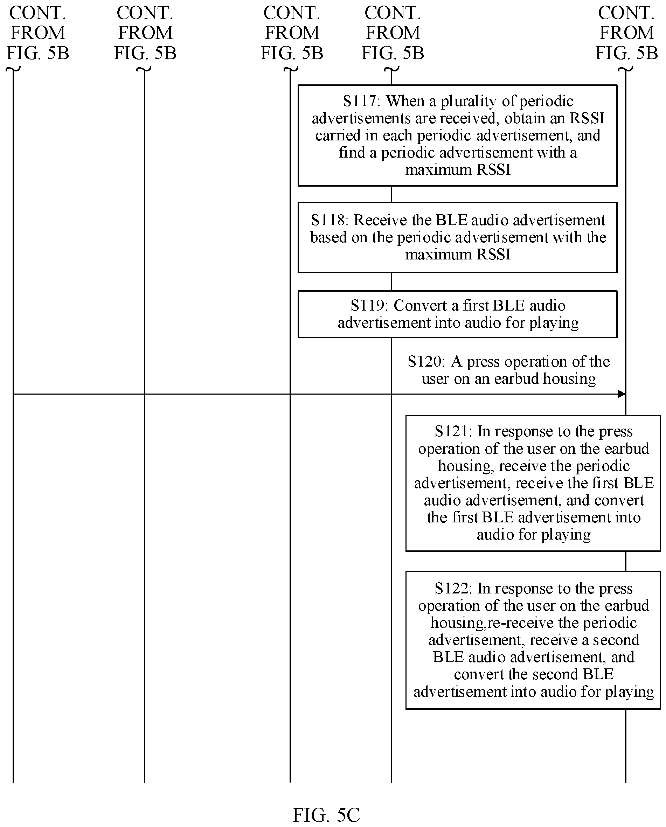

FIG. 5A, FIG. 5B, and FIG. 5C are a schematic flowchart of an audio sharing method according to an embodiment of this application. If a user wants to receive an audio advertising signal through the second audio device 200 and the third audio device 300 to share audio, the user first needs to power on the second audio device 200 and the third audio device 300. Refer to steps S101 and S102.

S101: In response to a power-on operation of the user on the second audio device 200, power on the second audio device 200.

S102: In response to a power-on operation of the user on the third audio device 300, power on the third audio device 300.

In this embodiment of this application, after the second audio device 200 (a headset 1) and the third audio device 300 (a headset 2) are powered on, a sensor on the headset may detect a user operation, and transmit a detected signal to a processor on the headset to perform a corresponding control function. For example, the headset may detect a double-tap operation, and receive a periodic advertisement and a BLE audio advertisement after detecting the double-tap operation. After the headset is powered on, the headset may further advertise a Bluetooth signal, to be discovered by another electronic device. The power-on operation may be an operation of pressing a physical button.

In some embodiments of this application, the power-on operation of the second audio device 200 only needs to be completed before step S114, for example, after S109. The power-on operation of the third audio device 300 only needs to be completed before step S117, for example, after S113.

If the user wants to share audio played on the first audio device 100 (for example, a mobile phone) with another device (for example, the headset 1 and the headset 2) for playing, the user may find and tap a BLE audio advertising switch 101 on the mobile phone to enable a BLE audio advertising function of the mobile phone. Refer to step S103.

S103: The first audio device 100 detects the tap operation on the BLE audio advertising switch 101.

S104: The first audio device 100 enables the BLE audio advertising function in response to the tap operation on the BLE audio advertising switch 101.

FIG. 6A-1 to FIG. 6B(d) are schematic diagrams of human-machine interaction interfaces according to this embodiment of this application. The user may turn on a BLE audio advertising switch in the interfaces in FIG. 6A-2 to FIG. 6B(d). Alternatively, the BLE audio advertising function may be enabled by using a physical button, for example, quickly pressing a volume button or a power button on a mobile phone twice. This is not limited in this embodiment of the present invention.

As shown in FIG. 6A-2, the user may find the BLE audio advertising switch 101 in an interface b of a settings application. As shown in FIG. 6A-1, a home screen a may include a navigation bar 102, a weather indicator 103, a calendar indicator 104, a status bar 105, and application icons. The navigation bar 102 may include a return control, a home screen control, a control for displaying a task window, and the like. The weather indicator 103 may be used to indicate a weather type, for example, cloudy to sunny or light rain, may be used to indicate information such as a temperature, or may be used to indicate a location. The calendar indicator 104 may be used to indicate a current time, for example, a date, a day of a week, and hour and minute information. The status bar 105 may include an operator name (for example, China Mobile), time, a Wi-Fi icon, signal strength, and a current battery level. The application icons may include, for example, a Camera icon, a Weibo icon, an Alipay icon, a WeChat icon, a Settings icon, a Camera icon, a Phone icon, a Messages icon, and a Contacts icon. When detecting, on the home screen a, a tap operation on the settings icon, the first audio device 100 displays the interface b of the settings application, as shown in FIG. 6A-2. The interface b of the settings application includes setting entries of a plurality of applications, and the plurality of applications include, such as a WLAN, Bluetooth (namely, BT), a mobile network, a hotspot, a notification and status bar. When the first audio device 100 detects a slide-up or slide-down operation of the user, the display 194 displays settings entrances of more applications. The interface b of the settings application further includes the BLE audio advertising switch 101.

In the interface b shown in FIG. 6A-2, the BLE audio advertising switch 101 shows that the BLE audio advertising function is in an off state. When the first audio device 100 detects a tap or slide operation of the user on the BLE audio advertising switch 101, the BLE audio advertising switch 101 shows that the BLE audio advertising function is in an on state, a Bluetooth chip is enabled (for example, powered on), a software module related to the BLE audio advertising function on the Bluetooth chip starts to run, and the first audio device 100 can perform BLE audio advertising. After the BLE audio advertising switch 101 is turned on, the user may further disable the BLE audio advertising function of the first audio device 100 by performing the tap or slide operation on the BLE audio advertising switch 101 on the display 194.

In some embodiments of this application, enabling or disabling of the Bluetooth chip is controlled by another switch, for example, in response to a tap on or a sliding power-on or power-off of a Bluetooth switch by the user. In the interface b of the settings application, the first audio device 100 displays a Bluetooth settings interface in response to a tap operation of the user on a Bluetooth settings entrance. The Bluetooth settings interface includes the Bluetooth switch. The Bluetooth switch indicates that the Bluetooth function is in an off state, and the Bluetooth chip is powered on when the first audio device 100 detects a tap or slide operation of the user on the Bluetooth switch. When the first audio device 100 detects the tap or slide operation of the user on the BLE audio advertising switch 101, the BLE audio advertising switch 101 shows that the BLE audio advertising function is in the on state, the software module related to the BLE audio advertising function on the Bluetooth chip starts to run, and the first audio device 100 can perform BLE audio advertising.

It may be understood that, the foregoing manner of entering the interface b of the settings application is not limited, and the interface b of the settings application may also be displayed in response to a touch and hold operation or another operation of the user on a BLE audio advertising icon in a pull-down menu.

In some embodiments of this application, the user may further find the BLE audio advertising switch 101 through some fixed entries. For example, these fixed entries may be a pull-down menu 201, a pull-up menu 202, a side menu 203, a floating menu 204, or the like shown in FIG. 6B(a) to FIG. 6B(d). This is not limited in this embodiment of this application. Generally, when the mobile phone runs any APP or on the home screen, the foregoing fixed entries may be entered. The pull-down menu 201 may be an interface displayed on the status bar after the first audio device 100 receives a pull-down operation. The pull-up menu 202 may be an interface displayed on the status bar after the first audio device 100 receives a pull-up operation.

In this embodiment of this application, the user may find, on the audio playback interface c of a player on the first audio device 100, an audio file that the user wants to share. Refer to step S105.

S105: The first audio device 100 displays the audio playback interface c.

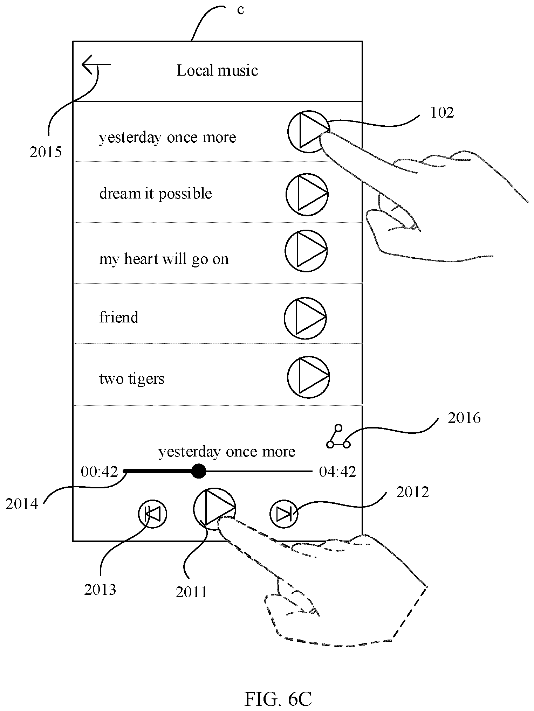

The player runs on the first audio device 100, and the first audio device 100 displays the audio playback interface c of the player. FIG. 6C is a schematic diagram of a human-machine interaction interface according to this embodiment of this application. As shown in FIG. 6C, the user may find, on the audio playback interface c, a song name that the user wants to play. The audio playback interface c includes a player control 2011, a switch to a next song control 2012, a switch to a previous song control 2013, a playback progress control 2014, a return control 2015, and a sharing control 2016. The audio playback interface further includes a plurality of song names, and each entry includes song names: yesterday once more, dream it possible, my heart will go on, friends, and two tigers. The audio playback interface may further display a playback progress of a current song played by the first audio device 100. For example, as shown in FIG. 6C, currently, the first audio device 100 displays that a playing position of a song "yesterday once more" is a 42-second position in an audio file. The player control 2011 is used to pause or play audio. The switch to a next song control 2012 is used to switch to play a next audio file. The switch to a previous song control 2013 is used to switch to play a previous audio file. The playback progress control 2014 is used to display and adjust a playback progress of an audio file. As shown in FIG. 6C, total duration of playing the audio file corresponding to the song name "yesterday once more" is 4 minutes and 42 seconds. If the player control 2011 is tapped, the first audio device 100 starts playing from the 42-second position of an audio file corresponding to "yesterday once more". When detecting a tap operation on the return control 2015, the first audio device 100 displays a previous interface of a current audio playback interface. The sharing control 2016 is configured to send an audio file or a link of the audio file to another device or application through an application (such as WeChat, QQ, Weibo, Facebook, Email, or Bluetooth).

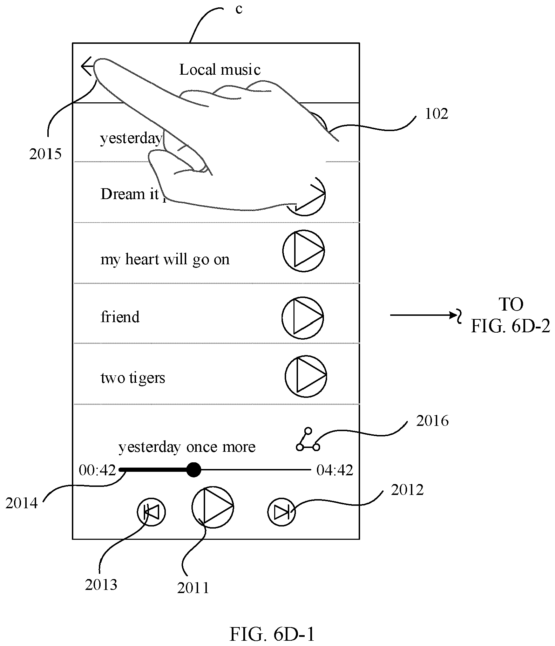

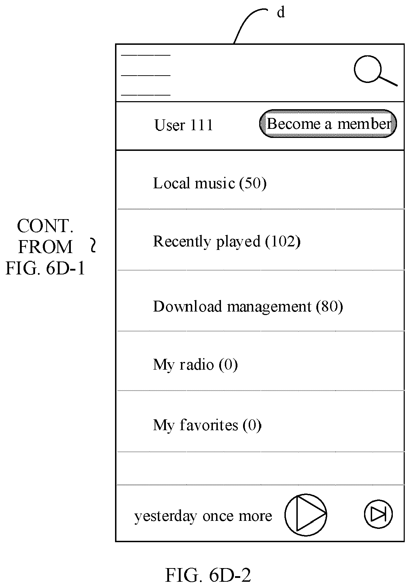

A previous interface of the audio playback interface c may be, for example, an audio playback interface d of the player, or may be, for example, the home screen. FIG. 6D-1 and FIG. 6D-2 are schematic diagrams of human-machine interaction interfaces according to this embodiment of this application. When detecting the tap operation on the return control 2015, the first audio device 100 displays the previous interface of the current audio playback interface c, namely, the audio playback interface d. As shown in FIG. 6D-2, the audio playback interface d includes a plurality of song name folders, including local music, recent play, download management, my radio station, and my favorites. Each song name folder may include a plurality of song names. The user may change, on the audio playback interface d, the song name folder. In the interface shown in FIG. 6D-1, the first audio device 100 may be in a state in which no audio is played, and the player control 2011 may display the state in which no audio is played. Alternatively, the first audio device 100 may be in a state in which audio is played, and the player control 2011 may display a playing state.

The audio playback interface c is an interface of a media file playback application. The first audio device 100 may receive a third operation of the user, and display the interface of the media file playback application. The third operation is, for example, a tap operation of the user on the player in an application icon on the home screen, and for another example, a tap operation of the user on a notification message of the player in a pull-down menu.

On the audio playback interface of the player, when the user finds the audio file corresponding to the song name "yesterday once more" to be played or advertised, the user may tap a player control corresponding to "yesterday once more". The audio file corresponding to the song name "yesterday once more" is a first audio file.

S106: The first audio device 100 detects the tap operation on the player control corresponding to the song name "yesterday once more" on the audio playback interface c.

S107: The first audio device 100 converts the audio file corresponding to the song name "yesterday once more" into a PCM file in response to the foregoing operation.

As shown in FIG. 6C, the player control corresponding to the song name "yesterday once more" may be the player control 102, or may be the player control 2011. If the user wants to play the audio file corresponding to the song name "yesterday once more" from the beginning, the user may tap the player control 102. In response to the tap operation on the player control 102, the first audio device 100 obtains the audio file corresponding to "yesterday once more", and converts the audio file from the beginning into the PCM file. The PCM file includes audio data starting from a 0-minute and 0-second data position of the playback progress. In a process of playing the audio file, if the user selects a control such as pause, fast forward, or rewind, for a process of converting into the PCM file, refer to a process of converting into the PCM file in an existing audio playback progress.

If the user wants to play the audio file corresponding to the song name "yesterday once more" from a position in which the audio file playing is paused, the user may tap the player control 2011. The player control 2011 is displayed as a paused state. In response to the tap operation on the player control 2011, the player control 2011 is displayed as a playing state. The first audio device 100 obtains the audio file corresponding to "yesterday once more", and obtains, from the audio file, audio data starting from a 0-minute and 42-second position of the playback progress. In a process of playing the audio file, if the user selects the control such as pause, fast forward, or rewind, for the process of converting into the PCM file, refer to the process of converting into the PCM file in the existing audio playback progress.

S108: The first audio device 100 detects whether the BLE audio advertising function is enabled. When it is detected that the BLE audio advertising function is enabled, step S109 is performed. When it is detected that the BLE audio advertising function is not enabled, step S110 is performed.

If the BLE audio advertising function enabled in step S104 is not disabled currently, the first audio device 100 detects that the BLE audio advertising function is enabled, and step S109 is performed. If the enabled BLE audio advertising function is disabled after step S104, the first audio device 100 detects that the BLE audio advertising function is disabled, and step S110 is performed.

In some embodiments, the enabled BLE audio advertising function may be disabled by the user by actively tapping the BLE audio advertising switch 101, or may be automatically disabled when the first audio device 100 detects that the BLE audio advertising function is not used to send audio data within preset time (for example, 5 minutes) or is not used to send audio data including valid content (for example, non-empty data sent through BLE audio advertising). For example, after the BLE audio advertising function is enabled in step S104 for five minutes, a tap operation on the player control corresponding to the audio file is still not detected. The first audio device 100 disables the BLE audio advertising function if within the five minutes, no PCM file is carried on a BLE audio advertisement for sending, or only empty data but no valid data is carried on a BLE audio advertisement for sending.

S109: The first audio device 100 packages the PCM file and performs BLE audio advertising.

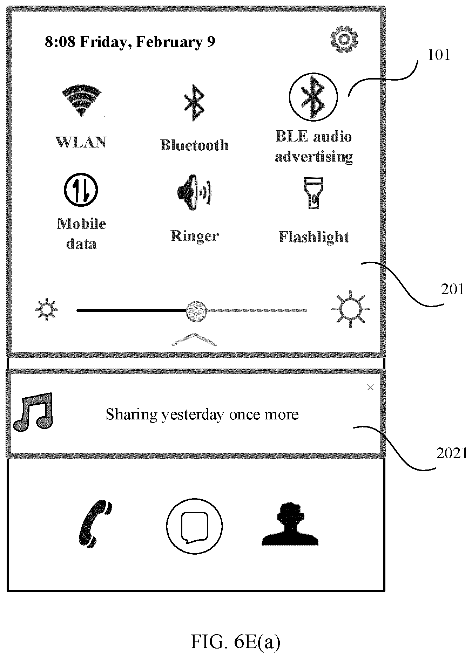

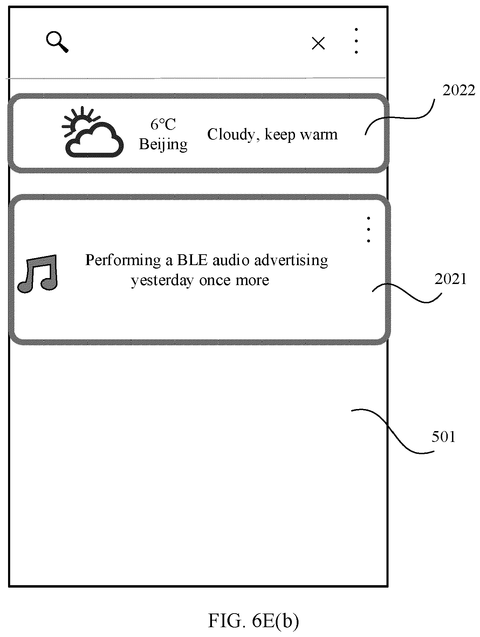

When the first audio device 100 is packaging the PCM file and performing BLE audio advertising, the first audio device 100 may display a prompt "Performing BLE audio advertising on yesterday once more" or "Sharing yesterday once more" on a notification bar or a leftmost screen, referring to the description in the accompanying drawings FIG. 6E(a) and FIG. 6E(b). The foregoing prompt may also be displayed on the pull-up menu 202, the side menu 203, the floating menu 204, the home screen, or the lock screen of the first audio device 100.

In some embodiments, a process in which the first audio device 100 processes the audio file to obtain a BLE audio advertisement is as follows: The first audio device 100 extracts audio data from the audio file. The audio data may be packaged into a PCM file. The PCM file includes audio data stored in a form of a digital signal. Then, the audio source reads description information of the audio file. The description information of the audio file includes: a sampling rate, duration, and a quantity of sound channels. Next, the first audio device 100 segments the PCM file and carries the segmented PCM file on the BLE audio advertisement for sending.

In S115, the second audio device 200 may start to receive the BLE audio advertisement and play the BLE audio advertisement by using an electro-acoustic transducer. Specifically, the second audio device 200 and the third audio device 300 may extract a BIS data packet of the BLE audio advertisement. The second audio device 200 and the third audio device 300 perform digital-to-analog conversion on the BIS data packet to obtain audio data in an analog signal form, and the second audio device 200 and the third audio device 300 convert the audio data in the analog signal form into audio for playing.

Optionally, when the first audio device 100 performs the BLE audio advertising, the first audio device 100 may synchronously play, by using a speaker of the first audio device 100 or by using a headset that has established a connection to the first audio device 100, the audio file corresponding to the song name "yesterday once more". The PCM file may be packaged into the BLE audio advertisement. Alternatively, the digital-to-analog conversion may be performed on the PCM file, and then the PCM file is played by the speaker 170A of the first audio device 100.

S110: The first audio device 100 performs playing based on the PCM file by using the speaker of the first audio device 100 or by using the headset that has established a connection to the first audio device 100.

If the first audio device 100 detects that the BLE audio advertising function is not enabled, the first audio device 100 detects, based on the current technology, whether a headset such as a wired headset or a Bluetooth headset is connected. If the first audio device 100 is connected to the wired headset through a data line or is connected to the Bluetooth headset through Bluetooth, the first audio device 100 plays audio based on the current technology by using the connected headset. If the first audio device 100 is not connected to a headset, the first audio device performs the playing based on the PCM file by using the speaker of the first audio device. In some embodiments, a process in which the first audio device 100 performs the playing based on the PCM file by using the speaker of the first audio device 100 is as follows: First, the first audio device 100 reads the description information of the audio file. The description information of the audio file includes: the sampling rate, the duration, and the quantity of sound channels. Then, the first audio device 100 converts the PCM file in a digital signal form into a file in an analog signal form based on the description information of the audio file. The foregoing digital-to-analog conversion process may be performed in a cycle, to continuously obtain data in the PCM file, add the data to an input queue, perform the digital-to-analog conversion, then obtain output data from an output queue obtained after the digital-to-analog conversion, and write the output data into the file in the analog signal form, until reading of the PCM file is completed and the digital-to-analog conversion is completed. Next, the first audio device 100 invokes the speaker 170A of the first audio device 100 to play the file in the analog signal form.

In a process in which the first audio device 100 plays, by using the speaker of the first audio device 100, the audio file corresponding to the song name "yesterday once more", if the user wants to share, through BLE audio advertising, the audio file that is being played, the user may tap the audio advertising switch 101 in the interface b of the settings application, the pull-down menu 201, the pull-up menu 202, the side menu 203, or the floating menu 204, and the first audio device performs step S111.

S111: The first audio device 100 detects the tap operation on the BLE audio advertising switch 101.

S112: The first audio device 100 enables the BLE audio advertising function in response to the tap operation on the BLE audio advertising switch 101, and when detecting that the audio file corresponding to "yesterday once more" is being played by using the speaker of the first audio device 100, the first audio device 100 obtains a position of currently played audio data in the PCM file of the audio file corresponding to "yesterday once more".

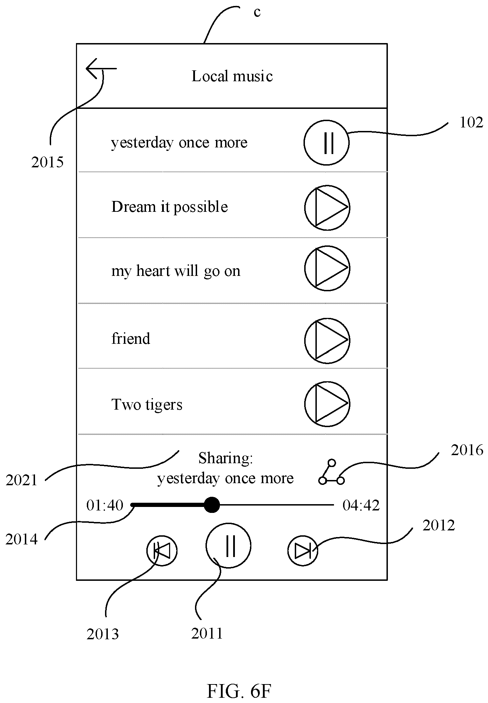

For example, when the first audio device 100 detects the tap operation on the BLE audio advertising switch 101, the first audio device 100 displays a music playback interface including a playback progress, as shown in FIG. 6F, and displays a prompt 2021 "Performing BLE audio advertising on yesterday once more" or "Sharing yesterday once more".

In some possible embodiments of this application, when the first audio device 100 detects the tap operation on the BLE audio advertising switch 101, the first audio device 100 may display a prompt "Sharing yesterday once more" in a notification bar. FIG. 6E(a) is a schematic diagram of a human-machine interaction interface according to this embodiment of this application. As shown in FIG. 6E(a), when running any APP or on a home screen, the first audio device 100 may display the pull-down menu 201 and the prompt 2021 in response to an operation of the user. When the first audio device 100 is packaging a PCM file corresponding to "yesterday once more" into a BLE audio advertisement for sending, the first audio device 100 may display "Sharing yesterday once more" in the prompt 2021.

In some possible embodiments of this application, as shown in FIG. 6E(b), when the first audio device 100 detects the tap operation on the BLE audio advertising switch 101, the first audio device 100 displays, on a leftmost screen 501 (the leftmost screen refers to a screen that is on a left side of a plurality of home screens of a system and that is used to display information, where the home screen is used to place an application or a widget icon), the prompt 2021 "Performing BLE audio advertising on yesterday once more". As shown in FIG. 6E(b), the leftmost screen 501 further displays a weather prompt 2022.

Certainly, the prompt "Performing BLE audio advertising on yesterday once more" or "Sharing yesterday once more" may also be displayed in the pull-up menu 202, the side menu 203, the floating menu 204, the home screen, or the lock screen of the mobile phone. This is not limited in this embodiment of this application.

If the first audio device 100 detects that the speaker of the first audio device 100 is playing 1-minute and 40-second data of the audio file corresponding to "yesterday once more", the first audio device 100 obtains a position of the 1-minute and 40-second audio data in the PCM file of the audio file corresponding to "yesterday once more". After the BLE audio advertising function is enabled, the first audio device 100 may continue playing by using the speaker of the first audio device 100 or the headset that has established a connection to the first audio device 100, or may pause playing (for example, stop at the 1-minute and 40-second position), and resume playing from the foregoing paused position after the BLE audio advertising function is stopped. However, the first audio device still displays a music playback progress (a BLE audio advertising progress may be used as a playback progress). FIG. 6F, FIG. 6G(a) and FIG. 6G(b) are separately schematic diagrams of an audio playback progress and an audio advertising progress according to this embodiment of this application. As shown in FIG. 6F, the player controls 2011 and 102 may still be displayed as the playing state, and the playback progress control 2014 still displays the BLE audio advertising progress as the playback progress. When the first audio device 100 performs the BLE audio advertising for three minutes, the user stops the BLE audio advertising function, and the first audio device 100 plays "yesterday once more" by using the speaker of the first audio device 100 or a connected headset. The first audio device 100 may start playing from a 3-minute audio progress by using the speaker of the first audio device 100 or the connected headset, or may start playing from a 1-minute and 40-second audio progress. If the playing starts from the 3-minute audio progress, the playback progress control 2014 continues to display the playback progress from the 3-minute audio progress. If the first audio device 100 starts playing from the 1-minute and 40-second audio progress by using the speaker of the first audio device 100 or the connected headset, the playback progress control 2014 continues to display the playback progress from the 1-minute and 40-second audio progress.

For example, as shown in FIG. 6G(a), the speaker of the first audio device 100 or the connected headset is playing the audio file corresponding to "yesterday once more", for example, the audio file is played from a 0-minute and 0-second position. When the speaker of the first audio device 100 or the connected headset plays the audio for 1 minute and 40 seconds, the first audio device 100 enables the BLE audio advertising function, and the speaker of the first audio device or the connected headset pauses playing at a 1-minute and 40-second position, and performs BLE audio advertising from the 1-minute and 40-second position of the playback progress. When the first audio device 100 performs BLE audio advertising until the progress reaches 3 minutes and 0 seconds, the user stops the BLE audio advertising function. In this case, the first audio device 100 continues to use the speaker of the first audio device 100 or the headset that has established a connection to the first audio device 100 to start playing "yesterday once more" from the 1-minute and 40-second position. For another example, as shown in FIG. 6G(b), when the first audio device 100 performs BLE audio advertising until the song progress reaches 3 minutes, the user stops the BLE audio advertising function. In this case, the first audio device 100 resumes playing, by using the speaker of the first audio device 100 or the headset that has established a connection to the first audio device 100, from audio data that has completed the advertisement when the BLE audio advertising stops. That is, the first audio device 100 may continue to use the speaker of the first audio device 100 or the headset that has established a connection to the first audio device 100 to start playing "yesterday once more" from the 3-minute and 0-second position.

In some other embodiments of this application, the first audio device 100 is playing "yesterday once more", and the BLE audio advertising function is enabled. In this case, the first audio device 100 stops using the speaker of the first audio device 100 or the connected headset to play "yesterday once more". The player control 2011 on the first audio device 100 may be displayed as a paused state, and the playback progress control 2014 displays a playback progress of "yesterday once more" when the BLE audio advertising function is enabled. For example, in the preceding example, the playback progress control 2014 indicates that the playing pauses at the 1-minute and 40-second position. When the first audio device 100 uses the speaker of the first audio device 100 or the connected headset to play "yesterday once more", the playback progress control 2014 displays the playback progress of the speaker of the first audio device 100 or the connected headset.

S113: The first audio device 100 packages data starting from a position of the played audio data in the PCM file into a BLE audio advertisement for sending.

For a process of packaging the PCM file into the BLE audio advertisement, refer to the description in step S109.

In this embodiment of this application, when performing BLE audio advertising, the first audio device 100 advertises a periodic advertisement by using different channels. The periodic advertisement is used to enable the second audio device 200 and the third audio device 300 to receive the BLE audio advertisement. Refer to S114.

S114: The first audio device 100 advertises a periodic advertisement.

For a specific description of the periodic advertisement, refer to the description of the concept of the periodic advertisement.

After the second audio device 200 is powered on by performing step S101, the second audio device 200 may detect the double-tap operation, and receive the periodic advertisement and the BLE audio advertisement after detecting the double-tap operation. Refer to steps S114 and S115.

S115: The second audio device 200 detects a double-tap operation of the user on an earbud housing.

In this embodiment of this application, for a process of detecting a double-tap operation by an acceleration sensor, refer to the description of the audio output device 30 shown in FIG. 4.

S116: The second audio device 200 receives the periodic advertisement in response to the double-tap operation of the user on the earbud housing.

The second audio device 200 receives the periodic advertisement in a specific period. A shorter distance between the second audio device 200 and a device advertising the periodic advertisement indicates a larger received signal strength indication (received signal strength indication, RSSI) of the periodic advertisement when the second audio device 200 receives the periodic advertisement. If the user wants to receive the BLE audio advertisement of the first audio device 100 by using the second audio device 200, the user makes the second audio device 200 close to the first audio device 100. If a plurality of periodic advertisements are received in the period, the second audio device 200 obtains an RSSI carried in each periodic advertisement, and finds a periodic advertisement with a maximum RSSI. Refer to step S117. Therefore, when the second audio device 200 is closer to the first audio device 100 than to another audio device, the periodic advertisement with the maximum RSSI found by the second audio device 200 should be the periodic advertisement of the first audio device 100.

If the second audio device 200 receives one periodic advertisement in the period, the second audio device 200 does not need to obtain the RSSI carried in the periodic advertisement, and directly receives the BLE audio advertisement based on the periodic advertisement.

S117: When the second audio device 200 receives a plurality of periodic advertisements, the second audio device 200 obtains an RSSI carried in each periodic advertisement, and finds a periodic advertisement with a maximum RSSI.

S118: The second audio device 200 receives a BLE audio advertisement based on the periodic advertisement with the maximum RSSI.

In this embodiment of this application, after finding the periodic advertisement with the maximum RSSI, or after starting to receive the BLE audio advertisement, the second audio device 200 stops receiving a periodic advertisement, and discards periodic advertisements other than the periodic advertisement with the maximum RSSI. When the periodic advertisement with the maximum RSSI is advertised by the first audio device 100, the BLE audio advertisement received by the second audio device 200 based on the periodic advertisement with the maximum RSSI is advertised by the first audio device 100. The BLE audio advertisement is a first BLE audio advertisement.

It may be understood that this embodiment of this application is described by using an example in which an RSSI of a BLE audio advertisement is detected. However, this embodiment of this application is not limited to this parameter, and another parameter, for example, quality of service (quality of service, QoS) or a signal-to-noise ratio (signal to noise ratio, SNR), may be used.

S119: The second audio device 200 converts the first BLE audio advertisement into audio for playing.

Specifically, the second audio device 200 extracts a BIS data packet of the BLE audio advertisement. Then, the second audio device 200 performs digital-to-analog conversion on the BIS data packet to obtain audio data in an analog signal form. Finally, the second audio device 200 converts the audio data in the analog signal form into audio for playing.

In a process in which the second audio device 200 converts the BLE audio advertisement into audio for playing, if the user wants to stop the second audio device 200 from playing the audio, the user may perform an operation on the first audio device 100 to stop the second audio device 200, or may perform an operation on the second audio device 200 to stop the second audio device 200.

Specifically, when the second audio device 200 is performing step S 119, the user may find and tap the BLE audio advertising switch 101 on the first audio device 100, to disable the BLE audio advertising function. The BLE audio advertising switch 101 is in an on state, and the first audio device 100 disables the BLE audio advertising function in response to the tap operation of the user on the BLE audio advertising switch 101. That is, the PCM file is stopped from being carried on the BLE audio advertisement. In this case, the second audio device 200 cannot receive the first BLE audio advertisement, and further stops playing the audio.

In some embodiments of this application, when the second audio device 200 is performing step S119, the user may further find and tap the player control 2011 on the first audio device 100, to stop the second audio device 200 from playing the audio. The player control 2011 is in a playing state, and the first audio device 100 stops performing BLE audio advertising in response to the tap operation of the user on the player control 2011. In this case, the second audio device 200 cannot receive the first BLE audio advertisement, and further stops playing the audio.

In a process in which the second audio device 200 converts the BLE audio advertisement into audio for playing, the second audio device 200 may power off the second audio device 200 in response to a power-off operation of the user on the second audio device 200. After the second audio device 200 is powered off, the second audio device 200 stops receiving the BLE audio advertisement. The second audio device 200 may further stop receiving the first BLE audio advertisement in response to a three-consecutive-tap operation of the user on the earbud housing of the second audio device 200, to stop playing the audio.

It may be understood that the three-consecutive-tap operation on the earbud housing to stop receiving the BLE audio advertisement is merely used to explain this embodiment of this application. The stopping receiving the BLE audio advertisement may further be triggered by another user operation, for example, a voice operation or a touch operation.

Similar to the second audio device 200, after the third audio device 300 is powered on by performing step S 102, the third audio device 300 may detect a press operation, and receive the periodic advertisement and the BLE audio advertisement after detecting the press operation. Refer to steps S117 and S118.

S120: The third audio device 300 detects a press operation of the user on an earbud housing.

S121: In response to the press operation of the user on the earbud housing, receive the periodic advertisement, receive the first BLE audio advertisement, and convert the first BLE advertisement into audio for playing.

When the third audio device 300 receives the plurality of periodic advertisements, the third audio device 300 obtains the RSSI carried in each periodic advertisement, and finds the periodic advertisement with the maximum RSSI, namely, the first BLE audio advertisement; receives the BLE audio advertisement based on the periodic advertisement; and converts the received BLE audio advertisement into audio for playing. Refer to the foregoing descriptions of S116 to S119. In this embodiment of this application, for a process of detecting a press operation by a pressure sensor, refer to the description of the audio output device 30 shown in FIG. 4.

In this embodiment of this application, when the first audio device 100 sends the first BLE audio advertisement, both the second audio device 200 and the third audio device 300 receive the first BLE audio advertisement and convert the first BLE audio advertisement into audio for playing. The second audio device 200 and the third audio device 300 synchronously receive the BLE audio advertisement based on the periodic advertisement sent by the first audio device 100, and play the audio, so as to implement synchronous audio playback.

In a possible implementation, in step S121, if the user finds that the audio played by the third audio device 300 is not the audio that the user wants to play, the user may re-perform a press operation to re-receive a BLE audio advertisement. For example, the audio that the user wants to play is audio from a device (for example, a device A) other than the first audio device 100, and the audio played by the third audio device 300 in step S121 is from the first audio device 100. In this case, the user may re-perform the press operation when the third audio device 300 plays the audio from the first audio device 100. If the user places the third audio device 300 at a position closer to the device A, the third audio device 300 responds to the press operation again, and a found periodic advertisement with a maximum RSSI should be advertised by the device A. Refer to step S122.

The re-performing the press operation is a third setting operation. The third setting operation may further be another user operation, for example, a voice operation or a touch operation.

S122: In response to the press operation of the user on the earbud housing, the third audio device 300 re-receives a periodic advertisement, receives a second BLE audio advertisement, and converts the second BLE advertisement into audio for playing.

When the third audio device 300 receives a plurality of periodic advertisements in the specific period, the third audio device 300 obtains an RSSI carried in each periodic advertisement, and finds a periodic advertisement with a maximum RSSI again.

If there is only one re-received periodic advertisement, and the re-received periodic advertisement is a second periodic advertisement different from the first periodic advertisement, the third audio device 300 receives at least one audio data packet of a BLE advertisement corresponding to the second periodic advertisement, and converts the at least one audio data packet of the BLE advertisement corresponding to the second periodic advertisement into audio for playing.

If there are at least two re-received periodic advertisements, in the at least two re-received periodic advertisements, a periodic advertisement with a maximum RSSI is a third periodic advertisement. If the third periodic advertisement is different from the first periodic advertisement, the third audio device 300 receives at least one audio data packet of a BLE advertisement corresponding to the third periodic advertisement, and converts the at least one audio data packet of the BLE advertisement corresponding to the third periodic advertisement into audio for playing. Alternatively, if the third periodic advertisement and the first periodic advertisement are not from a same device, the third audio device 300 receives at least one audio data packet of a BLE advertisement corresponding to the third periodic advertisement, and converts the at least one audio data packet of the BLE advertisement corresponding to the third periodic advertisement into audio for playing.

The periodic advertisement with the maximum RSSI found in step S121 is the first periodic advertisement. In a possible implementation, after finding the third periodic advertisement, the third audio device 300 detects whether the third periodic advertisement and the first periodic advertisement are from the same device. If it is detected that the third periodic advertisement and the first periodic advertisement are from the same device, the third audio device 300 detects whether a time interval between a current press operation (the press operation detected in step S122) and a previous detected press operation (the press operation detected in step S121) is less than or equal to a time threshold (for example, one minute). If the time interval between the current press operation and the previous detected press operation is less than or equal to one minute, the third audio device 300 receives, from the plurality of periodic advertisements in step S122, an advertisement whose RSSI is second only to that of the third periodic advertisement. If it is detected that the third periodic advertisement and the first periodic advertisement are not from the same device, or the third periodic advertisement and the first periodic advertisement are from the same device but the time interval between the current press operation and the previous press operation is greater than one minute, the third audio device 300 receives the BLE audio advertisement based on the third periodic advertisement, and plays the audio. In this way, the user may find, through a press operation, a BLE audio advertisement that the user wants to listen to.

The time threshold is a first threshold, and the first threshold is not limited to the example of 1 minute, and may be another duration.

In some other embodiments of this application, after finding the third periodic advertisement, the third audio device 300 detects whether the third periodic advertisement and the first periodic advertisement are a same advertisement. If it is detected that the third periodic advertisement and the first periodic advertisement are the same advertisement, the third audio device 300 detects whether a time interval between a current press operation (the press operation detected in step S122) and a previous detected press operation (the press operation detected in step S121) is less than or equal to a time threshold (for example, one minute). If the time interval between the current press operation and the previous detected press operation is less than or equal to one minute, the third audio device 300 determines, from the plurality of periodic advertisements in step S122, the third periodic advertisement. If it is detected that the third periodic advertisement and the first periodic advertisement are not the same advertisement, or the third periodic advertisement and the first periodic advertisement are the same advertisement but the time interval between the current press operation and the previous press operation is greater than one minute, the third audio device 300 receives the BLE audio advertisement based on the third periodic advertisement, and plays the audio.

It may be understood that an instruction for triggering the second audio device 200 and the third audio device 300 to receive the periodic advertisement is not limited to the double-tap operation and the press operation of the user on the earbud housing, and may further be another user operation, for example, a voice operation or a touch operation. The instruction for triggering the second audio device 200 and the third audio device 300 to receive the periodic advertisement is a first setting operation.

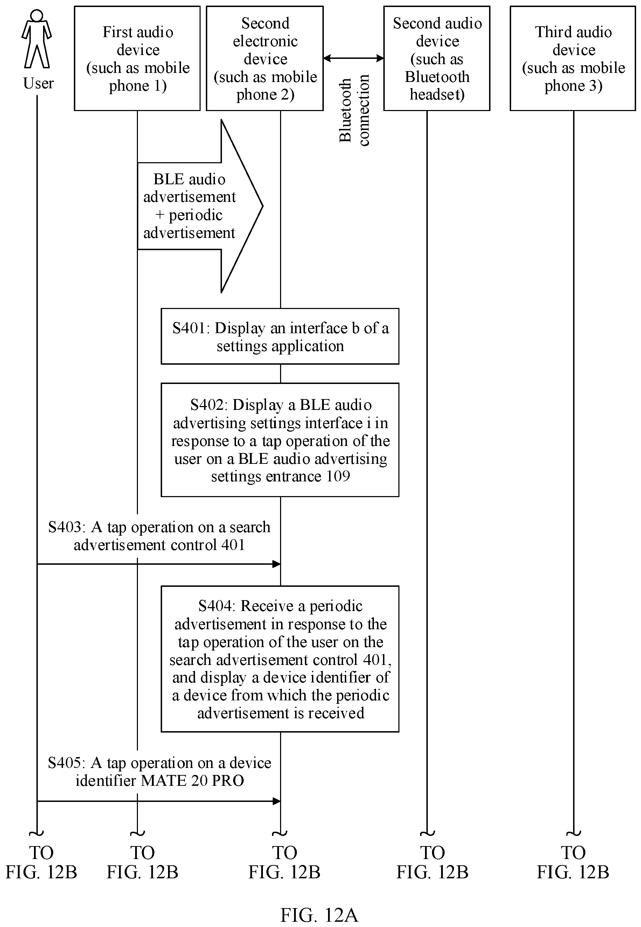

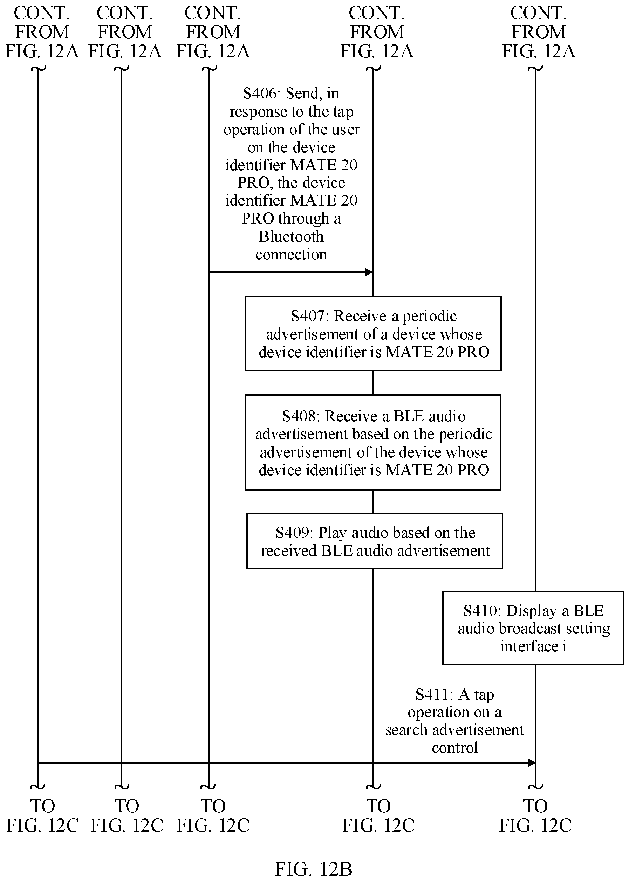

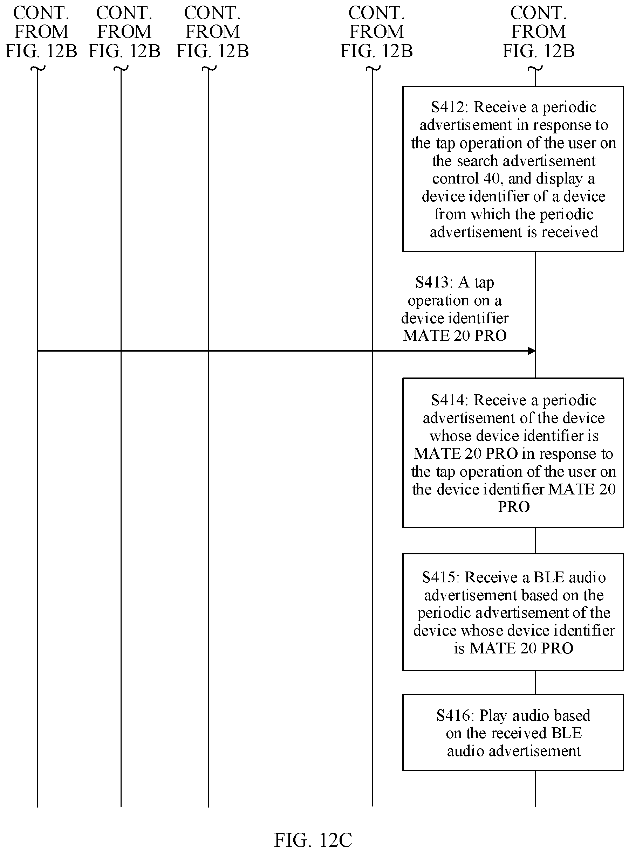

In this embodiment of this application, a first operation includes a tap operation of the user on the BLE audio advertising switch 101, to enable the BLE audio advertising switch. A second operation includes a tap operation of the user on a player control corresponding to a song name. The second operation further includes a tap operation on the song name. The first periodic advertisement includes one with optimal quality of at least two periodic advertisements when the at least two periodic advertisements are received. The first periodic advertisement further includes a periodic advertisement corresponding to a device identifier "MATE20 PRO" tapped by the user in the embodiment described in FIG. 12A to FIG. 12C.

In the foregoing audio sharing scenario, there is no need to establish communications connections between the first audio device 100 and the second audio device 200, and between the first audio device 100 and the third audio device 300, and the audio data is unidirectionally transmitted by the first audio device 100 to the audio output device 30. This can simplify an operation procedure of sharing an audio signal from the first audio device 100, and improve convenience of audio sharing.

In the foregoing example, the second audio device and the third audio device are Bluetooth headsets. However, this is not limited in this embodiment of this application. The second audio device and the third audio device may further be another audio output device, such as a sound box, including a function of detecting and receiving a BLE audio advertisement.

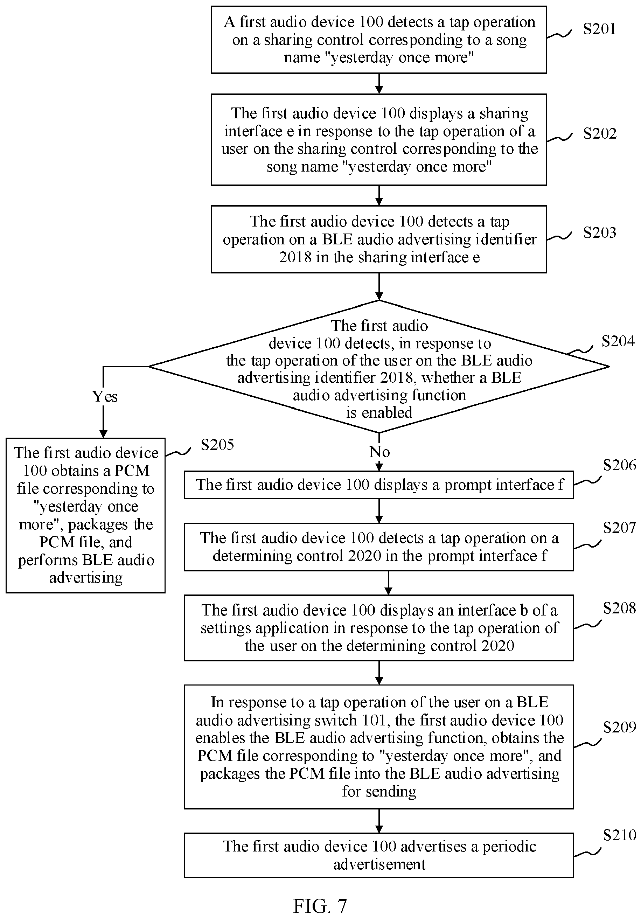

In some embodiments, the user may further enter an audio playback interface c of a player on a mobile phone, find and tap a sharing control on the audio playback interface c to enter a sharing interface, and find and enable a BLE audio advertising identifier on the sharing interface, to enable a BLE audio advertising function. Specifically, FIG. 7 is a schematic flowchart of an audio sharing method according to this embodiment of this application. As shown in FIG. 7, after step S105 in the audio sharing method shown in FIG. 5A, the audio sharing method further includes steps S201 to S209. S201: The first audio device 100 detects a tap operation on a sharing control corresponding to the song name "yesterday once more".

S202: The first audio device 100 displays a sharing interface e in response to the tap operation of the user on the sharing control corresponding to the song name "yesterday once more".

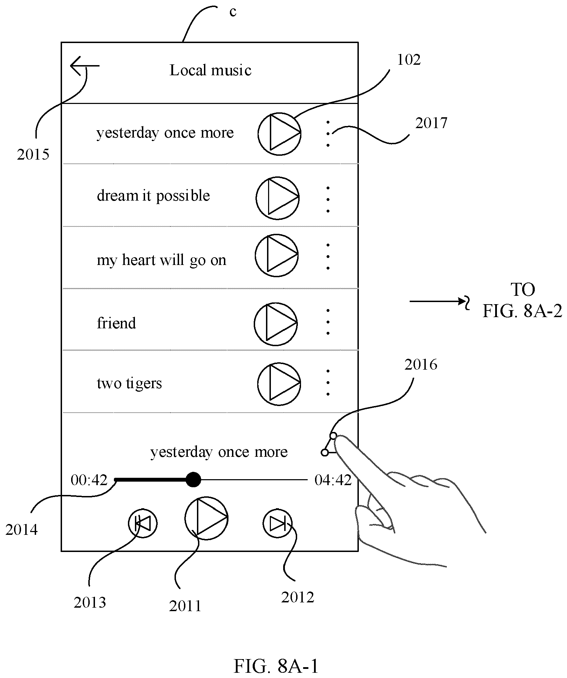

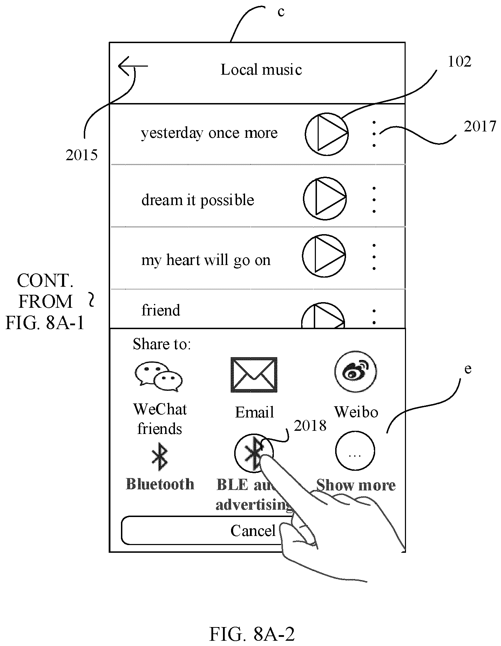

FIG. 8A-1 to FIG. 8B-3 are separately schematic diagrams of human-machine interaction interfaces according to this embodiment of this application. As shown in FIG. 8A-1, the player controls 2011 and 102 corresponding to "yesterday once more" on the audio playback interface c displays a play paused state. If the user wants to package an audio file starting from a current 0-minute and 42-second playback progress of an audio file corresponding to "yesterday once more" and send the packaged audio file on a BLE audio advertisement, the user may tap the sharing control 2016. When the first audio device 100 is playing "yesterday once more" in the audio playback interface c by using the speaker of the first audio device 100 or a headset connected to the first audio device 100 through Bluetooth, the player controls 2011 and 102 corresponding to "yesterday once more" in the audio playback interface c display a playing state, and the first audio device 100 may also display the sharing interface e in response to the tap operation of the user on the sharing control 2016.

As shown in FIG. 8B-1, the player controls 2011 and 102 corresponding to "yesterday once more" on the audio playback interface c displays a play paused state. The first audio device 100 plays "yesterday once more" without using the speaker of the first audio device 100 or the headset connected to the first audio device 100 through Bluetooth. Even if the current playing is paused to the 0-minute and 42-second playback progress, if the user wants to package the audio file starting from an initial 0-minute and 0-second playback progress of the audio file corresponding to "yesterday once more" and performs BLE audio advertising, the user may tap the sharing control 205. As shown in FIG. 8B-1, "yesterday once more" on the audio playback interface c is paused. The user first taps a player control 2017 on the audio playback interface c. The first audio device 100 displays an interface f1 in response to the tap operation of the user on the player control 2017. The interface f1 includes the sharing control 205. When the first audio device 100 is playing "yesterday once more" on the audio playback interface c by using the speaker of the first audio device 100 or the headset connected to the first audio device 100 through Bluetooth, player controls 2011 and 102 corresponding to "yesterday once more" on the audio playback interface c display a playing state. The first audio device 100 may also display the sharing interface e in response to the tap operation of the user on the sharing control 205, and in response to a tap operation of the user on a BLE audio advertising identifier 2018, when a BLE audio advertising function is enabled, package the audio file starting from the initial 0-minute and 0-second playback progress of the audio file corresponding to "yesterday once more" and perform BLE audio advertising.

As shown in FIG. 8A-1 and FIG. 8B-3, a plurality of application icons are displayed on the sharing interface e, including a WeChat friend icon, an Email icon, a Weibo icon, a Bluetooth icon, a BLE audio advertising icon, and the like. A more icon is used to display more other application icons. A cancel control is used to exit the sharing interface e and return to the audio playback interface c.

S203: The first audio device 100 detects the tap operation on the BLE audio advertising identifier 2018 in the sharing interface e.

S204: The first audio device 100 detects, in response to the tap operation of the user on the BLE audio advertising identifier 2018, whether the BLE audio advertising function is enabled. When it is detected that the BLE audio advertising function is enabled, step S205 is performed. When it is detected that the BLE audio advertising function is not enabled, step S206 is performed.

Referring to step S104, if the BLE audio advertising function enabled in step S104 is not disabled currently, the first audio device 100 detects that the BLE audio advertising function is enabled, and step S205 is performed. If the BLE audio advertising function enabled in step S104 is disabled, the first audio device 100 detects that the BLE audio advertising function is disabled, and step S206 is performed.

S205: The first audio device 100 obtains a PCM file corresponding to "yesterday once more", packages the PCM file, and performs BLE audio advertising.

If the user taps the sharing control 2016, the first audio device 100 obtains a PCM file starting from the 0-minute and 42-second position of the audio file corresponding to "yesterday once more". If the user taps the sharing control 205, the first audio device 100 obtains a PCM file starting from the 0-minute and 0-second position of the audio file corresponding to "yesterday once more".

For a description of obtaining the PCM file, refer to the description in step S107 in the embodiment shown in FIG. 5A and description of a concept PCM file.

In some embodiments, when the first audio device 100 is playing the audio file corresponding to "yesterday once more" by using the speaker of the first audio device 100 or by using the headset connected to the first audio device 100, and the first audio device 100 detects the tap operation of the user on the sharing control 2016, the first audio device 100 packages a PCM file to be played by the speaker of the first audio device 100 or the connected headset, and performs BLE audio advertising. The speaker of the first audio device 100 or the connected headset may still continue to play audio.

S206: The first audio device 100 displays a prompt interface f2.

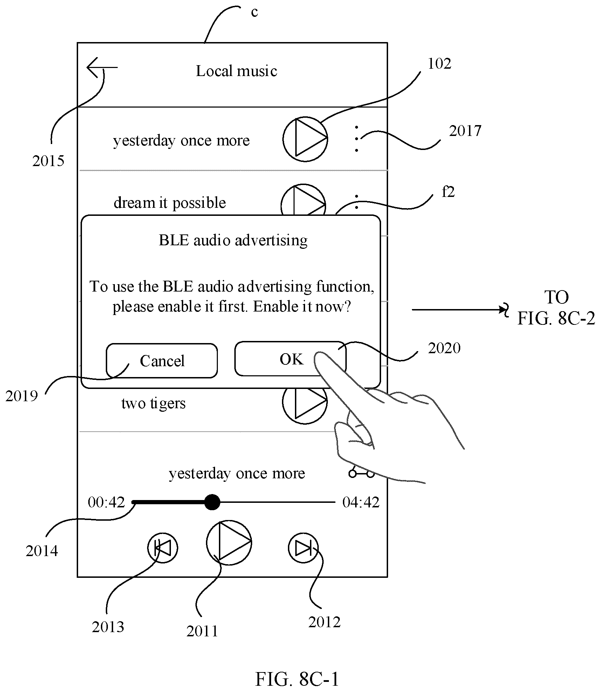

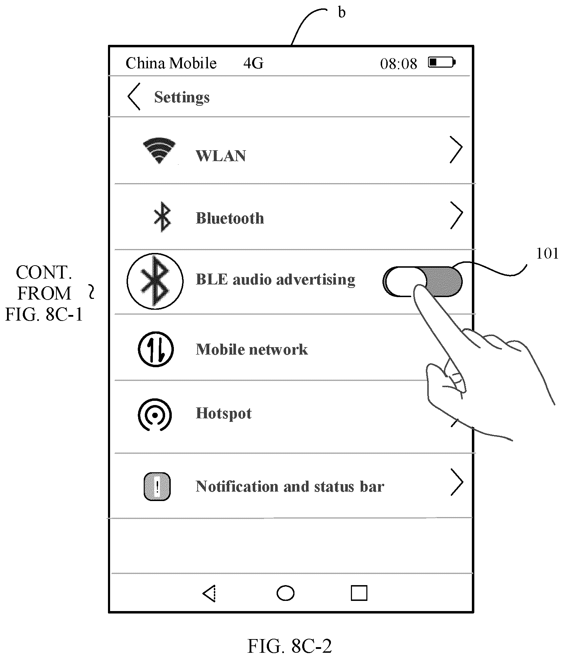

FIG. 8C-1 and FIG. 8C-2 are schematic diagrams of human-machine interaction interfaces according to this embodiment of this application. As shown in FIG. 8C-1, the player controls 2011 and 102 corresponding to "yesterday once more" on the audio playback interface c of the first audio device displays a play paused state. When the player controls 2011 and 102 corresponding to "yesterday once more" on the audio playback interface c of the first audio device displays a playing state, the first audio device 100 may also detect that the BLE audio advertising function is disabled, and displays the prompt interface f2. A prompt "To use the BLE audio advertising function, enable it first. Enable it now?" is displayed on the prompt interface f2. The prompt interface f2 further displays a cancel control 2019 and a determining control 2020. When detecting a tap operation of the user on the cancel control 2019 on the prompt interface f2, the first audio device 100 exits the prompt interface f2 and returns to the audio playback interface c.

If the user wants to share an audio file through BLE audio advertising, the user may tap the determining control 2020 on the prompt interface f2 to enter an interface b of a settings application.

S207: The first audio device 100 detects the tap operation on the determining control 2020 on the prompt interface f2.

S208: The first audio device 100 displays the interface b of the settings application in response to the tap operation of the user on the determining control 2020.

As shown in FIG. 8C-1 and FIG. 8C-2, when the first audio device 100 detects the tap operation of the user on the determining control 2020 on the prompt interface f2, the first audio device 100 displays the interface b of the settings application. For a description of the interface b of the settings application, refer to the foregoing description of FIG. 6A-2. If the user wants to share an audio file through BLE audio advertising, the user may tap the BLE audio advertising switch 101 in the interface b of the settings application. The BLE audio advertising switch 101 is displayed as an off state, and in response to the tap operation of the user on the BLE audio advertising switch 101, the BLE audio advertising switch 101 is displayed as an enabled state.

S209: In response to the tap operation of the user on the BLE audio advertising switch 101, the first audio device 100 enables the BLE audio advertising function, obtains the PCM file corresponding to "yesterday once more", and packages the PCM file into a BLE audio advertisement for sending.

S210: The first audio device 100 advertises a periodic advertisement.

In this embodiment of this application, for a description of obtaining the PCM file, refer to the description in step S107 in the embodiment shown in FIG. 5A and the description of the concept PCM file.

For a process in which the second audio device 200 and the third audio device 300 receive the BLE audio advertisement, refer to a specific description in the audio sharing method shown in FIG. 5A, FIG. 5B, and FIG. 5C.

In some embodiments of this application, the BLE audio advertising switch and the audio advertising function may be implemented in a separate application. The application may be implemented by using an Android package (android package, APK). If the user wants to share audio on the first audio device 100 with another device through BLE audio advertising, the user may find an audio sharing icon 106 on a home screen, and perform an operation on an application interface of the audio sharing icon 106 to share the audio through BLE audio advertising.

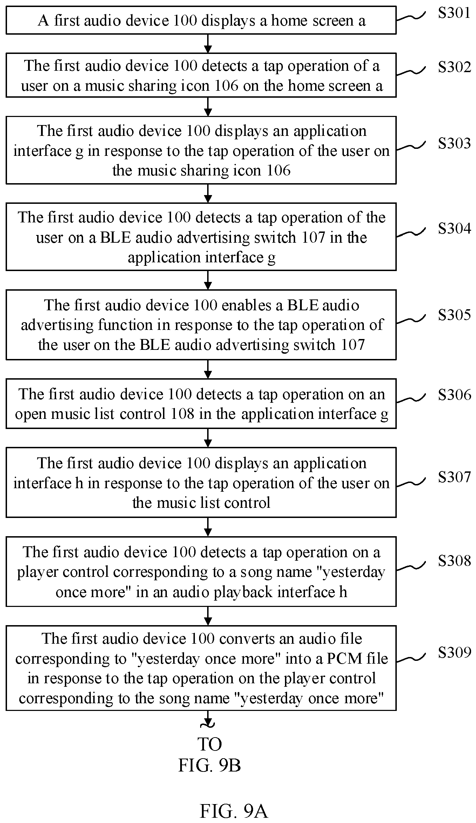

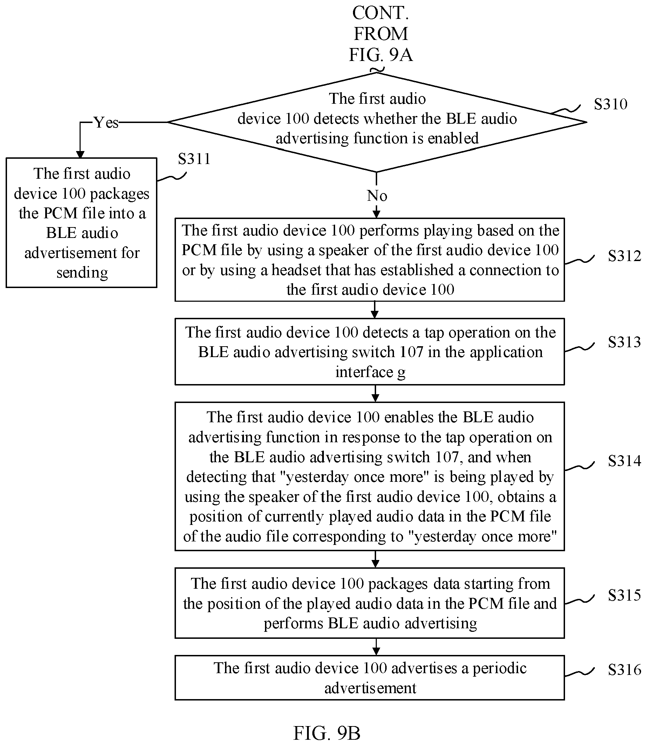

Specifically, FIG. 9A and FIG. 9B are a schematic flowchart of an audio sharing method according to an embodiment of this application. As shown in FIG. 9A, the audio sharing method includes steps S301 to S316.

S301: The first audio device 100 displays a home screen a.

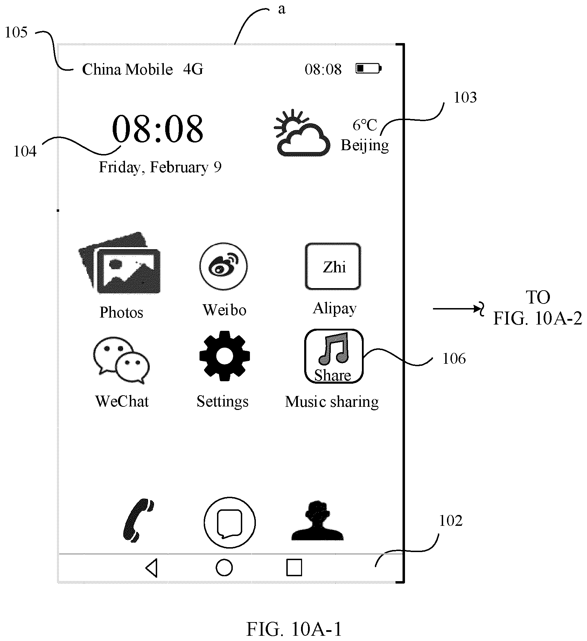

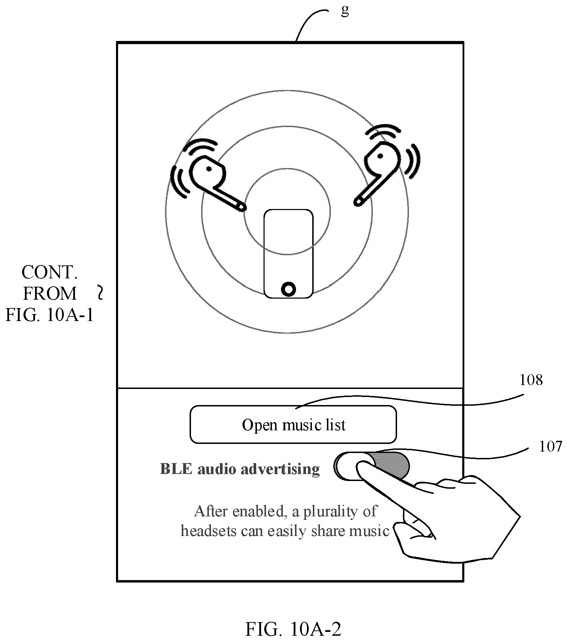

FIG. 10A-1 and FIG. 10A-2 are schematic diagrams of human-machine interaction interfaces according to this embodiment of this application. As shown in FIG. 10A-1, on the home screen a, application icons include a music sharing icon 106, and the music sharing icon 106 provides an application interface entry for an application with a BLE audio advertising function. For specific descriptions of the status bar 105, the navigation bar 102, the weather indicator 103, the calendar indicator 104, and application icons on the home screen a, refer to specific descriptions in FIG. 6A-1.

S302: The first audio device 100 detects a tap operation of the user on the music sharing icon 106 on the home screen a.

S303: The first audio device 100 displays an application interface g in response to the tap operation of the user on the music sharing icon 106.

As shown in FIG. 10A-2, the application interface g displays: a BLE audio advertising switch 107 and an open music list control 108. In the application interface g, a prompt of the BLE audio advertising switch 107 is further displayed: "After the switch is turned on, a plurality of headsets can easily share music".

S304: The first audio device 100 detects a tap operation of the user on the BLE audio advertising switch 107 in the application interface g.

S305: The first audio device 100 enables the BLE audio advertising function in response to the tap operation of the user on the BLE audio advertising switch 107.

As shown in FIG. 10A-2, the BLE audio advertising switch 107 shows that the BLE audio advertising function is in an off state. When the first audio device 100 detects a tap or slide operation of the user on the BLE audio advertising switch 107, the BLE audio advertising switch 107 shows that the BLE audio advertising function is in an on state, a Bluetooth chip is powered on, a software module related to the BLE audio advertising function on the Bluetooth chip starts to run, and the first audio device 100 starts to perform BLE audio advertising. After the BLE audio advertising switch 107 is turned on, the user may further disable the BLE audio advertising function of the first audio device 100 by performing the tap or slide operation on the BLE audio advertising switch 107.

In some embodiments of this application, the Bluetooth chip is powered on in response to a tap or slide operation of the user on a Bluetooth switch on a Bluetooth settings interface. The BLE audio advertising function is enabled in response to the tap or slide operation of the user on the BLE audio advertising switch 107.

The user may find, through the open music list control 108, a song name that the user wants to advertise or play.

S306: The first audio device 100 detects a tap operation on the open music list control 108 in the application interface g.

S307: The first audio device 100 displays an application interface h in response to the tap operation of the user on the music list control 108.

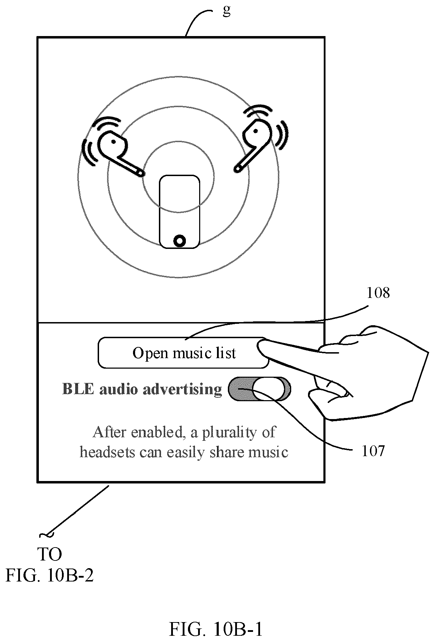

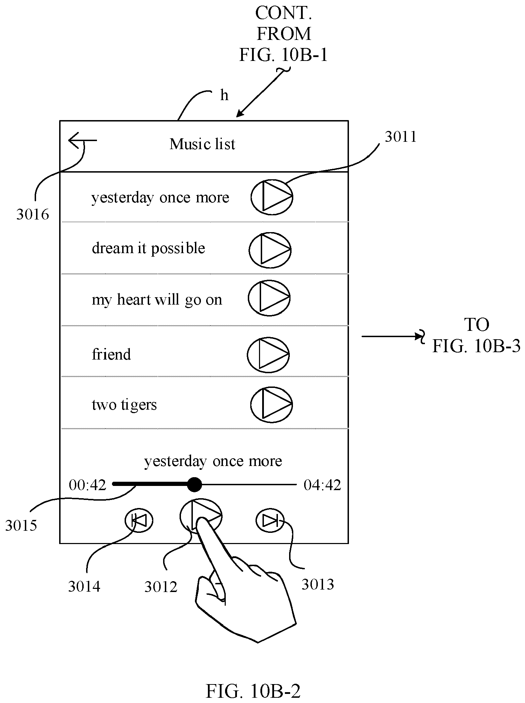

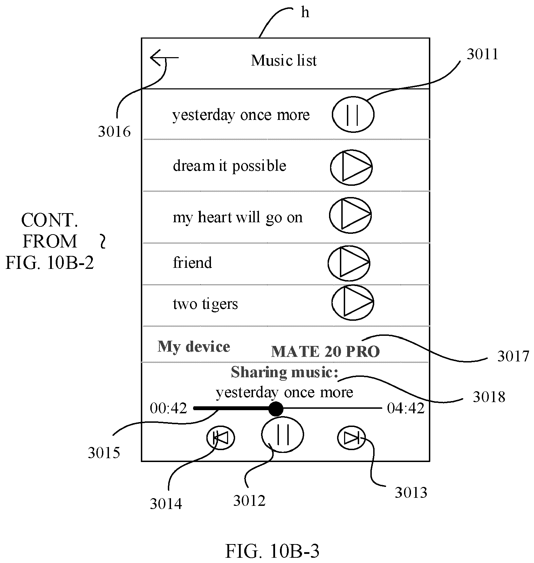

FIG. 10B-1 to FIG. 10B-3 are schematic diagrams of human-machine interaction interfaces according to this embodiment of this application. As shown in FIG. 10B-2, the application interface h may include: a player control 3011, a player control 3012, a switch to a next song control 3013, a switch to a previous song control 3014, a playback progress control 3015, and a return control 3016. The application interface h displays zero, one or more song names, and respective corresponding player controls. A song name "Dream it possible" is also displayed in the application interface h.

For details about the player control 3011, the player control 3012, the switch to a next song control 3013, the switch to a previous song control 3014, the playback progress control 3015, and the return control 3016, refer to specific descriptions of the player control 102, the player control 2011, the switch to a next song control 2012, the switch to a previous song control 2013, the playback progress control 2014, and the return control 2015 in FIG. 6C.

When the first audio device 100 does not play audio by using a speaker of the first audio device 100 or a connected headset, and does not perform BLE audio advertising, the player control 3011, the player control 3012, and player controls corresponding to other song names all display a play stopped state. The first audio device 100 may play audio by using the speaker of the first audio device 100 or the connected headset in response to a tap operation of the user on the player control, or perform BLE audio advertising in response to a tap operation of the user on the player control. For details, refer to steps S308 to S316.

S308: The first audio device 100 detects a tap operation on a player control corresponding to a song name "yesterday once more" on an audio playback interface h.

S309: The first audio device 100 converts an audio file corresponding to the song name "yesterday once more" into a PCM file in response to the tap operation on the player control corresponding to "yesterday once more".

S310: The first audio device 100 detects whether the BLE audio advertising function is enabled. When it is detected that the BLE audio advertising function is enabled, step S311 is performed. When it is detected that the BLE audio advertising function is not enabled, step S312 is performed.

S311: The first audio device 100 packages the PCM file into a BLE audio advertisement for sending.

As shown in FIG. 10B-3, when the first audio device 100 performs BLE audio advertising, a prompt 3017: My device MATE 20 PRO and a prompt 3018: Sharing music: yesterday once more are displayed in the application interface h.

S312: The first audio device 100 performs playing based on the PCM file by using the speaker of the first audio device 100 or by using the headset that has established a connection to the first audio device 100.

For descriptions of steps S308 to S312, refer to steps S106 to S110 in the embodiment shown in FIG. 5A.

When the first audio device 100 is playing, in a music sharing application, "yesterday once more" by using the speaker of the first audio device 100 or by using the headset that has established a connection to the first audio device 100, if the user wants to share the audio file that is being played through advertising, the user may find the BLE audio advertising switch 107 in the application interface g.

S313: The first audio device 100 detects a tap operation on the BLE audio advertising switch 107 in the application interface g.

S314: The first audio device 100 enables the BLE audio advertising function in response to the tap operation on the BLE audio advertising switch 107, and when detecting that an audio file corresponding to "yesterday once more" is being played by using the speaker of the first audio device 100, the first audio device 100 obtains a position of currently played audio data in the PCM file of the audio file corresponding to "yesterday once more".

FIG. 10C-1 to FIG. 10C-3 are schematic diagrams of human-machine interaction interfaces according to this embodiment of this application. As shown in FIG. 10C-1, when the first audio device 100 plays audio by using the speaker of the first audio device 100 or by using the connected headset, a prompt 3019: Playing music: yesterday once more is displayed in the application interface h. The player controls 3011 and 3012 corresponding to the song name "yesterday once more" displays a playing state. The user may tap the return control 3016, and the first audio device 100 displays the application interface g in response to the tap operation of the user on the return control 3016. As shown in FIG. 10C-2, a prompt 3020: Playing music: yesterday once more is displayed in the application interface g.

The BLE audio advertising switch 107 in the application interface g is displayed as an off state, and in response to the tap operation of the user on the return control 3016, the BLE audio advertising switch 107 is displayed as an on state. The first audio device 100 enables the BLE audio advertising function. As shown in FIG. 10C-3, a prompt 3021: Sharing music: yesterday once more is displayed in the application interface g, and the prompt 3020: Playing music: yesterday once more is not displayed.

In addition, when the first audio device 100 is performing BLE audio advertising, the first audio device 100 may display a prompt "Performing BLE audio advertising on yesterday once more" or "Sharing yesterday once more" on a notification bar or a leftmost screen, referring to FIG. 6E(a) and FIG. 6E(b). The foregoing prompt may also be displayed on the pull-up menu 202, the side menu 203, the floating menu 204, the home screen, or the lock screen of the first audio device 100.

S315: The first audio device 100 packages data starting from a position of the played audio data in the PCM file and performs BLE audio advertising.

S316: The first audio device 100 advertises a periodic advertisement.

For descriptions of steps S315 and S316, refer to steps S113 and S114 in the embodiment shown in FIG. 5B.

In this embodiment of this application, in a process in which the first audio device 100 performs BLE audio advertising, if the user wants to stop the BLE audio advertising, the user may perform an operation on the first audio device 100 to stop the BLE audio advertising. The user may find and tap the BLE audio advertising switch 107 or the player control 3012 on the first audio device 100, to disable the BLE audio advertising function.

In the audio sharing method shown in FIG. 9A and FIG. 9B, in an interface of the music sharing application, the user may play audio, share audio through BLE advertising, stop playing the audio, and stop sharing the audio through BLE advertising, so that audio sharing and other operations can be completed without switching the application, thereby providing convenience for the user.

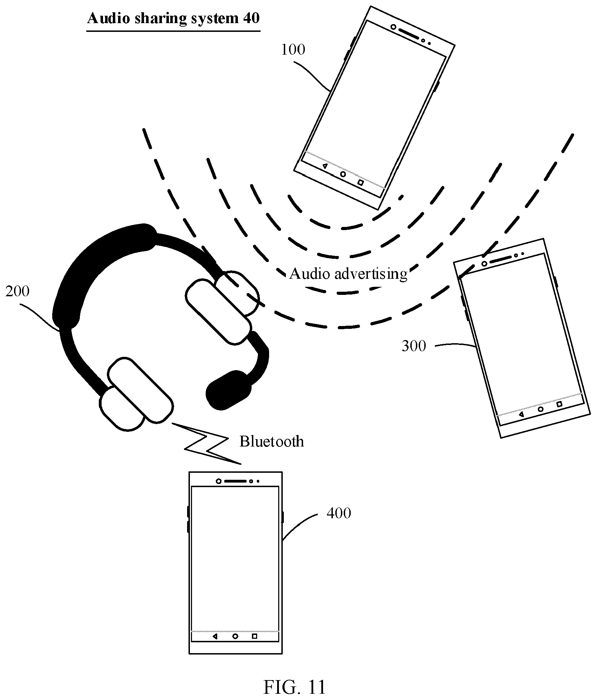

FIG. 11 is a schematic structural diagram of another audio sharing system 40 according to an embodiment of this application. As shown in FIG. 11, in the audio sharing system 40, the first audio device 100 is an audio source, and is a mobile phone 1. The second audio device 200 and the third audio device 300 are audio sinks. The second audio device 200 is a Bluetooth headset, and the third audio device 300 is a mobile phone 3. For schematic structural diagrams of the second audio device 200 and the third audio device 300, refer to the schematic structural diagram of the electronic device shown in FIG. 2.

The second audio device 200 establishes a wireless connection to a second electronic device 400. The wireless connection is, for example, an existing Bluetooth connection. The second electronic device 400 is, for example, a mobile phone 2. For a schematic structural diagram of the second electronic device 400, refer to the schematic structural diagram of the electronic device shown in FIG. 2. The second electronic device 400 provides an interaction interface for the second audio device 200 to access a BLE audio advertisement, and the second electronic device 400 receives a periodic advertisement.

In the audio sharing system 40, neither the second audio device 200 nor the second electronic device 400 needs to establish an existing Bluetooth connection or an existing Wi-Fi connection to the first audio device 100, and the third audio device 300 also does not need to establish the existing Bluetooth connection or the existing Wi-Fi connection to the first audio device 100.

Based on the audio sharing system 40 shown in FIG. 11, refer to FIG. 12A to FIG. 12C. FIG. 12A to FIG. 12C are a schematic flowchart of an audio sharing method according to this embodiment of this application. In the audio sharing method, the first audio device 100 performs the methods shown in FIG. 5A, FIG. 5B, FIG. 5C, FIG. 7, FIG. 9A, and FIG. 9B to perform BLE audio advertising and periodic advertising. In the audio sharing method, the second audio device 200 and the third audio device receive the BLE audio advertisement through steps S401 to S415. A related user interface of the audio sharing method is set in an interface b of a settings application.

S401: The second electronic device 400 displays the interface b of the settings application.

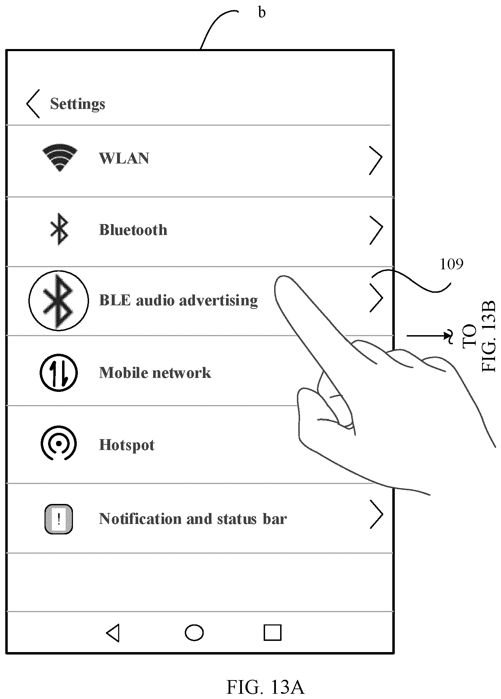

FIG. 13A to FIG. 13D are schematic diagrams of human-machine interaction interfaces according to this embodiment of this application. As shown in FIG. 13A, a BLE audio advertising settings entrance 109 is further displayed in the interface b of the settings application.

S402: The second electronic device 400 displays a BLE audio advertising settings interface i in response to a tap operation of the user on the BLE audio advertising settings entrance 109.

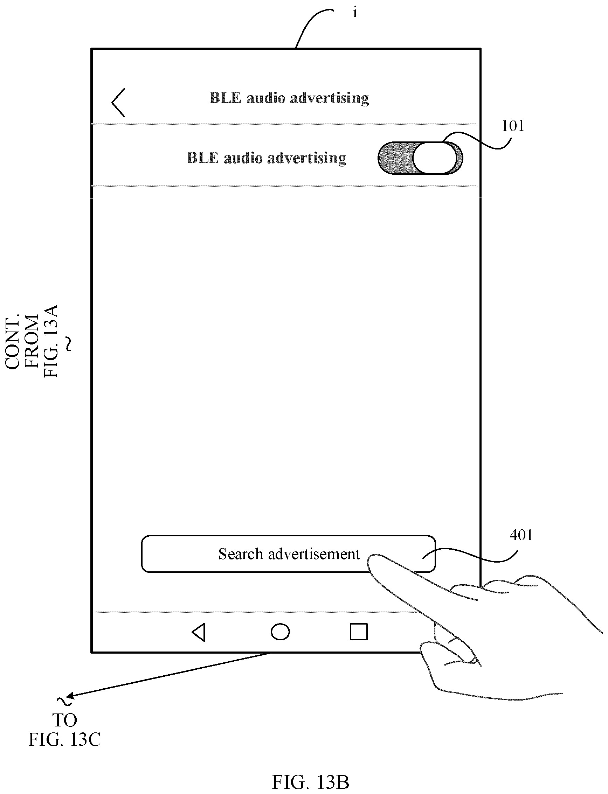

As shown in FIG. 13B, the BLE audio advertising switch 101 and a search advertisement control 401 is further displayed in the BLE audio advertising settings interface i. If the user wants to receive a periodic advertisement by using the second electronic device 400 to further receive a BLE audio advertisement, the user may tap the search advertisement control 401.

S403: The second electronic device 400 detects the tap operation on the search advertisement control 401.

S404: The second electronic device 400 receives a periodic advertisement in response to the tap operation of the user on the search advertisement control 401, and displays a device identifier of a device from which the periodic advertisement is received.

In response to the tap operation of the user on the search advertisement control 401, a Bluetooth chip is powered on, a software module related to a BLE audio advertising function on the Bluetooth chip starts to run, and the second electronic device 400 starts to receive the periodic advertisement.

In some embodiments of this application, the Bluetooth chip is powered on in response to a tap or slide operation of the user on the BLE audio advertising switch 101. In response to the tap operation of the user on the search advertisement control 401, a software module related to a BLE audio advertising function on the Bluetooth chip starts to run, and the second electronic device 400 starts to receive the periodic advertisement.

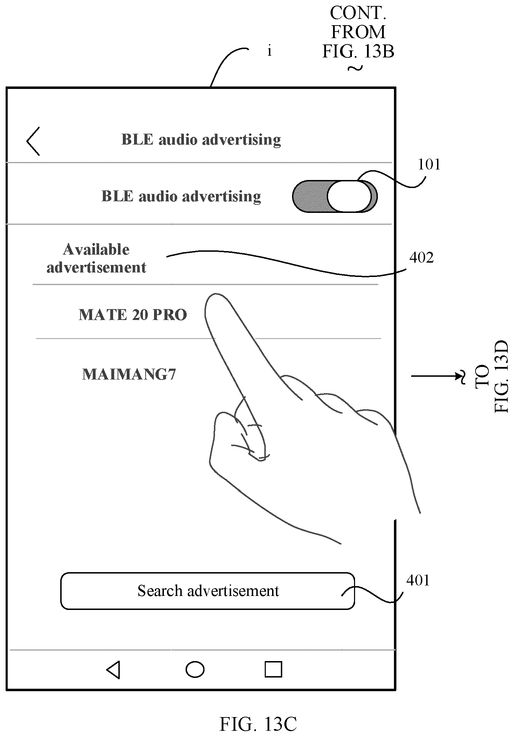

As shown in FIG. 13C, the BLE audio advertising settings interface i of the second electronic device 400 displays an available advertisement label 402 and detected device identifiers: MATE 20 PRO and MAIMANG7.

The user learns, from the first audio device 100, that the device identifier is MATE 20 PRO, and the user may tap the device identifier MATE 20 PRO in the BLE audio advertising settings interface i displayed by the second electronic device 400.

In some implementations of this application, there is no need to set the search advertisement control 401 in the interface of the settings application or an interface of a music sharing application. The second electronic device 400 receives the periodic advertisement in response to an operation of the user to turn on the BLE audio advertising switch 101, and displays the device identifier of the device from which the periodic advertisement is received.

S405: The second electronic device 400 detects the tap operation of the user on the device identifier MATE 20 PRO.

S406: The second electronic device 400 sends, in response to the tap operation of the user on the device identifier MATE 20 PRO, the device identifier MATE 20 PRO to the second audio device 200 through the Bluetooth connection.

S407: The second audio device 200 receives a periodic advertisement of a device corresponding to the device identifier MATE 20 PRO.

In some other embodiments of this application, in response to the tap operation of the user on the device identifier MATE 20 PRO, the second electronic device 400 may further send, to the second audio device 200, a parameter (such as a frame interval, a frame size, transport latency, a retransmission effort, or a scheduling pattern) included in the periodic advertisement corresponding to the device identifier. In this case, the second audio device 200 may directly receive, based on the parameter included in the periodic advertisement, a BLE audio advertisement without performing S407 to re-receive the periodic advertisement. In addition, the second electronic device 400 may simultaneously send the device identifier MATE 20 PRO and the parameter included in the periodic advertisement corresponding to the device identifier to the second audio device 200.

S408: The second audio device 200 receives a BLE audio advertisement based on the periodic advertisement of the device whose device identifier is MATE 20 PRO.

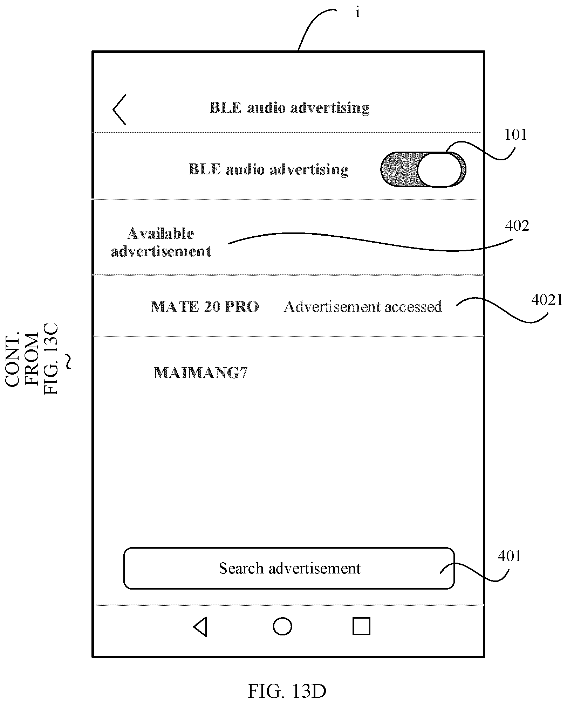

In some embodiments of this application, after the second audio device 200 starts to receive the BLE audio advertisement of the device whose device identifier is MATE 20 PRO, the second audio device 200 notifies the second electronic device 400 through the Bluetooth connection. As shown in FIG. 13D, the BLE audio advertising settings interface i of the second electronic device 400 displays a prompt 4021: Advertisement accessed, to indicate that the second audio device 200 has accessed the BLE audio advertisement of the device corresponding to MATE 20 PRO.

S409: The second audio device 200 plays audio based on the received BLE audio advertisement.

For details of step S409, refer to the specific description of step S119 in the embodiment shown in FIG. 5C.

In this embodiment of this application, FIG. 13C is further a settings interface c of BLE audio advertising of the third audio device 300. If the user wants to receive a periodic advertisement by using the third audio device 300 to receive a BLE audio advertisement, the user may tap the search advertisement control 401 of the third audio device 300.

S410: The third audio device 300 displays a BLE audio advertising settings interface i.

S411: The third audio device 300 detects the tap operation on the search advertisement control 401.

S412: The third audio device 300 receives the periodic advertisement in response to the tap operation of the user on the search advertisement control 401, and displays a device identifier of a device from which the periodic advertisement is received.

As shown in FIG. 13C, the BLE audio advertising settings interface i of the third audio device 300 displays the available advertisement label 402 and the detected device identifiers: MATE 20 PRO and MAIMANG7.

If the user wants to use the third audio device 300 to receive the BLE audio advertisement of the device corresponding to MATE 20 PRO, the user may tap the device identifier MATE 20 PRO.

S413: The third audio device 300 detects the tap operation on the device identifier MATE 20 PRO.

S414: The third audio device 300 receives the periodic advertisement of the device whose device identifier is MATE 20 PRO in response to the tap operation of the user on the device identifier MATE 20 PRO.

S415: The third audio device 300 receives the BLE audio advertisement based on the periodic advertisement of the device whose device identifier is MATE 20 PRO.

After step S415, as shown in FIG. 13D, the BLE audio advertising settings interface c of the third audio device 300 displays the prompt 4021: Advertisement accessed, to indicate that the third audio device 300 has accessed the BLE audio advertisement of the device corresponding to MATE 20 PRO.

S416: The third audio device 300 plays audio based on the received BLE audio advertisement.

When the first audio device 100 is performing BLE audio advertising, the first audio device 100 may display a prompt "Performing BLE audio advertising on yesterday once more" or "Sharing yesterday once more" on a notification bar or a leftmost screen, referring to FIG. 6E(a) and FIG. 6E(b). The foregoing prompt may also be displayed on the pull-up menu 202, the side menu 203, the floating menu 204, the home screen, or the lock screen of the first audio device 100.

For descriptions of the periodic advertisement and that the third audio device 300 receives the BLE audio advertisement based on the periodic advertisement and plays the audio, refer to descriptions of steps S118 and S119 in the embodiment shown in FIG. 5C.

In this embodiment of this application, steps S410 to S416 may be performed as long as the first audio device 100 starts to perform BLE audio advertising and periodic advertising.

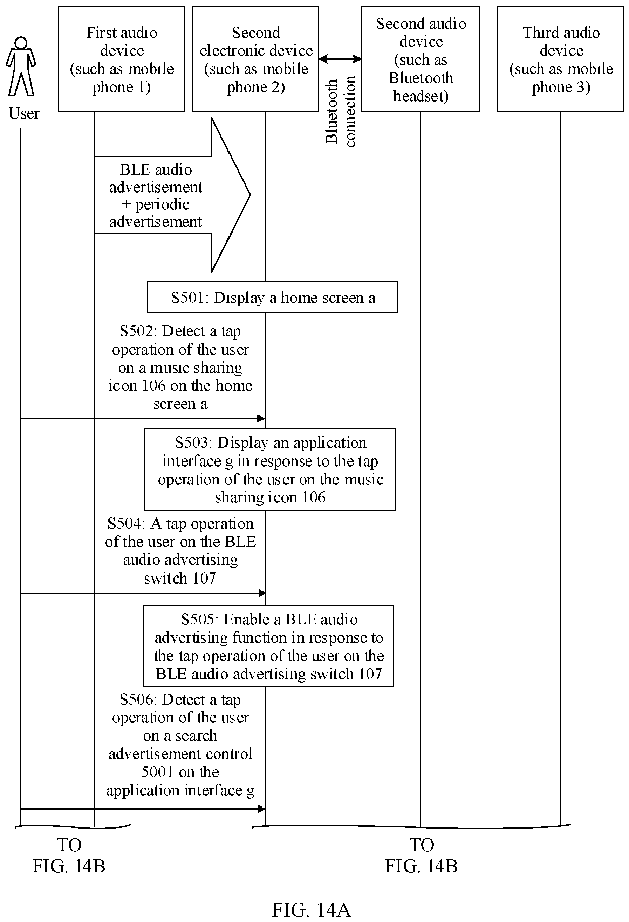

Based on the audio sharing system 40 shown in FIG. 11, a related user interface of the audio sharing method provided in this embodiment of this application may be further set in a separate application (for example, an application corresponding to a music sharing icon 108). FIG. 14A to FIG. 14D are a schematic flowchart of an audio sharing method according to an embodiment of this application. In the audio sharing method, the first audio device 100 performs the methods shown in FIG. 5A, FIG. 5B, FIG. 5C, FIG. 7, FIG. 9A, and FIG. 9B to perform BLE audio advertising and periodic advertising. An application corresponding to the music sharing icon 108 on the user interface shown in FIG. 8A-1 is installed on both the second electronic device 400 and the third audio device 300. In the audio sharing method, the second audio device 200 and the third audio device receive a BLE audio advertisement through steps S501 to S522.

S501: The second electronic device 400 displays a home screen a.

S502: The second electronic device 400 detects a tap operation of the user on the music sharing icon 106 on the home screen a.

S503: The second electronic device 400 displays an application interface g in response to the tap operation of the user on the music sharing icon 106.

S504: The second electronic device 400 detects a tap operation of the user on the BLE audio advertising switch 107 in the application interface g.

S505: The second electronic device 400 enables a BLE audio advertising function in response to the tap operation of the user on the BLE audio advertising switch 107.

For descriptions of steps S501 to S505, refer to descriptions of steps S301 to S305 in the embodiment shown in FIG. 9A. For a user interface of the second electronic device 400 in steps S501 to S505, refer to FIG. 10A-1 and FIG. 10A-2.

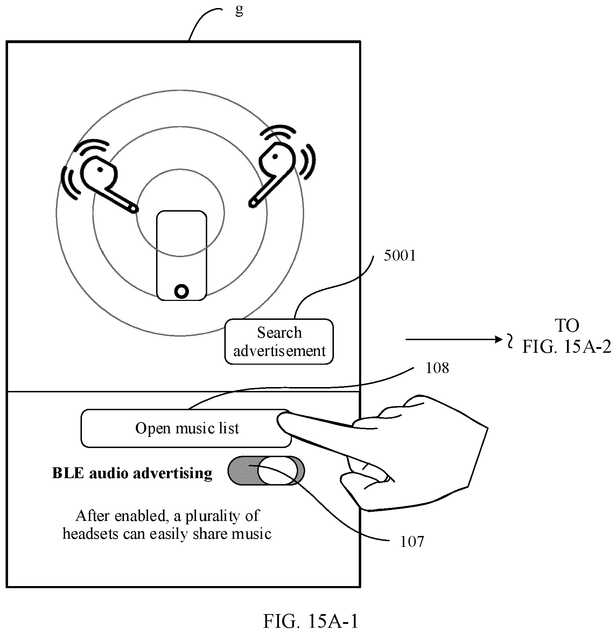

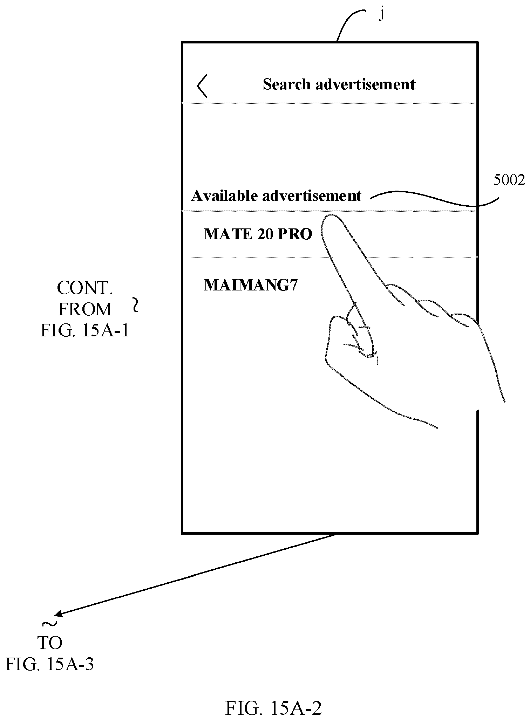

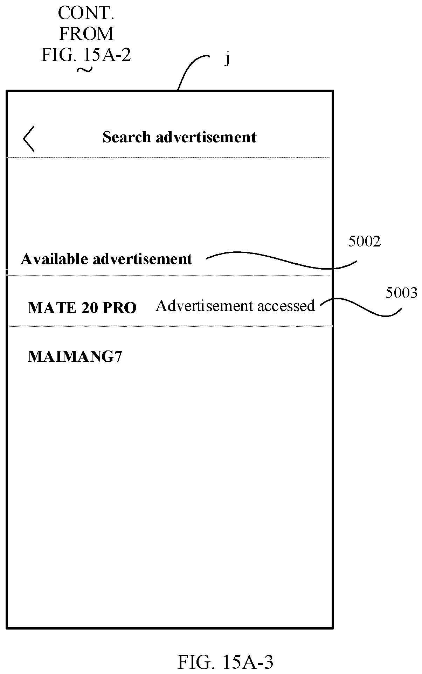

FIG. 15A-1 to FIG. 15A-3 are schematic diagrams of human-machine interaction interfaces according to this embodiment of this application. As shown in FIG. 15A-1, the application interface g further displays a search advertisement control 5001. If the user wants to receive the periodic advertisement by using the second electronic device 400 to receive the BLE audio advertisement, the user may tap the search advertisement control 5001.

S506: The second electronic device 400 detects a tap operation of the user on the search advertisement control 5001 in the application interface g.

In this embodiment of this application, a Bluetooth chip is powered on in response to a tap operation of the user on the BLE audio advertising switch 107. In response to the tap operation of the user on the search advertisement control 5001, a software module related to a BLE audio advertising function on the Bluetooth chip starts to run, and the second electronic device 400 starts to receive a periodic advertisement.

In some other embodiments of this application, in response to the tap or slide operation of the user on the search advertisement control 5001, a Bluetooth chip is powered on, a software module related to the BLE audio advertising function on the Bluetooth chip starts to run, and the second electronic device 400 starts to receive the periodic advertisement.

S507: In response to the tap operation of the user on the search advertisement control 5001, the second electronic device 400 displays a search advertisement interface j, receives a periodic advertisement, and displays a device identifier of a device from which the periodic advertisement is received.

As shown in FIG. 15A-2, the search advertisement interface j of the second electronic device 400 displays an available advertisement label 5002 and detected device identifiers: MATE 20 PRO and MAIMANG7. In step S507, the second electronic device 400 may periodically receive the periodic advertisement, and update and display a corresponding device identifier.

If the user wants to receive, by using the second audio device 200 connected to the second electronic device 400 through Bluetooth, the BLE audio advertisement of the first audio device 100, and the user learns, from the first audio device 100, that the device identifier is MATE 20 PRO, the user may tap the device identifier MATE 20 PRO in the search advertisement interface j displayed by the second electronic device 400.

S508: The second electronic device 400 detects the tap operation on the device identifier MATE 20 PRO.

In some implementations of this application, there is no need to set the search advertisement control 5001 in an interface of a music sharing application. In response to an operation of the user to turn on the BLE audio advertising switch 107, the second electronic device 400 displays the search advertisement interface j, receives the periodic advertisement, and displays the device identifier of the device from which the periodic advertisement is received.

S509: The second electronic device 400 sends, in response to the tap operation of the user on the device identifier MATE 20 PRO, the device identifier MATE 20 PRO to the second audio device 200 through the Bluetooth connection.

S510: The second audio device 200 receives a periodic advertisement of the device whose device identifier is MATE 20 PRO, receives a BLE audio advertisement based on the periodic advertisement, and converts the BLE advertisement into audio for playing.

In some other embodiments of this application, in response to the tap operation of the user on the device identifier MATE 20 PRO, the second electronic device 400 may further send, to the second audio device 200, the device identifier MATE 20 PRO and a parameter included in the periodic advertisement corresponding to the device identifier. In this case, the second audio device 200 may directly receive, based on the parameter included in the periodic advertisement, the BLE audio advertisement without performing the step of receiving the periodic advertisement in S510.

Specifically, the second audio device 200 receives the BLE audio advertisement based on the periodic advertisement of the device whose device identifier is MATE 20 PRO. The second audio device 200 plays audio based on the received BLE audio advertisement.

In some embodiments of this application, after the second audio device 200 starts to receive the BLE audio advertisement of the device whose device identifier is MATE 20 PRO, the second audio device 200 notifies the second electronic device 400 through the Bluetooth connection. As shown in FIG. 15A-3, the search advertisement interface j of the second electronic device 400 displays a prompt 5003: Advertisement accessed, to indicate that the second audio device 200 has accessed the BLE audio advertisement of the device corresponding to MATE 20 PRO.

In step S510, if the user finds that the audio played by the second audio device 200 is not the audio that the user wants to play, the user may re-perform an operation on the second electronic device 400 to re-receive a BLE audio advertisement. For example, the audio that the user wants to play is audio from a device whose device identifier is MAIMANG7. In this case, the user may tap the device identifier MAIMANG7 in the search advertisement interface j of the second electronic device 400.

S511: The second electronic device 400 detects the tap operation on the device identifier MAIMANG7.

S512: The second electronic device 400 sends, in response to the tap operation of the user on the device identifier MAIMANG7, the device identifier MAIMANG7 to the second audio device 200 through the Bluetooth connection.

When the second audio device 200 is playing audio based on the BLE audio advertisement of the device whose device identifier is MATE 20 PRO, if the device identifier MAIMANG7 from the second electronic device 400 is received through the Bluetooth connection, the second audio device 200 stops playing the audio, and step S513 is performed.

S513: The second audio device 200 receives a periodic advertisement of the device whose device identifier is MAIMANG7, receives a BLE audio advertisement based on the periodic advertisement, and converts the BLE advertisement into audio for playing.

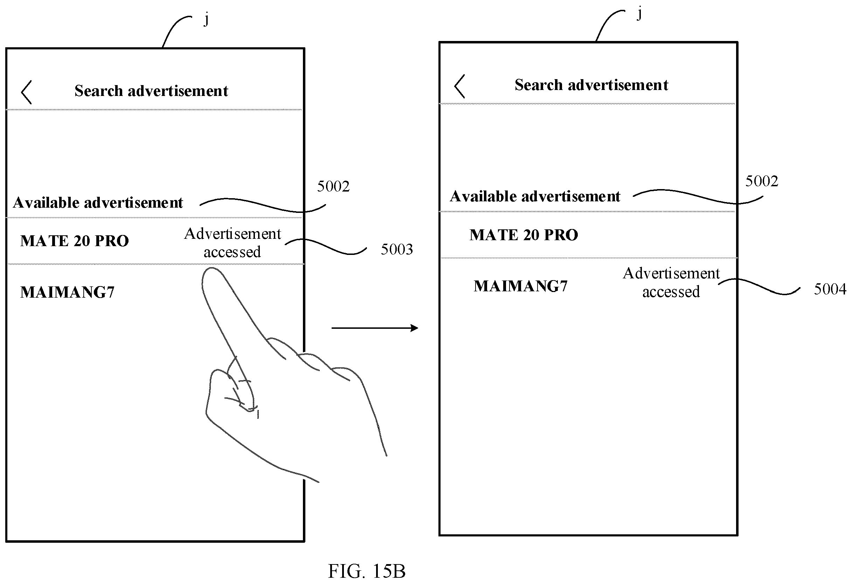

FIG. 15B is a schematic diagram of a human-machine interaction interface according to this embodiment of this application. As shown in FIG. 15B, after the second audio device 200 starts to receive the BLE audio advertisement of the device whose device identifier is MAIMANG7, the second audio device 200 notifies the second electronic device 400 through the Bluetooth connection. As shown in FIG. 15B, the search advertisement interface j of the second electronic device 400 displays a prompt 5004: Advertisement accessed, to indicate that the second audio device 200 has accessed the BLE audio advertisement of the device corresponding to MAIMANG7. The prompt 5003 in the search advertisement interface j of the second electronic device 400 is not displayed.

In this embodiment of this application, FIG. 15A-1 to FIG. 15A-3 and FIG. 15B are further user interfaces of the third audio device 300. If the user wants to receive the periodic advertisement by using the third audio device 300 to receive the BLE audio advertisement, the user may tap the music sharing icon 106 on the home screen a of the third audio device 300, to enter the application interface g.

S514: The third audio device 300 displays the application interface g.

S515: The third audio device 300 detects a tap operation of the user on the BLE audio advertising switch 107 in the application interface g.

S516: The third audio device 300 enables the BLE audio advertising function in response to the tap operation of the user on the BLE audio advertising switch 107.

S517: The third audio device 300 detects a tap operation of the user on the search advertisement control 5001 in the application interface g.

S518: In response to the tap operation of the user on the search advertisement control 5001, the third audio device 300 displays a search advertisement interface j, receives the periodic advertisement, and displays a device identifier of a device from which the periodic advertisement is received.

As shown in FIG. 15A-2, the search advertisement interface j of the third audio device 300 displays the available advertisement label 5002 and the detected device identifiers: MATE 20 PRO and MAIMANG7.

If the user wants to receive the BLE audio advertisement of the first audio device 100 by using the third audio device 300, and the user learns, from the first audio device 100, that the device identifier is MATE 20 PRO, the user may tap the device identifier MATE 20 PRO in the search advertisement interface j displayed by the third audio device 300.

S519: The third audio device 300 detects the tap operation on the device identifier MATE 20 PRO.

S520: In response to the tap operation of the user on the device identifier MATE 20 PRO, the third audio device 300 receives a periodic advertisement of the device whose device identifier is MATE 20 PRO, receives a BLE audio advertisement based on the periodic advertisement, and converts the BLE advertisement into audio for playing.

In some other embodiments of this application, in response to the tap operation of the user on the device identifier MATE 20 PRO, the third audio device 300 may further directly receive, based on the periodic advertisement corresponding to the device identifier MATE 20 PRO received in S518, the BLE audio advertisement without performing S520 to re-receive the periodic advertisement.

Specifically, the third audio device 300 receives the BLE audio advertisement based on the periodic advertisement of the device whose device identifier is MATE 20 PRO. The third audio device 300 plays audio based on the received BLE audio advertisement.

For descriptions of the periodic advertisement and that the third audio device 300 receives the BLE audio advertisement based on the periodic advertisement and plays the audio, refer to descriptions of steps S118 and S119 in the embodiment shown in FIG. 5C.

After step S520, as shown in FIG. 15A-3, the search advertisement interface j of the third audio device 300 displays the prompt 5003: Advertisement accessed, to indicate that the third audio device 300 has accessed the BLE audio advertisement of the device corresponding to MATE 20 PRO.

In step S520, if the user finds that the audio played by the third audio device 300 is not the audio that the user wants to play, the user may re-perform an operation on the third audio device 300 to re-receive a BLE audio advertisement. For example, the audio that the user wants to play is audio from a device whose device identifier is MAIMANG7. In this case, the user may tap the device identifier MAIMANG7 in the search advertisement interface j of the third audio device 300.

S521: The third audio device 300 detects the tap operation on the device identifier MAIMANG7.

When the third audio device 300 is playing audio based on the BLE audio advertisement of the device whose device identifier is MATE 20 PRO, if the tap operation on the device identifier MAIMANG7 in the search advertisement interface j is detected, the third audio device 300 stops playing the audio, and step S522 is performed.

S522: In response to the tap operation of the user on the device identifier MAIMANG7, the third audio device 300 receives a periodic advertisement of the device whose device identifier is MAIMANG7, receives a BLE audio advertisement based on the periodic advertisement, and converts the BLE advertisement into audio for playing.

As shown in FIG. 15B, after the third audio device 300 starts to receive the BLE audio advertisement of the device whose device identifier is MAIMANG7, the search advertisement interface j of the third audio device 300 displays a prompt 5004: Advertisement accessed, to indicate that the third audio device 300 has accessed the BLE audio advertisement of the device corresponding to MAIMANG7. The prompt 5003 in the search advertisement interface j of the third audio device 300 is not displayed.

In this embodiment of this application, steps S513 to S522 may be performed as long as the first audio device 100 starts to perform BLE audio advertising and periodic advertising.

In the audio sharing method shown in FIG. 14A to FIG. 14D, in the interface of the music sharing application, the user may play audio, share audio through BLE advertising, stop playing the audio, stop sharing the audio through the BLE advertisement, and switch a shared audio file, so that audio sharing and other operations can be completed without switching the application, thereby providing convenience for the user.

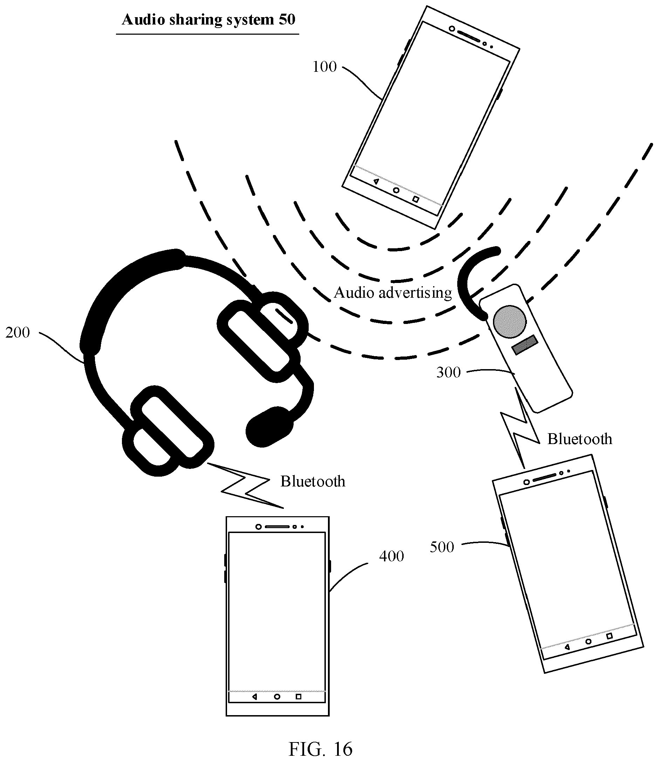

FIG. 16 is a schematic structural diagram of still another audio sharing system 50 according to an embodiment of this application. As shown in FIG. 16, in the audio sharing system 50, the first audio device 100 is an audio source and is a mobile phone 1. The second audio device 200 and the third audio device 300 are audio sinks. The second audio device 200 is a Bluetooth headset 1, and the third audio device 300 is a Bluetooth headset 2.

The second audio device 200 establishes a wireless connection to the second electronic device 400, and the third audio device 300 establishes a wireless connection to a second electronic device 500. The wireless connection is, for example, a Bluetooth connection. The second electronic device 400 and the third electronic device 500 are a mobile phone 2 and a mobile phone 3. For schematic structural diagrams of the second electronic device 400 and the third electronic device 500, refer to the schematic structural diagram of the electronic device shown in FIG. 2. The second electronic device 400 provides an interaction interface for the second audio device 200 to access a BLE audio advertisement. The third electronic device 500 provides an interaction interface for the third audio device 300 to access a BLE audio advertisement.

In the audio sharing system 50, neither the second audio device 200 nor the second electronic device 400 needs to establish an existing Bluetooth connection or an existing Wi-Fi connection to the first audio device 100, and neither the third electronic device 500 nor the third audio device 300 needs to establish an existing Bluetooth connection or an existing Wi-Fi connection to the first audio device 100.

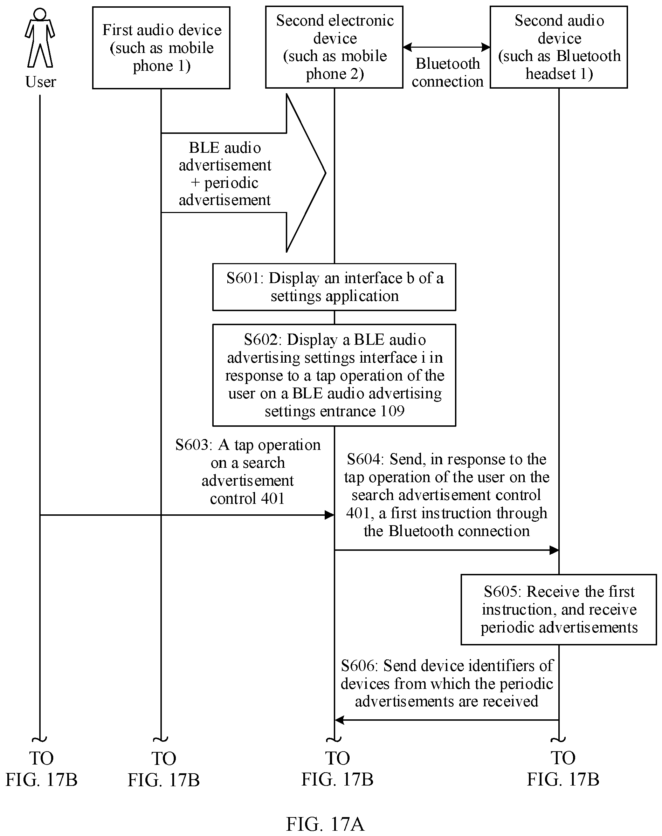

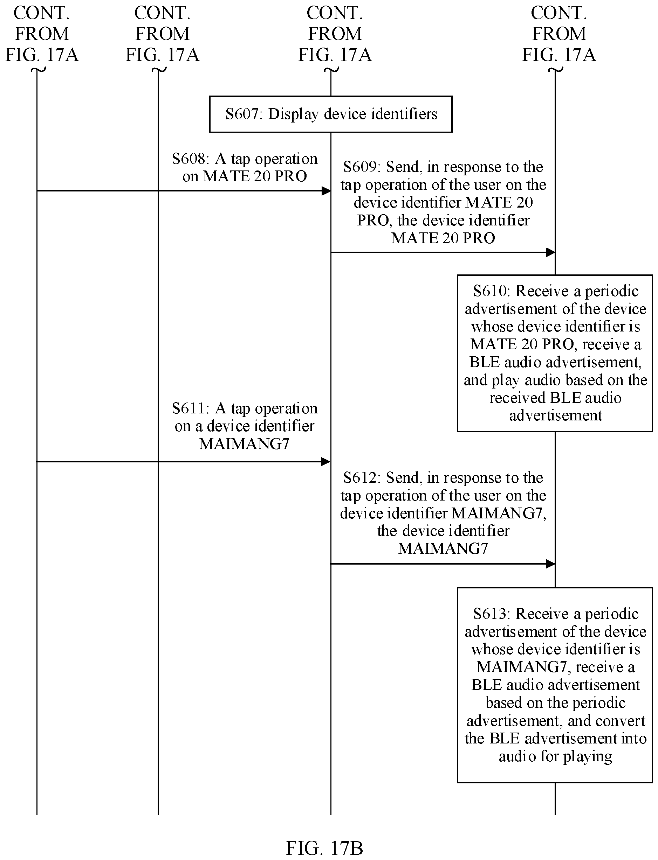

Based on the audio sharing system 50 shown in FIG. 16, refer to FIG. 17A and FIG. 17B. FIG. 17A and FIG. 17B are a schematic flowchart of an audio sharing method according to this embodiment of this application. In the audio sharing method, the first audio device 100 performs the methods shown in FIG. 5A, FIG. 5B, FIG. 5C, FIG. 7, FIG. 9A, and FIG. 9B to perform BLE audio advertising and periodic advertising.

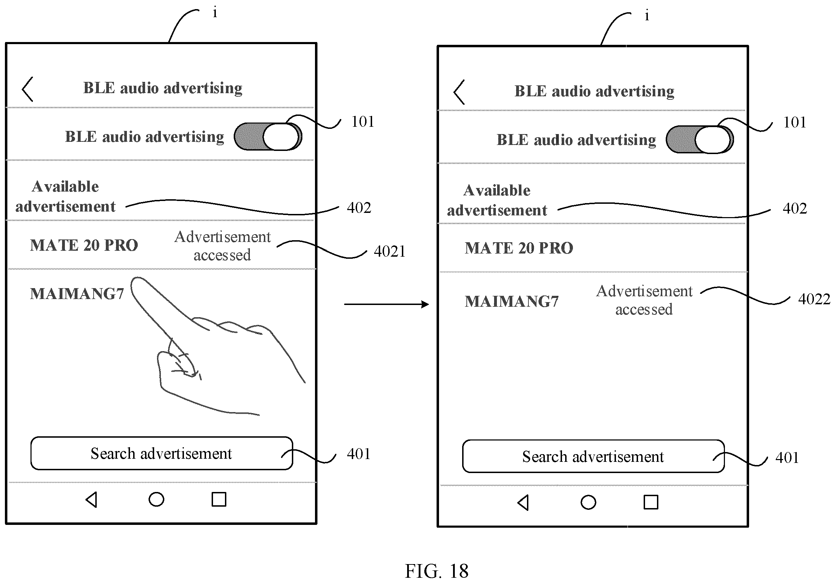

In the audio sharing method, a method for receiving the BLE audio advertisement by the third audio device 300 and the third electronic device 500 is the same as a method for receiving the BLE audio advertisement by the second audio device 200 and the second electronic device 400. Refer to steps S601 to S613. A related user interface of the audio sharing method is disposed in an interface b of a settings application. In the audio sharing method shown in FIG. 17A and FIG. 17B, for a user interface of the second electronic device 400, refer to FIG. 13A to FIG. 13D and FIG. 18. FIG. 18 is a schematic diagram of a human-machine interaction interface according to this embodiment of this application.

The audio sharing method includes steps S601 to S613.

S601: The second electronic device 400 displays the interface b of the settings application.

S602: The second electronic device 400 displays a BLE audio advertising settings interface i in response to a tap operation of a user on the BLE audio advertising settings entrance 109.

S603: The second electronic device 400 detects a tap operation on the search advertisement control 401.

For descriptions of steps S601 to S603, refer to steps S401 to S403 in the embodiment described in FIG. 11 and the user interface described in FIG. 13A to FIG. 13B.

S604: The second electronic device 400 sends, in response to the tap operation of the user on the search advertisement control 401, a first instruction to the second audio device 200 through the Bluetooth connection, where the first instruction is used to instruct the second audio device 200 to receive the periodic advertisement.

In some implementations of this application, there is no need to set the search advertisement control 401 in the interface of the settings application. The second electronic device 400 sends, in response to an operation of the user to turn on the BLE audio advertising switch 101, the first instruction to the second audio device 200 through the Bluetooth connection, where the first instruction is used to instruct the second audio device 200 to receive the periodic advertisement.

S605: The second audio device 200 receives the first instruction, and receives the periodic advertisement.

S606: The second audio device 200 sends a device identifier of a device from which the periodic advertisement is received to the second electronic device 400 through the Bluetooth connection.

S607: The second electronic device 400 displays the device identifier.

As shown in FIG. 13C, the BLE audio advertising settings interface i of the second electronic device 400 displays an available advertisement label 402 and detected device identifiers: MATE 20 PRO and MAIMANG7. These device identifiers are device identifiers of devices from which the second audio device 200 receives the periodic advertisement.

S608: The second electronic device 400 detects a tap operation of the user on MATE 20 PRO.

S609: The second electronic device 400 sends, in response to the tap operation of the user on the device identifier MATE 20 PRO, the device identifier MATE 20 PRO to the second audio device 200 through the Bluetooth connection.

S610: The second audio device 200 receives a periodic advertisement of the device whose device identifier is MATE 20 PRO, receives a BLE audio advertisement, and plays audio based on the received BLE audio advertisement.

For steps S608 to S610, refer to descriptions of steps S405 to S409 in the embodiment described in FIG. 11.

In some embodiments of this application, after the second audio device 200 starts to receive the BLE audio advertisement of the device whose device identifier is MATE 20 PRO, the second audio device 200 notifies the second electronic device 400 through the Bluetooth connection. As shown in FIG. 13D, the BLE audio advertising settings interface i of the second electronic device 400 displays a prompt 4021: Advertisement accessed, to indicate that the second audio device 200 has accessed the BLE audio advertisement of the device corresponding to MATE 20 PRO.

In step S610, if the user finds that the audio played by the second audio device 200 is not the audio that the user wants to play, the user may re-perform an operation on the second electronic device 400 to re-receive a BLE audio advertisement. For example, the audio that the user wants to play is audio from a device whose device identifier is MAIMANG7. In this case, the user may tap the device identifier MAIMANG7 in the BLE audio advertising settings interface i of the second electronic device 400, as shown in FIG. 18.

S611: The second electronic device 400 detects the tap operation on the device identifier MAIMANG7.

S612: The second electronic device 400 sends, in response to the tap operation of the user on the device identifier MAIMANG7, the device identifier MAIMANG7 to the second audio device 200 through the Bluetooth connection.

When the second audio device 200 is playing audio based on the BLE audio advertisement of the device whose device identifier is MATE 20 PRO, if the device identifier MAIMANG7 from the second electronic device 400 is received through the Bluetooth connection, the second audio device 200 stops playing the audio, and step S613 is performed.

S613: The second audio device 200 receives a periodic advertisement of the device whose device identifier is MAIMANG7, receives a BLE audio advertisement based on the periodic advertisement, and converts the BLE advertisement into audio for playing.

As shown in FIG. 18, after the second audio device 200 starts to receive the BLE audio advertisement of the device whose device identifier is MAIMANG7, the second audio device 200 notifies the second electronic device 400 through the Bluetooth connection. As shown in FIG. 18, the BLE audio advertising settings interface i of the second electronic device 400 displays a prompt 4022: Advertisement accessed, to indicate that the second audio device 200 has accessed the BLE audio advertisement of the device corresponding to MAIMANG7. The prompt 4021 in the BLE audio advertising settings interface i of the second electronic device 400 is not displayed.

In this embodiment of this application, FIG. 13A to FIG. 13D and FIG. 18 are further user interfaces on the third electronic device 500. For the method for receiving the BLE audio advertisement by the third audio device 300, refer to the method for receiving the BLE audio advertisement by the second audio device 200 in steps S601 to S613.

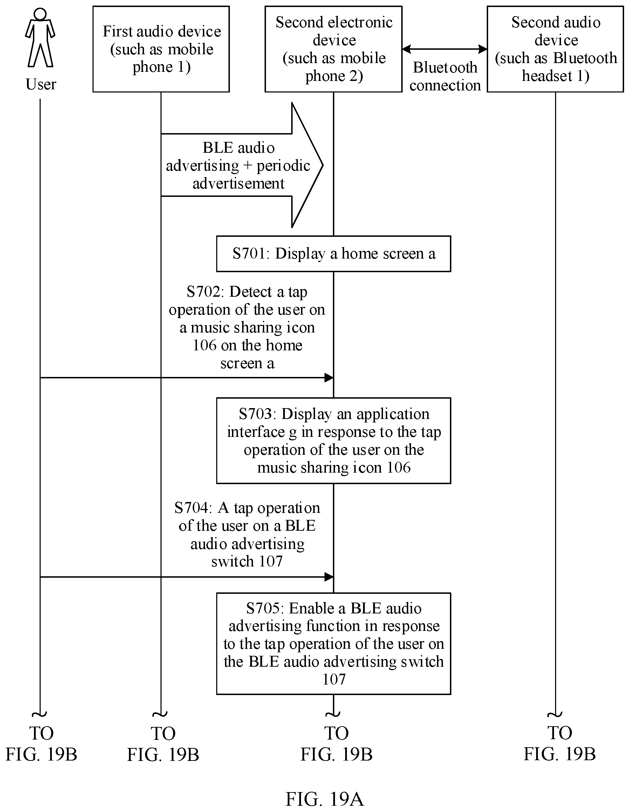

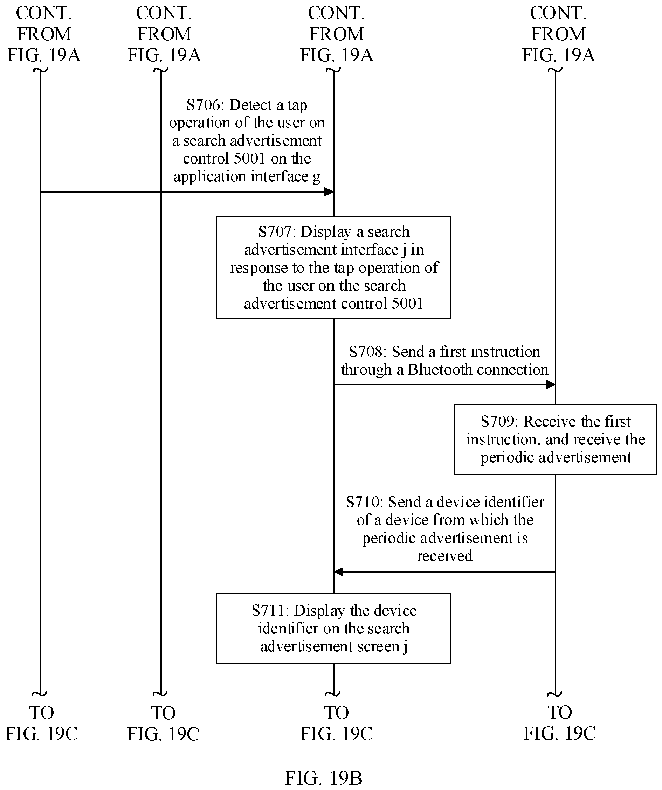

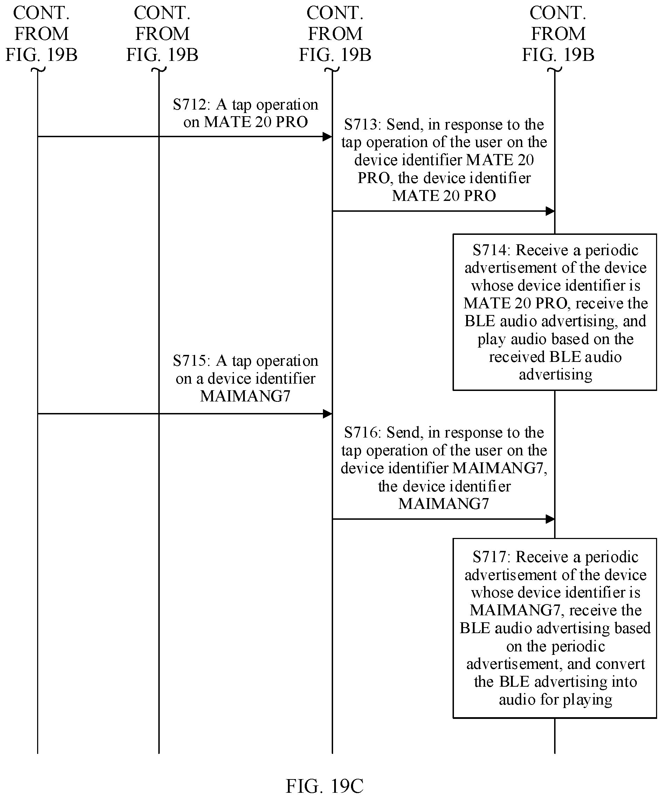

Based on the audio sharing system 50 shown in FIG. 16, a related user interface of the audio sharing method provided in this embodiment of this application may be further set in a separate application (for example, an application corresponding to the music sharing icon 108). FIG. 19A to FIG. 19C are a schematic flowchart of an audio sharing method according to an embodiment of this application. In the audio sharing method, the first audio device 100 performs the methods shown in FIG. 5A, FIG. 5B, FIG. 5C, FIG. 7, FIG. 9A, and FIG. 9B to perform BLE audio advertising and periodic advertising. An application corresponding to the music sharing icon 108 on the user interface shown in FIG. 8A-1 is installed on both the second electronic device 400 and the third electronic device 500. In the audio sharing method, the second audio device 200 receives the BLE audio advertisement and plays audio through steps S701 to S717. For a method for receiving the BLE audio advertisement by the third audio device 300, refer to steps S701 to S717. In the audio sharing method shown in FIG. 19A to FIG. 19C, for a user interface of the second electronic device 400, refer to FIG. 15A-1 to FIG. 15A-3 and FIG. 15B.

S701: The second electronic device 400 displays a home screen a.

S702: The second electronic device 400 detects a tap operation of the user on the music sharing icon 106 on the home screen a.

S703: The second electronic device 400 displays an application interface g in response to the tap operation of the user on the music sharing icon 106.

S704: The second electronic device 400 detects a tap operation of the user on the BLE audio advertising switch 107 in the application interface g.

S705: The second electronic device 400 enables a BLE audio advertising function in response to the tap operation of the user on the BLE audio advertising switch 107.

S706: The second electronic device 400 detects a tap operation of the user on the search advertisement control 5001 in the application interface g.

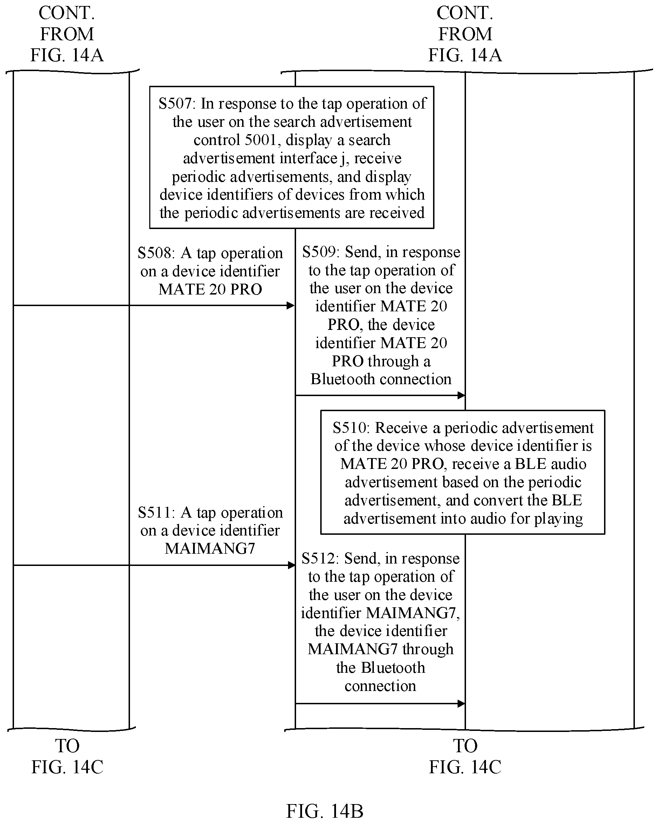

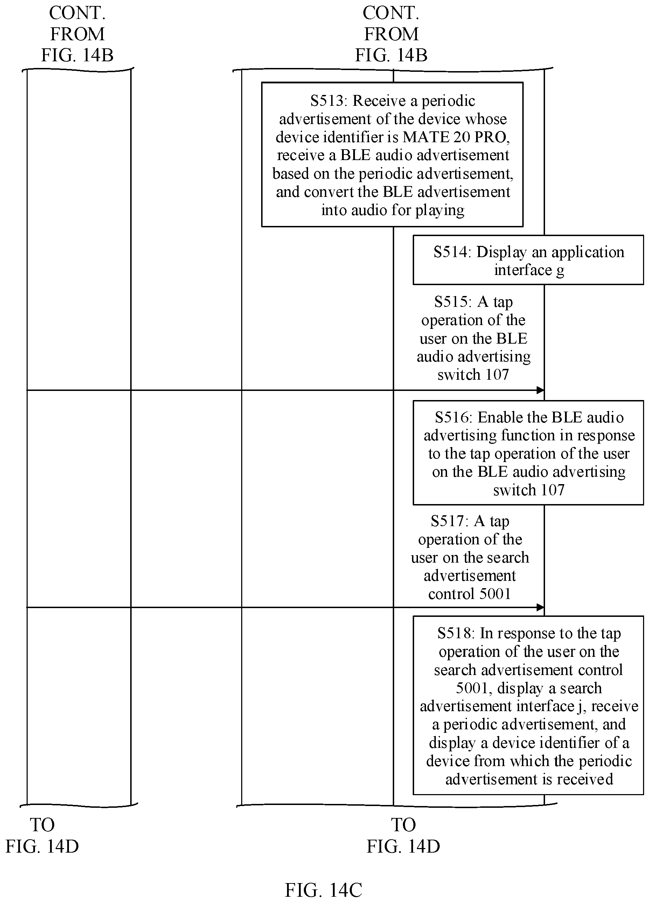

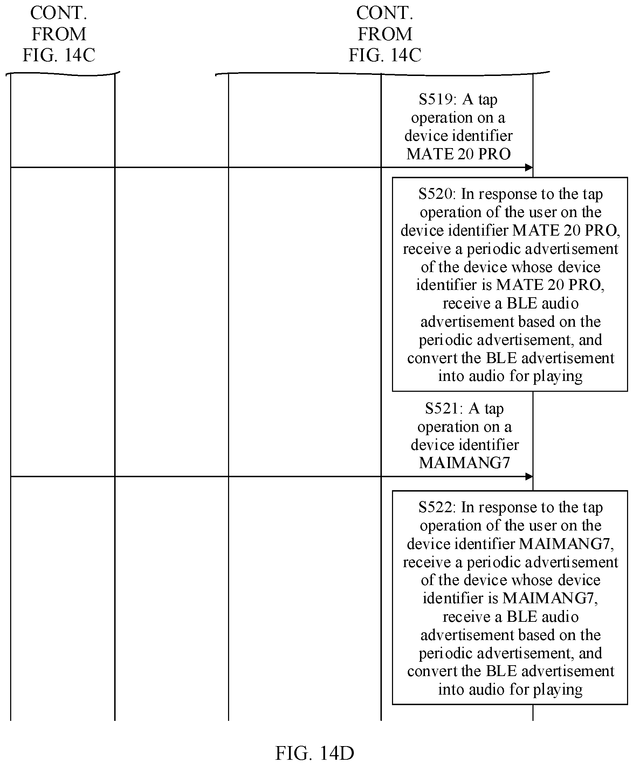

For steps S701 to S706, refer to the descriptions of steps S301 to S305 in the embodiment shown in FIG. 9A and step S506 in the embodiment shown in FIG.14. For a user interface of the second electronic device 400 in steps S701 to S705, refer to FIG. 10A-1 and FIG. 10A-2. For a user interface of the second electronic device 400 in step S706, refer to FIG. 15A-1.

S707: The second electronic device 400 displays a search advertisement interface j in response to the tap operation of the user on the search advertisement control 5001.

In some implementations of this application, there is no need to set the search advertisement control 5001 in an interface of a music sharing application. The second electronic device 400 displays the search advertisement interface j in response to an operation of the user to turn on the BLE audio advertising switch 107, and step S708 is performed.

S708: The second electronic device 400 sends a first instruction to the second audio device 200 through a Bluetooth connection, where the first instruction is used to instruct the second audio device 200 to receive a periodic advertisement.

S709: The second audio device 200 receives the first instruction, and receives the periodic advertisement.

S710: The second audio device 200 sends a device identifier of a device from which the periodic advertisement is received to the second electronic device 400 through the Bluetooth connection.

For steps S709 and S710, refer to descriptions of steps S605 and S606 in the embodiment described in FIG. 17A.

S711: The second electronic device 400 displays the device identifier in the search advertisement interface j.

As shown in FIG. 15A-2, the search advertisement interface j of the second electronic device 400 displays the available advertisement label 5002 and detected device identifiers: MATE 20 PRO and MAIMANG7. These device identifiers are device identifiers of devices from which the periodic advertisement received by the second audio device 200 is received.

S712: The second electronic device 400 detects a tap operation of the user on MATE 20 PRO.

S713: The second electronic device 400 sends, in response to the tap operation of the user on the device identifier MATE 20 PRO, the device identifier MATE 20 PRO to the second audio device 200 through the Bluetooth connection.

S714: The second audio device 200 receives a periodic advertisement of the device whose device identifier is MATE 20 PRO, receives a BLE audio advertisement, and plays audio based on the received BLE audio advertisement.

For steps S712 to S714, refer to descriptions of steps S405 to S409 in the embodiment described in FIG. 11.

S715: The second electronic device 400 detects a tap operation on the device identifier MAIMANG7.

S716: The second electronic device 400 sends, in response to the tap operation of the user on the device identifier MAIMANG7, the device identifier MAIMANG7 to the second audio device 200 through the Bluetooth connection.

S717: The second audio device 200 receives a periodic advertisement of the device whose device identifier is MAIMANG7, receives a BLE audio advertisement based on the periodic advertisement, and converts the BLE advertisement into audio for playing.

For steps S716 and S717, refer to descriptions of steps S512 and S513 in the embodiment described in FIG. 14B and FIG. 14C.

Optionally, in this embodiment of this application, in an instant messaging application (for example, WeChat), when an instant messaging message (for example, a WeChat message) is a text message or a text file (for example, a word file), after the first audio device 100 enables a BLE audio advertising function, the first audio device 100 may also process and package, in response to a user operation, the text message or the text file in the instant messaging application and send the packaged text message or the text file in a BLE advertisement. The second audio device 200 and the third audio device 300 may receive the BLE advertisement. The first audio device 100 may include a text to speech (text to speech, TTS) synthesis module that converts the text message or the text file into audio, and then performs sharing according to the audio sharing method described in any one of FIG. 5A, FIG. 5B, FIG. 5C, FIG. 7, FIG. 9A, and FIG. 9B. In some other embodiments of this application, the second audio device 200 and the third audio device 300 include the TTS synthesis module. The second audio device 200 and the third audio device 300 receive the text message or the text file carried in the BLE advertisement, and then convert, according to the audio sharing method described in any one of FIG. 5A, FIG. 5B, FIG. 5C, FIG. 12A, FIG. 12B, FIG. 12C, FIG. 14A, FIG. 14B, FIG. 14C, FIG. 14D, FIG. 17A, FIG. 17B, FIG. 19A, FIG. 19B, and FIG. 19C, the text message or the text file into voice data by using the TTS synthesis module for playing. By using the foregoing method, the text message or the text file may be shared with a plurality of headset devices, and converted into audio for playing.

An embodiment of this application further provides a computer-readable storage medium. The computer-readable storage medium stores instructions. When the instructions are run on a computer or a processor, the computer or the processor is enabled to perform one or more steps in any one of the foregoing methods.

An embodiment of this application further provides a computer program product including instructions. When the computer program product is run on a computer or a processor, the computer or the processor is enabled to perform one or more steps in any one of the foregoing methods.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium, or may be transmitted through the computer-readable storage medium. The computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

A person of ordinary skill in the art may understand that all or some of the procedures of the methods in the embodiments may be implemented by a computer program instructing related hardware. The program may be stored in a computer-readable storage medium. When the program is executed, the procedures of the methods in the embodiments may be performed. The foregoing storage medium includes any medium that can store program code, such as a ROM, a random access memory RAM, a magnetic disk, or an optical disc.

The foregoing descriptions are merely specific implementations of the embodiments of this application, but are not intended to limit the protection scope of the embodiments of this application. Any variation or replacement within the technical scope disclosed in the embodiments of this application shall fall within the protection scope of the embodiments of this application. Therefore, the protection scope of the embodiments of this application shall be subject to the protection scope of the claims.

## Claims

1. A wireless short-range audio sharing method, performed by a first audio device, wherein the method comprises:
detecting a first operation of a user; and enabling a BLE advertising function in response to the first operation;
detecting a second operation of the user;
selecting a first audio file in response to the second operation; and
converting the first audio file into at least one audio data packet, performing BLE advertising on the at least one audio data packet, and performing periodic advertising corresponding to the BLE advertising.

2. The method according to claim 1, wherein the first audio device is a mobile phone; and
before the detecting a first operation of a user, the method further comprises: displaying an interface of a settings application, wherein the interface of the settings application comprises a BLE advertising switch, and the first operation is an operation of turning on the BLE advertising switch; and
after the enabling a BLE advertising function, the method further comprises: receiving a third operation of the user, and displaying an interface of a media file playback application, wherein the interface of the media file playback application comprises a player control and an identifier of the first audio file, and the second operation is an operation of selecting the player control.

3. The method according to claim 1, wherein the first audio device is a mobile phone; and
before the detecting a first operation of a user, the method further comprises: receiving a pull-down operation or a pull-up operation, and displaying an interface of a status bar, wherein the interface of the status bar comprises a BLE advertising switch, and the first operation is an operation of turning on the BLE advertising switch; and
after the enabling a BLE advertising function, the method further comprises: receiving a third operation of the user, and displaying an interface of a media file playback application, wherein the interface of the media file playback application comprises a player control and an identifier of the first audio file, and the second operation is an operation of selecting the player control.

4. The method according to any one of claims 1 to 3, wherein after the detecting a second operation of the user, the method further comprises:
playing, in response to the second operation, the first audio file by using a microphone of the first audio device or a headset connected to the first audio device.

5. The method according to claim 1, wherein the first audio device is a mobile phone; and
before the detecting a first operation of a user, the method further comprises: displaying an interface of an audio sharing application, wherein the interface of the audio sharing application comprises a BLE advertising switch and an audio file list control, and the first operation is an operation of turning on the BLE advertising switch; and
after the enabling a BLE advertising function, the method further comprises: receiving an operation of selecting the audio file list control, and displaying an identifier of at least one audio file, wherein the at least one audio file comprises the first audio file, and the second operation is selecting an identifier of the first audio file.

6. The method according to any one of claims 1 to 5, wherein the converting the first audio file into at least one audio data packet comprises:
converting the first audio file from the beginning into the at least one audio data packet.

7. The method according to claim 2 or 3, wherein the converting the first audio file into at least one audio data packet comprises:
converting a part that is of the first audio file and that starts from a position at which playing of the first audio file is stopped last time into the at least one audio data packet.

8. A wireless short-range audio sharing method, performed by a first audio device, wherein the method comprises:
displaying an interface of a media file playback application, wherein the interface of the media file playback application comprises a player control and an identifier of a first audio file;
playing the first audio file in response to an operation of playing the first audio file; and
when the first audio file is played to a first position, detecting a first operation of a user, enabling a BLE advertising function in response to the first operation, converting a part that is of the first audio file and that starts from a second position into at least one audio data packet, performing BLE advertising on the at least one audio data packet, and performing periodic advertising corresponding to the BLE advertising.

9. The method according to claim 8, wherein the first audio device is a mobile phone; and
the playing the first audio file comprises: playing the first audio file by using a microphone of the first audio device or a headset connected to the first audio device; and
the method further comprises:
continuing playing, in response to the first operation, the first audio file by using the microphone of the first audio device or the headset connected to the first audio device; or
stopping playing, in response to the first operation, the first audio file by using the microphone of the first audio device or the headset connected to the first audio device.

10. The method according to claim 9, wherein the interface of the media file playback application comprises a first button; and
the method further comprises: displaying at least one option in response to an operation of selecting the first button, wherein the at least one option comprises a BLE advertising switch, the first operation is an operation of turning on the BLE advertising switch, and the second position is the same as the first position.

11. The method according to claim 9, wherein the interface of the media file playback application comprises a second button, the second operation is an operation of selecting the second button, and the second position is a start position of the first audio file.

12. The method according to claim 10 or 11, wherein after sending the at least one audio data packet in a BLE advertising manner, the method further comprises:
when a data packet sent in the BLE advertising manner is corresponding to a third position of the first audio file, detecting an operation of disabling the BLE advertising function or an operation of stopping playing the first audio file, and stopping sending the at least one audio packet in the BLE advertising manner.

13. The method according to claim 12, wherein the method further comprises:
stopping playing, in response to the first operation, the first audio file by using the microphone of the first audio device or the headset connected to the first audio device; and
when stopping sending the at least one audio data packet in the BLE advertising manner, playing, starting from the first position or starting from the third position, the first audio file by using the microphone of the first audio device or the headset connected to the first audio device.

14. A wireless short-range audio sharing method, performed by a second audio device, wherein the method comprises:
detecting a first setting operation of a user;
starting to receive a periodic advertisement in response to the first setting operation;
if only one periodic advertisement is received, receiving at least one audio data packet of a BLE advertisement corresponding to the periodic advertisement; or
if at least two periodic advertisements are received, receiving at least one audio data packet of a BLE advertisement corresponding to a first periodic advertisement of the at least two periodic advertisements, wherein the first periodic advertisement is one with optimal quality of the at least two periodic advertisements; and
converting the at least one audio data packet into audio for playing.

15. The method according to claim 14, wherein the optimal quality comprises a maximum quality parameter, the quality parameter is carried in the periodic advertisement, and the quality parameter comprises one or any combination of the following: an RSSI parameter, a QoS parameter, or an SNR.

16. The method according to claim 14 or 15, wherein after the converting the at least one audio data packet into audio for playing, the method further comprises: detecting a third setting operation of the user;
stopping receiving and playing the at least one audio data packet of the BLE advertisement corresponding to the first periodic advertisement in response to the third setting operation, and re-receiving a periodic advertisement; and
if there is only one re-received periodic advertisement, and the re-received periodic advertisement is a second periodic advertisement different from the first periodic advertisement, receiving at least one audio data packet of a BLE advertisement corresponding to the second periodic advertisement, and converting the at least one audio data packet of the BLE advertisement corresponding to the second periodic advertisement into audio for playing.

17. The method according to claim 16, wherein the method further comprises:
if there are at least two re-received periodic advertisements, a third periodic advertisement is one with optimal quality in the at least two re-received periodic advertisements; and
if the third periodic advertisement is different from the first periodic advertisement, receiving at least one audio data packet of a BLE advertisement corresponding to the third periodic advertisement, and converting the at least one audio data packet of the BLE advertisement corresponding to the third periodic advertisement into audio for playing; or
if the third periodic advertisement and the first periodic advertisement are not from a same device, receiving at least one audio data packet of a BLE advertisement corresponding to the third periodic advertisement, and converting the at least one audio data packet of the BLE advertisement corresponding to the third periodic advertisement into audio for playing.

18. The method according to claim 17, wherein the method further comprises:
if the third periodic advertisement is the same as the first periodic advertisement or is from the same device as the first periodic advertisement, detecting whether a time interval between the first setting operation and the third setting operation is less than or equal to a first threshold; and
if the time interval between the first setting operation and the third setting operation is less than or equal to the first threshold, converting at least one audio data packet of a BLE advertisement corresponding to a fourth periodic advertisement into audio for playing, wherein the fourth periodic advertisement is an advertisement whose quality is second only to that of the third periodic advertisement in the at least two re-received periodic advertisements; or
if the time interval between the first setting operation and the third setting operation is greater than the first threshold, receiving the at least one audio data packet of the BLE advertisement corresponding to the third periodic advertisement, and converting the at least one audio data packet of the BLE advertisement corresponding to the third periodic advertisement into audio for playing.

19. The method according to any one of claims 14 to 18, wherein the second audio device is a wireless Bluetooth headset, and the first setting operation is an operation of tapping an earbud of the wireless Bluetooth headset, or an operation of pressing a button on the wireless Bluetooth headset, or an operation of pressing the earbud of the wireless Bluetooth headset, or an operation of voice input, or an operation of touching the earbud of the wireless Bluetooth headset.

20. A wireless short-range audio sharing method, performed by a second electronic device, wherein the method comprises:
detecting an operation of enabling BLE advertising, and starting to receive a periodic advertisement sent by at least one electronic device;
displaying an identifier of the at least one electronic device;
receiving a second setting operation of a user;
selecting one of the identifier of the at least one electronic device in response to the second setting operation;
receiving and playing at least one audio data packet of a BLE advertisement corresponding to a periodic advertisement sent by the selected electronic device; or
sending a parameter used to receive a first BLE advertisement to a second audio device, wherein the first BLE advertisement is the BLE advertisement corresponding to the periodic advertisement sent by the selected electronic device, so that the second audio device receives the at least one audio data packet of the first BLE advertisement.

21. The method according to claim 20, wherein the sending a parameter used to receive a first BLE advertisement to a second audio device comprises:
sending the identifier of the selected electronic device to the second audio device through a Bluetooth connection, so that the second audio device receives the periodic advertisement sent by the selected electronic device, and receives the at least one audio data packet of the first BLE advertisement; or
sending a parameter comprised in the periodic advertisement sent by the selected electronic device to the second audio device through the Bluetooth connection, so that the second audio device receives the at least one audio data packet of the first BLE advertisement.

22. The method according to claim 20 or 21, wherein the second electronic device is a mobile phone, and before detecting a first setting operation of the user, the method further comprises:
displaying an interface of a settings application, wherein the interface of the settings application comprises a BLE advertising switch, the operation of enabling BLE advertising is an operation of turning on the BLE advertising switch, and the detecting a first setting operation of the user comprises detecting the operation of enabling BLE advertising.

23. The method according to claim 20 or 21, wherein the second electronic device is a mobile phone, and before detecting a first setting operation of the user, the method further comprises:
receiving a pull-down operation or a pull-up operation, and displaying an interface of a status bar, wherein the interface of the status bar comprises a BLE advertising switch; and the operation of enabling BLE advertising is an operation of turning on the BLE advertising switch.

24. The method according to claim 20 or 21, wherein the second electronic device is a mobile phone, and before detecting a first setting operation of the user, the method further comprises: displaying an audio sharing application interface, wherein the audio sharing application interface comprises a BLE advertising switch, and the operation of enabling BLE advertising is the operation of turning on the BLE advertising switch.

25. An electronic device, comprising one or more processors, a memory, a display, and a Bluetooth module, wherein
the memory is configured to store computer program code, the computer program code comprises computer instructions, and when the one or more processors execute the computer instructions, the electronic device is enabled to perform the wireless short-range audio sharing method according to any one of claims 1 to 7.

26. An electronic device, comprising one or more processors, a memory, a display, and a Bluetooth module, wherein
the memory is configured to store computer program code, the computer program code comprises computer instructions, and when the one or more processors execute the computer instructions, the electronic device is enabled to perform the wireless short-range audio sharing method according to any one of claims 8 to 13.

27. An electronic device, comprising one or more processors, a memory, a Bluetooth module, and an electro-acoustic transducer, wherein
the memory is configured to store computer program code, the computer program code comprises computer instructions, and when the one or more processors execute the computer instructions, the electronic device is enabled to perform the wireless short-range audio sharing method according to any one of claims 14 to 19.

28. An electronic device, comprising one or more processors, a memory, a Bluetooth module, and an electro-acoustic transducer, wherein
the memory is configured to store computer program code, the computer program code comprises computer instructions, and when the one or more processors execute the computer instructions, the electronic device is enabled to perform the wireless short-range audio sharing method according to any one of claims 20 to 24.
